# EUROPEAN PATENT SPECIFICATION

(11) **EP 0 670 016 B1**
(45) Date of publication and mention of the grant of the patent: **09.04.1997**
(21) Application number: 92923817.8
(22) Date of filing: 27.11.1992
(51) Int. Cl.: F16H 3/54, B60K 25/00

(54) **A PLANETARY GEAR DRIVEN POWER CONSUMING UNIT**
VORRICHTUNG ZUR ANPASSUNG DER DREHZAHL EINER HILFSMASCHINE AN DIE EINES KFZ-VERBRENNUNGSMOTORS
UNITE DE CONSOMMATION D'ENERGIE ENTRAINEE PAR ENGRENAGE PLANETAIRE

(43) Date of publication of application: 06.09.1995
(73) Proprietor: FICHTEL & SACHS AG, D-97424 Schweinfurt (DE)
(72) Inventor: DEPPERT, Reinhard, D-97469 Gochsheim (DE); LUTZ, Manfred, D-97424 Schweinfurt (DE); KURZ, Walter, D-87471 Durach (DE); BAIER, Wolfgang, D-97502 Obbach (DE)
(74) Representative: Weickmann, Heinrich, Dipl.-Ing.
(86) International application number: EP9202751
(87) International publication number: WO9412810

(56) References cited:
- WO-A-91/05184
- FR-A- 2 414 626
- FR-A- 2 628 810
- FR-A- 2 677 417
- GB-A- 2 121 127
- GB-A- 2 148 421
- GB-A- 2 213 217
- US-A- 2 327 769
- US-A- 5 147 254

## Description

This invention concerns a planetary gear driven power consuming unit, comprising stator means and an input shaft unit with an axis, for driving a driven unit within said stator means, said input shaft unit being rotatably mounted with respect to said stator means about said axis through shaft bearing means and extending axially beyond said shaft bearing means towards a free end of said input shaft unit and further comprising planetary gear means including a sun wheel, a ring wheel, a planetary wheel carrier and at least one planetary wheel on said planetary wheel carrier, and further comprising free wheel means, a gear change brake unit controllable by external control means and a lubricant chamber for receiving a liquid lubricant, an input torque transmission unit of said planetary gear means being in driving connection with said planetary wheel carrier, said ring wheel being connected for common rotation with said input shaft unit, said gear change brake unit being adapted for selectively either preventing a rotation of said sun wheel with respect to said stator means or releasing said sun wheel for rotation about said axis with respect to said stator means, said free wheel means permitting rotation of said input shaft unit with respect to said input torque transmission unit in a predetermined sense of rotation in response to said gear change brake unit preventing said sun wheel from rotation with respect to said stator means, said free wheel means transmitting an input torque from said input torque transmission unit to said input shaft unit in said predetermined sense of rotation in response to said gear change brake unit releasing said sun wheel for rotation about said axis with respect to said stator means, said sun wheel being hollow with a central passage therethrough, with a first axial end portion nearer to said shaft bearing means and with a second axial end portion nearer to said free end, said input torque transmission unit extending through said hollow sun wheel for transmitting an input torque from drive means engagement means located adjacent a second end portion side of said sun wheel to a planetary wheel carrier portion located adjacent a first end portion side of said sun wheel, said second axial end portion of said sun wheel being connected for common rotation about said axis with a sun wheel braking member, said sun wheel braking member carrying a first brake portion of said gear change brake unit,- a second brake portion of said gear change brake unit being operationally fastened against rotation about said axis with respect to said stator means, a ring wheel support member connecting said ring wheel with said input shaft unit for common rotation being located on a side of said planetary wheel carrier portion axially remote from said sun wheel.

A power consuming unit of this typ (preamble of claim 1), namely an electric generator, is known from U.S. patent 2 327 769.

According to this U.S. patent an input shaft member driving the rotor of the power generator extends for a short length beyond the shaft bearing means outwards of a stator housing. A cooling fan is mounted for common rotation onto the input shaft member outside of the shaft bearing means. A gear housing is fastened to an end wall of the stator housing. This gear housing accommodates all components of the planetary gear driving mechanism. This gear housing provides at an end thereof remote from the stator housing secondary bearing means. In these secondary bearing means there is rotatably mounted an input torque transmission shaft which carries outside the gear housing a belt pulley non-rotatably mounted on said input torque transmission shaft. The input torque transmission shaft extends from the secondary bearing means towards the stator means of the electric power generator through a hollow sun wheel of the planetary gear means. All components of the planetary gear means and of the free wheel are mounted on the input torque transmission shaft. The input torque transmission shaft is arranged in axial alignment with the input shaft member of the electric power generator without overlapping in axial direction. The ring wheel of the planetary gear means is coupled with the input shaft of the electric power generator by a bell-shaped coupling part.

The design of this known power generator requires a large space particularly in axial direction for the gear unit. As a result thereof this known power generator is frequently not adapted for use in motor vehicles in which only little space is available for the electric power generator.

It should be noted here that planetary gear driven electric power generators of the above described type are particularly intended for use in motor vehicles because they allow to change the transmission ratio in response to the r.p.m. of the internal combustion engine driving the motor vehicle. In motor vehicles one must expect a large variation of the r.p.m. of the internal combustion engine in response to different phases of operation of the motor vehicle. On the other hand it is most desirable to drive an electric power generator with a substantially constant r.p.m. For this reason the planetary gear driven power generators of the above described type have been developed particularly for motor vehicles. It is therefore a considerable disadvantage of the known type of power generators according to the U.S. patent 2 327 769 that it is frequently not applicable for motor vehicles because of its large space requirements.

From FR-A-2 414 626 it is known to provide on an output shaft of a motor a planetary gear for driving a subassembly. The planetary gear is combined with a free wheel mechanism and with a braking device. The braking device is arranged concentrically about the axis of the output shaft and comprises an annular electromagnetic coil cooperating with an axially movable armature.

From FR-A-2 628 810 an electric power generator 1 is known, in which on an input shaft of the power generator a planetary gear is concentrically arranged. Also in this embodiment the planetary gear is combined with a free wheel mechanism and with a brake unit. The brake unit again comprises an electro-magnetic coil of annular shape and concentric about the axis of the input shaft. The armature is axially movable with respect to the electromagnetic coil. The brake unit is surrounding the planetary gear and a common plane perpendicular to the axis of the input shaft extends both through the brake unit and the planetary gear.

From US-A-5 147 254 it is known to provide a planetary gear on a crank shaft 110 of a vehicle motor for driving a subunit. Again this planetary gear is combined with a free wheel unit and a brake unit. The components of the planetary gear, the brake unit and the free wheel unit are provided within a lubricant chamber concentric with respect to the axis of the crank shaft. This lubricant chamber is rotating in operation. A lubricant ring builds up within this lubricant chamber under centrifugal forces. The lubricant of the lubricant ring is conveyed radially inwards by a baffle pipe extending substantially in radial inwards direction.

From FR-A-2 628 810 it is also known to provide roller bearings between components of a planetary gear in avoiding inner and outer races of the respective roller bearings such that the roller bodies are in direct engagement with respective roller tracks of the components.

It is an object of the present invention to provide a planetary gear driven power consuming unit and more particularly, a planetary gear driven electric power generator for application in motor vehicles which requires less space. Further objects of the present invention will be discussed below.

According to the present invention the input torque transmission unit surrounds the input shaft unit along an axial overlapping path and the input torque transmission unit is rotatably mounted on and radially supported by the input shaft unit within this axial overlapping path.

It has been found that a planetary gear driven power consuming unit can be built with considerable smaller dimensions as compared with a generator as described in the U.S. patent 2 327 769.

The input shaft unit may be based on an input shaft member rotatably mounted by the shaft bearing means in the stator means. This input shaft member can be a usual shaft as used for driving power generators. This input shaft may have at least along a larger part of its axial length a full material cross section. This input shaft member may be prolongated by a prolongation unit which is in axial alignment with the input shaft. This prolongation unit is connected for common rotation with the input shaft by connection means such that the prolongation unit is resistant to a bending torque exerted thereto about a bending axis perpendicular to the axis of the input shaft member. By using such a prolongation unit it is possible to keep the input shaft member short and particularly as short as desired for providing a simple belt pulley on the input shaft. Such one and the same basic power generator can be selectively equipped either with a simple belt pulley or with a planetary drive mechanism. A further advantage of the prolongation unit is that it may be assembled with the other components of the planetary gear unit into a preassembly such that this preassembly can be combined with the basic power consuming unit in a simple and non-expensive final assembling operation.

The prolongation unit may comprise a prolongation sleeve. In such case the connection means can comprise a tensioning member which is inserted into the prolongation sleeve. This tensioning member is brought in screw connection with the input shaft member and can axially press the prolongation sleeve against abutment face means axially fixed with respect to the input shaft member. The input torque transmission unit may in such a construction be rotatably mounted on the prolongation unit as a result of a preassembling step. The ring wheel support member may be fastened for common rotation with the input shaft unit by axially clamping the ring wheel support member between the input shaft member and the prolongation unit.

Alternatively the input shaft unit may again comprise an input shaft member rotatably mounted by the shaft bearing means. In this case the input shaft member may be longer than the normal input shaft of a power consuming unit which is normally provided with a simple belt pulley. With such a prolongated input shaft member which may again be of full material cross section along the larger part of its length input sleeve means may be used surrounding these prolongated input shaft member. These input shaft sleeve means are again fastened on the input shaft member. With such an embodiment there is a long support path for the input shaft sleeve means on the input shaft member such that the input shaft unit as a total is not sensitive to bending forces which may result from the torque transmission from a driving unit such as a motor vehicle engine to the gear unit even if the driving unit is coupled with the gear unit at a location far remote from the shaft bearing means. The input torque transmission unit may again be rotatably mounted on the input shaft sleeve means. Such one can again preassemble the gear parts to a large exent and combine in a final assembly step the preassembled unit with the basic power consuming unit by shifting the input shaft sleeve means onto the prolongated input shaft member and secure the input shaft sleeve means with respect to the input shaft member by usual torque transmitting securing means. For example, the input shaft member may be provided adjacent the free end thereof with a securing member and this securing member can be tightened such as to act onto an adjacent end of the input shaft sleeve means and to press the input shaft sleeve means against abutment face means fixed with respect to the input shaft member. The securing member may be, for example, a securing nut which is screwed onto external thread means of the input shaft member. It is of high advantage if these external thread means extend axially beyond the input shaft sleeve means so that a nut of simple design can be used which remains outside the hollow space of the input shaft sleeve means. To keep the nut outside the hollow space of the input shaft sleeve means is of considerable advantage because the total diameter of an assembly comprising the input shaft and the input shaft sleeve means can be kept small.

The input sleeve means may comprise one single input shaft sleeve member extending in axial direction substantially between the free end of the input shaft unit and the ring wheel support member. This is a very useful construction. Alternatively it is also possible that the input sleeve means comprise a first input sleeve section nearer to the shaft bearing means and a second input shaft sleeve section nearer to the free end of the input shaft unit. In this embodiment the input torque transmission unit can be rotatably mounted on the second input shaft sleeve section. It is to be noted here, as will be discussed later, that the necessity may come up to provide a preassembly comprising the input sleeve. This preassembly may be manufactured according to usual ball bearing manufacturing technics with bearing tracks being shaped on the input shaft sleeve. In such case it is very helpful in view of cost reduction to keep the components participating in the preassembling according to ball bearing assembling technics as small as possible as these components are to be made from a most expensive steel material. This is the reason why the input shaft sleeve means may be divided into a first and a second section such that only one section of these two sections is to participate in a preassembling operation according to ball bearing technics.

Again, the ring wheel support member may be fastened to the input shaft unit through or by the input shaft sleeve means. For example, the ring wheel support member may be axially clamped between the input shaft sleeve means and abutment face means fixed with respect to the input shaft member. Alternatively or additionally, the ring wheel support member may be centered on a tail section reduced in diameter of the input shaft sleeve means and may be axially clamped between a shoulder face of the tail section and an abutment face fixed with respect to the input shaft member.

As an alternative besides the clamping of the ring wheel support member it is also possible to make the ring wheel support member integral with at least an input shaft section of the input shaft sleeve means.

The principles of the invention are also applicable if the input shaft unit comprises only a simple input shaft member of the power consuming unit which may be prolongated beyond the normal length of a power consuming unit input shaft. One can in such case rotatably mount the input torque transmission unit on this input shaft member with the ring wheel support member being axially and angular fixed with respect to the input shaft member. With such an embodiment the degree of preassembling is not as high as with the previously discussed embodiments. Nevertheless a quite high degree is also possible in this latter embodiment in that the input torque transmission unit can be used as a carrier of the preassembled components. The ring wheel support member may be in the latter discussed embodiment press-fitted on the input shaft member or shrunk thereon.

The input torque transmission unit can essentially consist of an input torque transmission sleeve which extends in axial direction between the planetary wheel carrier portion and the drive means engagement means. The drive means engagement means may be provided by a drive means engagement member surrounding the input torque transmission sleeve and fastened thereon for common rotation therewith. Alternatively the drive means engagement means may be integrally shaped on the input torque transmission sleeve. The drive means engagement means may be shaped, for example, as a belt pulley for a flat or a V-shaped belt which is frequently used for driving an electric power generator from an output shaft of a motor vehicle engine.

The input torque transmission unit may be rotatably mounted on the input shaft unit in using roller bearing means such as ball bearing means or needle bearing means. The use of needle bearing means and ball bearing means is well known in the art. Power generator and gear box manufacturers generally like to use roller bearings in the preassembled form comprising an inner ring, an outer ring and roller members therebetween, the roller members possibly being guided by a cage. Such a type of roller bearings is easily available on the market and the manufacturing costs of gear boxes and power generators can be considerably reduced by using such ball bearing products.

According to a further very important feature of the present invention at least one of the roller bearing means between the torque transmission unit and the input shaft unit and, more particularly, an input shaft sleeve are inserted such that the roller members, such as balls or needles, are in direct rolling contact with circumferentially rolling tracks shaped on at least one of the input shaft unit and the input torque transmission unit. By shaping a roller track directly in the material of a input shaft sleeve or a input torque transmitting sleeve, one accepts certain assembling problems and also certain additional costs. These problems and costs are justified in the present specific situation because one can considerably reduce the overall radial dimensions of the gear driven power consuming unit. It is of specific advantage to have the roller members in rolling contact with a track directly shaped on the input shaft sleeve and also in rolling contact with a track shaped on an input torque transmission sleeve. Inspite of avoiding usual ball bearings it was found that the combination of an input shaft sleeve and an input torque transmission sleeve with bearing rollers therebetween in direct engagement with both sleeves can be offered by bearing ball manufacturers at an acceptable price, particularly in those cases, in which the volume of the respective sleeves and the necessary machining operations to be applied thereto are kept at a minimum.

The free wheel means may be located radially between an input torque transmission sleeve of the input torque transmission unit and the input shaft unit itself. Alternatively the free wheel means may also be provided between the planetary wheel carrier portion and the ring wheel support member. This latter alternative may have the advantage of reducing lubrication problems with respect to the free wheel means as more thoroughly discussed below.

In any case, one can again use a fully preassembled free wheel means with roller members between two concentric ring members. It is, however, also possible to provide engagement faces for clamping rollers or the like of the free wheel between respective faces of the gear unit.

The sun wheel and the sun wheel braking member may be again rotatably mounted on the input torque transmission unit by roller bearing means such as ball bearing means or needle bearing means. It is again suggested that at least part of the roller members of these latter roller bearing means should be in direct rolling engagement with a circumferential track shaped on at least one of an input torque transmission sleeve, said sun wheel and said sun wheel braking member. This results again in a reduction of an overall diameter of the gear unit.

For rotatably mounting the sun wheel and the sun wheel braking member on the input torque transmission unit one can use with high advantage a separate hub member which separate hub member may be allocated to the sun wheel or the sun wheel braking member or both of them. Such a hub member has a simple design. This hub member may again be rotatably mounted on an input torque transmission sleeve of the input torque transmission unit by roller bearing means such as ball bearing means or needle bearing means. The roller members of these roller bearing means may again be in direct rolling engagement with respective tracks shaped on the input torque transmission sleeve and the hub member.Such one has again the advantage of a small diameter of the overall construction. Moreover, there is the possibility of providing a preassembly of an input shaft sleeve, a torque transmission sleeve and a hub member in coaxial and axially overlapping arrangement which can be produced according to ball bearing manufacturing technics in a ball bearing manufacturing plant at relative small costs, particularly in such cases in which the volume of the participating elements i.e. input shaft sleeve, input torque transmitting sleeve and hub member, are reduced in volume as far as possible and are of simple constructional design.

It is of high advantage if the sun wheel and the sun wheel braking member are manufactured separately from a common or even separate hub members. Such the manufacturing costs of the hub member can be reduced considerably because only a small hub member must be manufactured from ball bearing steel whereas the rest, namely the sun wheel and the sun wheel braking member, or both, can be manufactured of less expensive materials.

The sun wheel braking member may be shaped as a flange member following a plane substantially orthogonal to the axis. This shape has the advantage of requiring reduced axial space.

The first brake portion is normally side by side with a planetary gear means and may be axially movable with respect to the sun wheel braking member in operation. The second brake portion of the gear change brake unit is usually of considerable volume because it contains electric or hydraulic or pneumatic actuation means. It has been found that it is of high advantage to arrange this second brake portion of the gear change brake unit such that it has a common plane with the planetary gear means, this common plane being orthogonal to the axis. The axial length of the gear unit can be considerably reduced by this measure. A most preferred embodiment is that the second brake portion of the gear change brake unit is substantially within the axial extent of an assembly comprising the planetary gear means, the free wheel means, the ring wheel support member and the lubricant chamber. By such a design there is no essential additional space requirement for the second brake portion. This is of high importance in order to keep the axial length of the gear unit and of the gear driven power consuming unit as a total as low as possible. Surprisingly, the reduction of axial space is more important than the reduction of radial dimension.

The lubricant chamber may be confined by first side wall means located on the first end portion side of the sun wheel and second side wall means located on the second end portion side of the sun wheel. These first and second side wall means are axially connected by circumferential chamber wall means. In such case the second brake portion can be arranged such as to surroundingly overlap the circumferential chamber wall means in axial direction.

In order to reduce the axial dimension it is quite helpful if the first side wall means comprise the ring wheel support member. The circumferential chamber wall means can be integral with at least one of the first side wall means and the second side wall means.

The second side wall means raise sealing problems. It is therefore proposed that the second wall means is sealed with respect to a hub member of at least one of the sun wheel and the sun wheel braking member by first rotation permitting sealing means and that this hub member is sealed with respect to the input torque transmission unit by second rotation permitting sealing means. Thus the most important sealing problem is solved. First side wall means may be sealed with respect to the input shaft unit. This latter sealing problem is, however, easy to be solved because no relative rotation occurs at this location. For example, one can seal the first side wall means with respect to the input shaft sleeve means of the input shaft unit and one can further seal the input shaft sleeve means with respect to the input shaft member of the input shaft unit.

In using an input torque transmission unit shaped as a sleeve, this sleeve can be sealingly closed adjacent an end thereof remote from the input shaft bearing means. Then the end of the input shaft unit is located inside the sealingly closed end of the input torque transmission unit. Thus the last sealing problem is solved and one has a completely closed lubricant chamber. This is of high importance because the provision of a completely closed lubricant chamber does allow to fill this lubricant chamber with a volume of lubricant which is independent of external operational lubricant supply means and can be dimensioned such that it is sufficient for the life of the device. It is to be noted here that the sealing rings may be of usual construction. It is possible and preferred to use sealing rings of plastic or elastomeric materials which are resistant to rotational friction. It should not be excluded, however, to use so called labyrinth-type sealing means.

The lubricant chamber is preferably shaped as an annular chamber about the axis, such that it accommodates at least one of the planetary gear means and the free wheel means. The annular lubricant chamber can rotate about the axis and can particularly rotate about the axis together with the ring wheel. Then a liquid lubricant ring is formed at the periphery of the annular lubricant chamber in response to centrifugal forces. In such case, lubricant conveying means are needed within the lubricant chamber for conveying the lubricant from the lubricant ring towards locations situated radially inwards and requiring lubrication.

In order to avoid lubricant escape problems it is proposed that the lubricant ring should in operation be restricted to an area radially outside of rotatable sealing means.

A particular problem is to transport lubricant from the lubricant ring towards bearing means provided between an input torque transmission sleeve and the input shaft unit. The conveying means should therefore be adapted to direct a lubricant beam or lubricant droplets towards at least one substantially radial opening extending through the input torque transmission sleeve of the input torque transmission unit such that the lubricant beam or lubricant droplets can pass through said at least one opening into an interspace between the input torque transmission sleeve and the input shaft unit. In this interspace the received lubricant can further be distributed towards bearing means provided within this interspace and used for rotatably mounting the input torque transmission sleeve on the input shaft unit.

In order to increase the passage probability of lubricant through the radial opening it is preferred that this at least one radially extending opening is of elongate cross section in circumferential direction.

A further possibility of conveying lubricant towards lubrication requiring locations is to direct a lubricant beam or lubricant droplets against scattering faces.

A still further conveying method according to the present invention for conveying lubricant in axial direction is as follows: An input torque transmission sleeve of the input torque transmission unit is provided with a radially inner circumferential face which is divergent in axial direction. Lubricant allotting means are allocated to said divergent circumferential face such that lubricant is received by said divergent circumferential face. The received lubricant flows then along the divergent circumferential face in axial direction under the influence of centrifugal forces. The divergent circumferential face may be axially confined by a radially inwards directed sill so as to maintain a certain reservoir of lubricant near a location requiring lubrication. When lubricant has once been conveyed to the inside of a torque transmission sleeve one can provide at least one radially directed perforation through the torque transmission sleeve. The lubricant passing in radially outwards direction through this perforation can be used for lubricating further lubricant requiring locations, for example, bearings between a hub member and the input torque transmitting sleeve.

For transporting lubricant against the action of centrifugal forces, one can use lubricant conveying means based on a lubricant pick-up tube having a radially outer end entering into the lubricant ring. This pick-up tube is provided with pick-up means directed in substantially circumferential direction about the axis. This pick-up tube is located such that it rotates with respect to the lubricant chamber and as a result thereof also with respect to the lubricant ring. Such a Pitot pressure is built up in the pick-up tube which conveys the lubricant in radial inwards direction.

According to a preferred embodiment, which is a very important aspect of the present invention, the conveying means comprise at least one conveyer disc mounted for common rotation with at least one planetary wheel. This conveyer disc immerges with a respective radially outer circumferential portion into the lubricant ring and is directed with a respective radially inner circumferential portion towards a lubricant droplet receiving location. Thus, the radially outer circumferential portion is wetted by lubricant when immerging to the lubricant ring. When this wetted portion comes out of the lubricant ring lubricant, for example in form of droplets, is thrown against a lubricant receiving location during the movement of the planetary wheel.

For improving the transport capability of the conveyer disc it may be helpful, to provide liquid pick-up means at the periphery of the conveyer disc. These pick-up means may be provided, for example, by radial recesses or slots at the periphery of the conveyer disc. These recesses or slots receive a greater amount of lubricant during immerging than a smooth conveyer disc could do. When such a conveyer disc provided with liquid pick-up means is used, and when the lubricant liquid is to be thrown against an opening through a rotating sleeve, one must select the position of the lubricant pick-up means and the circumferential position of the opening through the sleeve such that the lubricant ejection from a lubricant pick-up means towards an opening occurs in the correct relative position such that the lubricant hits into the opening.

Assuming now that in accordance with the above discussion the lubricant ring exists within the lubricant chamber, it is helpful to have the free wheel means being at least partially immerged into the lubricant ring within the lubricant chamber such that the free wheel means are lubricated in operation. This can readily be done in calculating the radial width of the lubricant ring and in locating the free wheel means such that they immerge into the lubricant ring at least to such an extent that all parts of the free wheel means which require lubrication are wetted with lubricant. The same is true for the ring wheel. One should consider to have the radially inner teeth means of the wheel ring at least partially immerged into the lubricant ring within the lubricant chamber. It is an essential feature of the present invention that the input torque transmission unit, the planetary gear means, the free wheel means and the allocated bearing means are at rest with respect to the input shaft unit when the input shaft unit is directly driven from the input torque transmission unit through the free wheel means. As a consequence thereof there is further no relative rotation at the locations which are sealed by rotating sealing means. Due to this peculiarity of the present invention at the high input r.p.m. of the input torque transmission unit no lubrication is necessary. Therefore no harm results from the fact that in this situation no lubricant can be conveyed to the parts to be lubricated when being moved relative to each other.

The second brake portion can be supported through brake portion support means by the stator means.

If considerable heat is generated within the power consuming unit such as in an electric power generator, it may be necessary to cool the internal space of the power consuming unit. In this case it may be helpful to provide cooling air openings in an end wall of the stator means adjacent the bearing means. If now the gear unit is adjacent this end wall, it may become difficult to allow access or removal of cooling air to and from the openings. There exists, however, the possibility to provide air passages in the brake portion support means or to design the brake portion support means such that a possibility of a passage of cooling air is maintained.

The power consuming unit can, as already mentioned, be an electric power generator. Further the power consuming unit can be an auxiliary power consuming unit of a motor vehicle such as a power generator, an oil pump, a compressor or the like.

The gear change brake unit can be an electro-magnetically controlled brake unit. Preferably the gear change brake unit acts as a frictional brake unit permitting a smooth reduction of the r.p.m. of the sun wheel, possibly down to a standstill, with respect to the stator means. This is highly desirable because it avoids a shock like torque charge to the motor vehicle engine when the high r.p.m. of the input shaft unit is selected.

The second brake portion of the gear change brake unit may comprise an electro-magnetic coil unit. In this case the first portion of the gear change brake unit may be an axially movable armature. This results in a fully circular arrangement which is highly desirable in view of small space requirement.

The electro-magnetic coil unit may be of annular shape and arranged in substantially coaxial position around the planetary gear means such that a common plane contains both, the planetary gear means and the electro-magnetic coil unit. This is again of advantage in view of short axial dimension.

A most desirable overall design is as follows: The planetary gear means, the lubricant chamber, the gear change brake unit and the sun wheel braking member are of such design and of such mutual arrangement that they are enveloped by a flat virtual enveloping disc. On the other hand, the driving means engagement means may be enveloped by a virtual enveloping cylinder projecting from a side wall of the flat virtual enveloping disc remote from said shaft bearing means. The virtual enveloping cylinder may have a diameter considerably smaller than the diameter of the flat virtual enveloping disc. Such one can obtain an overall shape of the planetary gear driven power consuming unit which is very similar to the overall shape of an analogous power consuming unit in which a belt pulley is directly fastened for common rotation with an input shaft member of the rotor.

The axial width of the virtual flat enveloping disc can be reduced to a minimum, substantially corresponding to the sum of individual axial dimensions of the sun wheel, sun wheel braking member, the planetary wheel carrier portion, the ring wheel support member and the side wall of the lubricant chamber remote from the ring wheel support member. More particularly, the axial width of the virtual flat enveloping disc can be kept at less than 135 % and preferably less than 130 % of this sum.

On the other hand the diameter of the virtual enveloping cylinder may be kept at less than 40 % and preferably less than 30 % of the diameter of the virtual enveloping disc.

In other terms: The diameter of the virtual flat enveloping disc may be kept at less than 9 times, preferably less then 8,5 times the diameter of the input shaft unit, said diameter of the input shaft unit being measured axially inside the shaft bearing means.

The axial width of the virtual enveloping cylinder is dependent on the type of the input driving means. More particularly, the axial width of the cylinder can be kept at a measure corresponding to the axial width of a belt pulley.

Once more in other words: The diameter of the virual enveloping cylinder may be less than 3 times the diameter of the input shaft unit, said diameter of the input shaft unit again measured inside the shaft bearing means.

With a type of a planetary gear means as defined above, one can easily obtain a first transmission ratio of 1:1 (direct drive) and a second transmission ratio of less than 1,70:1 between the input shaft unit and the input torque transmission unit. At a transmission ratio of 1,70:1 the input shaft unit has the higher r.p.m. when compared with the input torque transmission unit. These transmission ratios are very convenient in case of driving an auxiliary power consuming unit and, more particularly, an electric generator by a motor vehicle engine.

The gear change brake unit may be controlled by a control unit in response to the r.p.m. of the input torque transmission unit such that the r.p.m. of the input shaft unit is increased with respect to the r.p.m. of the input torque transmission unit when the r.p.m. of the input torque transmission unit is reduced below a predetermined r.p.m. value. Such one can maintain the input shaft r.p.m. of the power consuming unit rather constant inspite of the large variations of the r.p.m. of a motor vehicle engine.

The increase of the r.p.m. of the input shaft unit beyond the r.p.m. of the input torque transmission unit may be further made dependent on a signal representing a need for an r.p.m. increase of the power consuming unit. An example: An electric power generator is feeding a battery of a motor vehicle. When the r.p.m. of the vehicle engine falls below a predetermined value a change of the transmission ratio occurs only when a signal is received, saying that the battery needs more feeding currant.

Considering once more the invention in comparison with the prior art according to the U.S. patent 2 327 769, it is of utmost importance that the input shaft unit having a section extending beyond the shaft bearing means of the stator means towards the free end has no further radial support from the stator means besides said shaft bearing means. This is one of the most important reassons for obtaining a short axial length of the gear unit.

According to a further aspect the invention relates to a sub-unit of the above defined planetary gear driven power consuming unit, namely, a group of components comprising at least the input torque transmission unit, the planetary gear means, the free wheel means, the sun wheel braking member, the ring wheel support member, the lubricant chamber and the input torque transmission unit.

These components may be preassembled such as to form a preassembled gear unit with the preassembled components being in relative operational positions corresponding their relative operational positions within the completed planetary gear driven power consuming unit. In this case the ring wheel support member may be adapted for being drivingly fastened to an input shaft member rotatably mounted with respect to the stator means by the shaft bearing means.

This group of preassembled components may further comprise a prolongation unit adapted to be non-rotatably fastened to the input shaft member in prolongation alignment thereto. The prolongation unit may - within the frame of the preassembled group of components - be rotatably mounted with respect to the input torque transmission unit. Thus, this preassembled group of components may be combined with the basic power consuming unit in that the prolongation unit is fastened to the input shaft member of the basic power consuming unit in axial alignment with the input shaft member. Alternatively, the preassembled group of components may comprise input shaft sleeve means adapted to be non-rotatably fastened on the input shaft member in surrounding relationship thereto. This input shaft sleeve means may be rotatably mounted with respect to the input torque transmission unit of the preassembled components so that the terminal installation requires only to slide the input shaft sleeve means onto the input shaft member and to fasten it thereon for common rotation.

The preassembled group of components may be sucured in preassembled condition by releasable securing means. Such it is possible to introduce into an input shaft unit sleeve means of the preassembled components a bolt member having a bolt head. This bolt head is applied to one end of the input shaft sleeve unit whereas a thread at the other end of the bolt is screwed together with the nut which in the completed power consuming unit is used to fasten the preassembled unit onto the input shaft member. When the preassembled components are secured against this assembling in said way they can be shipped from a gear unit manufacturer to e.g. an electric generator manufacturer which may combine the preassembled gear unit with the basic power generator. The power generator manufacturer has only to release the bolt and the nut and then to slide the preassembled gear unit onto the input shaft member of the basic power generator. Then he has to fasten this preassembled gear unit on said input shaft member of the basic power generator by mounting and tightening the nut again.

It is even possible to prefill the preassembled gear unit before combining with the basic power consuming unit with a volume of liquid lubricant. In this case the releasable securing means such as the bolt member in connection with the nut may be selected such as to prevent escape of the liquid lubricant when the preassembled gear unit is stored or shipped.

According to a further aspect of the present invention a planetary gear driving mechanism with changeable transmission ratio comprises in coaxial arrangement about an axis, a sun wheel, a planetary wheel carrier, at least one planetary wheel, a ring wheel, free wheel means, a lubricant chamber and a gear change brake unit. This gear change brake unit is of annular shape and surrounds the ring wheel. A common plane orthogonal to the axis contains both, the ring wheel and the gear change brake unit. The gear change brake unit comprises an annular coil surrounding the ring wheel and an armature movable in axial direction with respect to the electro-magnetic coil. The advantage of the planetary gear driving mechanism as compared with a planetary gear driving mechanism as described and shown in the U.S. patent 2 327 769 is that due to the axial movement of the armature a fully circular arrangement is obtained which can be built with reduced external dimensions. Moreover, mechanical charges are transmitted in a fully symmetrical way to the gear unit with the result of reduced mechanical stress.

According to a still further aspect of the present invention a planetary gear driving mechanism with a changeable transmission ratio comprises in coaxial arrangement about an axis and mounted on a torque transmitting sleeve unit a sun wheel, a planetary wheel carrier, at least one planetary wheel, a ring wheel, free wheel means, a lubricant chamber and a gear change brake unit. This planetary gear driving mechanism can be preassembled on the torque transmitting sleeve unit without the use of a gear unit housing as shown and described in the U.S. patent 2 327 769. It is further to be noted that the planetary gear driving mechanism, preassembled on the torque transmitting sleeve unit, has a closed and compact appearance because all essential components are housed within the lubricant housing defined by the ring wheel support member and a second housing wall on the other side of the gear means when, according to the present invention, the further housing wall and the ring wheel support member are completed by external wall means to form the annular lubricant chamber. This closed and compact appearance is obtained without the use of an additional gear unit housing as used in the U.S. patent 2 327 769. The avoiding of the gear unit housing of the U.S. patent 2 327 769 is facilitated by the fact that, in accordance to the present invention, the gear unit is fully circular thanks to the use of fully circular gear change brake means with an axially movable armature. In such case the stationary gear change brake portion, i.e. the electro-magnetic coil, can easily fulfill the function of a external protection against a person touching the rotating lubricant chamber housing.

According to a further aspect of the present invention a planetary gear driving mechanism with changeable transmission ratio comprises in coaxial arrangement about an axis a sunwheel, a planetary wheel carrier, at least one planetary wheel, a ring wheel, free wheel means, a lubricant chamber and a gear change brake unit. The lubricant chamber is rotatable about the axis in operation such that liquid lubricant contained within the lubricant chamber forms under the action of centrifugal forces a lubricant ring within the lubricant chamber. Lubricant conveying means are provided within the lubricant chamber for conveying lubricant in radial inwards direction from the lubricant ring towards locations requiring lubrication. In this connection it is to be considered that the U.S. patent 2 327 769 does not disclose satisfactory suggestions for lubrication and particularly not a lubrication system with a life time lubricant filling within a lubricant chamber. In particular, the U.S. patent 2 327 769 does not solve the problem, how to lubricate radially inwards located parts of a gear unit from a radially outwards lubricant ring created by centrifugal forces.

A further important aspect of the present invention is the lubricant conveying system based an a conveyer disc. This conveyer disc is mounted on a planetary wheel for common rotation with the planetary wheel. The conveyer disc immerges with a respective radially outer portion thereof into the lubricant ring and throws lubricant radially inwards from the lubricant ring.

In such a construction the driving mechanism may further comprise in a central portion a torque transmitting sleeve unit as discussed above. This torque transmitting sleeve unit may be provided with bearing means within a central passage thereof for rotatably mounting the torque transmitting sleeve unit onto a shaft unit surrounded by this torque transmitting sleeve unit. In such a situation the lubricating problem is still more complicated, it can be solved, however, in that the sleeve unit comprises at least one radial opening therethrough for admitting a lubricant stream or a droplet stream from the lubricant ring.

The principle of the conveyer disc can be still improved in that the conveyer disc is provided with lubricant pick-up means adjacent the periphery of the conveyer disc. Thus, the conveying capacity of the conveyer disc can be considerably increased. In using such a conveyer disc with lubricant pick-up means, for example, lubricant pick-up slots at the periphery of the conveyer disc, which are located in predetermined positions along said periphery a further problem may occur: If the conveyer disc is to throw lubricant towards a radial opening through a torque transmitting sleeve unit, one must consider the planetary movement of the conveyer disc with respect to the torque transmitting sleeve unit in order to make sure that the lubricant thrown radially inwards by the discrete lubricant pick-up means hits the radial hole. It is, however, relatively easy to calculate the flow path of the lubricant from the lubricant pick-up means of the conveyer disc in radially inwards direction and to select the location of the lubricant pick-up means along the periphery of the conveyer disc and the location of the radial opening along the circumference of the input torque transmitting sleeve unit such that at any time a strong lubricant stream hits the opening.

According to a further aspect the present invention relates to a bearing assembly in a planetary gear driving mechanism with changeable transmission ratio. Said planetary gear driving mechanism comprises a sunwheel, a planetary wheel carrier, at least one planetary wheel, a ring wheel, free wheel means and a gear change brake unit. The bearing assembly comprises a shaft unit, a torque transmitting bearing sleeve surrounding the shaft unit and rotatably mounted thereon by roller bearing means and a torque transmitting hub member surrounding the torque transmitting bearing sleeve and rotatably mounted thereon by further roller bearing means. At least one of the roller bearing means and the further roller bearing means comprises roller track means shaped on respective ones of the shaft unit, the torque transmitting bearing sleeve and the torque transmitting hub member. This bearing assembly which can easily be made and preassembled has the high advantage of reducing the overall diameter of the completed planetary gear driving mechanism.

According to a most preferred embodiment the shaft unit comprises a further bearing sleeve adapted for being non-rotatably mounted on the shaft member. In this case the torque transmitting bearing sleeve can be rotatably mounted by roller means on the further bearing sleeve. In this case at least one of the bearing means and the further bearing means may comprise ball-shaped roller members engaging concave bearing track means in respective ones of the shaft unit, the torque transmitting bearing sleeve and the torque transmitting hub member such as to inseparably fix at least two of the shaft unit, the torque transmitting bearing sleeve and the torque transmitting hub member with respect to each other in axial direction.

According to a further aspect this invention relates to a method of assembling a planetary gear driven power consuming unit as defined above. According to the method of this invention at least the sun wheel, the planetary wheel carrier, the planetary wheel, the ring wheel, the free wheel means and the lubricant chamber are preassembled on the input torque transmission unit and hereupon rotatably mounted on the basic power consuming unit. This final mounting may be performed such that the torque transmission unit is slided on the input shaft member of the input shaft unit and fastened thereto.

With the described method of assembling the preassembling may further comprise rotatably mounting the input torque transmission unit on an input shaft sleeve unit. This input shaft sleeve unit may then be - subsequent to the preassembling step - non-rotatably mounted on the input shaft member.

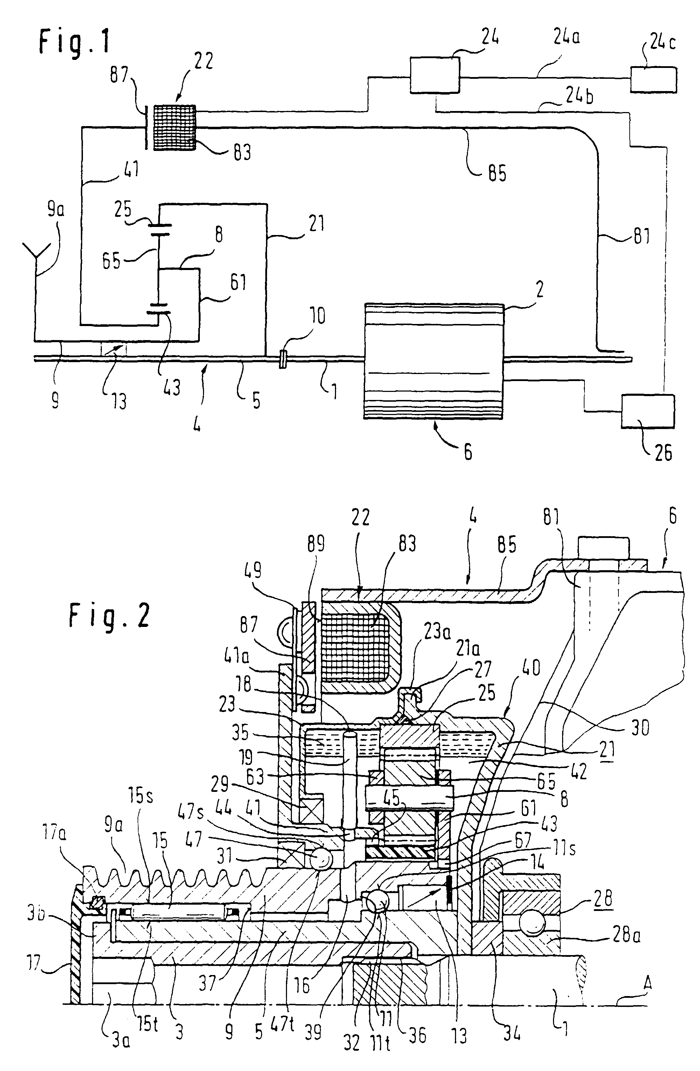

As mentioned before, the planetary gear driven power consuming unit may be an electric power generator such as used in the electric power system of a motor vehicle. In such an electric power generator a considerable amount of energy is converted into heat. Therefore it may be necessary to cool the electric power generator by a fan, as it is already known from the U.S. patent 2 327 769. In Figure 1 of this U.S. patent one can see that the fan is located outside the stator housing such that the fan is located between the shaft bearing means and the gear unit.

According to a further aspect of this invention the cooling fan is mounted on the input shaft unit for common rotation therewith on a side of the shaft bearing means remote from the end of the input shaft unit. This design has the great advantage of shortening the distance between the drive means engagement means and the shaft bearing means. So the gear unit becomes less sensitive to bending torques resulting, for example, by belt tension, if a belt pulley is mounted at the free end of the input torque transmission unit. Such the positioning of the fan on the rotor side of the input shaft bearing means helps to avoid the gear unit housing and thus contributes again to reduction of the axial length of the planetary driven electric power generator.

According to a preferred embodiment an electric power generator of this invention the stator means comprise a stator housing. The stator housing has an end wall axially adjacent the input shaft bearing means. The end wall is provided with cooling air passage means radially adjacent the shaft bearing means. The second brake portion is fastened to the stator housing adjacent the end wall by second braking portion fastening means. The second brake portion fastening means provide a further cooling air passage means. The cooling fan is provided within the stator housing and is adapted to provide a cooling air stream through the cooling air passage means of the end wall and through the further cooling air passage means provided by the second brake portion fastening means. Such the invention provides also a full solution of the problem of cooling inspite of the fact that the gear unit is very close to the end wall and to the fan adjacent thereto.

The various features of novelty which characterize the invention are pointed out with particularity in the claims annexed hereto and forming a part of the disclosure.

The invention is defined in independent apparatus claim 1 and method claim 94. Further features of the invention result from the dependent apparatus claims 2 to 93, 96 to 106 and dependent method claim 95. For a better understanding of the invention, its operating advantages and specific objects attained by its use reference should be had to the accompanying drawings and descriptive matter in which there are illustrated and described preferred embodiments of the invention.

### BRIEF DESCRIPTION OF THE DRAWINGS

The invention will be explained in greater detail hereafter with reference to embodiments shown in the accompanying drawings in which
- Fig. 1: shows a schematic view of a gear unit according to this invention;
- Fig. 2: shows a longitudinal section containing the axis of a gear unit according to this invention;
- Fig. 3: shows a partial section according to Fig. 2 with a modified embodiment;
- Fig. 4: shows a partial section according to Fig. 2 with a further modified embodiment and
- Figs. 5 to 8: show further modified embodiments.

### DETAILED DESCRIPTION OF PREFERRED EMBODIMENTS

In Fig. 1, an electric power generator 6 comprises a stator housing 81 in which a rotor 2 is rotatably mounted. The rotor is fastened on an input shaft 1 of the generator 6. A gear unit 4 is combined with the generator 6. The gear unit 4 comprises a gear unit input member 9 on which a belt pulley 9a is mounted for common rotation. The input member 9 is connected for common rotation with a planet carrier 61. The planet carrier 61 carries a bolt 8 on which a planet wheel 65 is rotatably mounted. The planet wheel 65 is meshing with a ring wheel 25 and a sun wheel 43. The ring wheel 25 is connected for common rotation with a gear unit output member 5. The gear unit output member 5 is connected with the input shaft 1 of the generator by coupling means 10. A free wheel unit 13 is provided between the gear unit input member 9 and the gear unit output member 5. The sun wheel 43 is connected with a sun wheel stop member 41. The sun wheel stop member 41 carries a first portion 87 of an electro-magnetic gear change clutch 22. A second portion 83 of the electro-magnetic clutch 22 is fastened through an encapsulating sleeve 85 to the stator housing 81. The clutch portion 83 comprises an electro-magnetic coil which is fed by electric current from an external control unit 24. The clutch portion 87 comprises an armature which can be brought in frictional engagement with the clutch portion 83 by energizing the electro-magnetic coil. The control unit 24 has a first input 24a and a second input 24b. The belt pulley 9a is connected by a belt (not shown) with an output shaft of an internal combustion engine.

At a low r.p.m. of the internal combustion engine, the control unit 24 receives through input 24a a signal from a sensor 24c indicating that the r.p.m. of the internal combustion engine and as a result thereof also the r.p.m. of the input member 9 is below a predetermined value. In response to this signal the clutch 83 is closed such that the sun wheel 43 is stationary with respect to the stator housing 81. Under these circumstances, the output member 5 is driven with an increased r.p.m. as compared with the r.p.m. of the input member 9. A relative rotation between the input member 9 and the output member 5 is permitted by the free wheel 13. Such, the input shaft of the generator 6 is driven with a relatively high r.p.m. in spite of the low r.p.m. of the internal combustion engine. This may be particularly necessary, when an accumulator 26 fed by the generator 6 is in a poor condition. If the accumulator 26 is in good condition, it may not be necessary to increase the r.p.m. of the generator through the gear unit. Therefore, the input line 24b of the control unit 24 is connected with the accumulator 26 for detecting the condition of the accumulator. Only when both inputs 24a and 24b of the control unit 24 provide a signal to the control unit 24, the clutch 22 is energized and the sun wheel 43 is prevented from rotation.

As soon as the r.p.m. of the internal combustion engine is increased above the predetermined r.p.m. value a deenergizing signal is fed from the r.p.m. sensor 24c to the control unit 24. As a result thereof the clutch 22 is deenergized. Thus, the sun wheel 43 becomes freely rotatable. Under this condition, the free wheel 13 becomes effective and transmits the rotation of the input member 9 directly to the output member 5 and to the input shaft 1 of the generator. Thus, the r.p.m. of the generator are maintained low in spite of the increasing r.p.m. of the internal combustion engine.

In Fig. 2, one can see again the stator housing 81 of the generator and the input shaft 1 thereof. The input shaft 1 is rotatably mounted in a roller bearing 28 provided adjacent an end wall 30 of the stator housing. The inner ring member 28a of this ball bearing is shrunk on the input shaft 1. The left-hand end of the input shaft 1 is provided with external thread means 32. The sleeve-shaped output member 5 surrounds the input shaft 1 and abuts the ring wheel support member 21. The ring wheel support member 21 abuts a spacer ring 34 which abuts the inner ring member 28a which is fastened on the input shaft 1. A tensioning member 3 with a spanner face 3a engages by a terminal flange 36 the left-hand end of the output member 5. This tensioning member 3 is provided with internal thread means 36 and screwed onto the external thread means 32 of the input shaft 1. Such, the output member 5, the ring wheel support member 21 and the spacer ring 34 are axially clamped between the terminal flange 3b and the ring member 24a. Such, the output member 5 is connected for common rotation with the input shaft 1, and the ring wheel support member is connected for common rotation with the output member 5 and the input shaft 1.

The sleeve shaped input member 9 is rotatably mounted on the output member 5 by a ball bearing 11 and a needle bearing 15. The balls of the ball bearing 11 are in direct rolling engagement with roller tracks llt and lls shaped on the output member 5 and the input member 9. The same is true for the needles of the needle bearing 15 which are in contact with roller tracks 15t and 15s shaped on the output member 5 and the input member 9. The left-hand end of the input member 9 is closed by a cover member 17. The left-hand end portion of the input member 9 is shaped as a belt pulley.

The planet carrier 61 is fixed for common rotation on the input member 9 by teeth means 67. The planet carrier 61 carries the planet wheels 65 through the bolts which are stabilized by a further portion 63 of the planet carrier 61. The ring wheel 25 is fastened for common rotation with the ring wheel support member 21 in that a housing portion 23 is curled at 23a around a flange 21a of the ring wheel support member 21. The ring wheel support member 21 is shaped as a further housing portion such that the ring wheel carrier 21 and the housing portion 23 form an annular chamber housing 40. The sun wheel 43 is flyingly carried by the planet wheels 65 around the input member 9. The sun wheel 43 is angularly fixed with respect to the sun wheel stop member 41 through teeth means 45. The sun wheel stop member 41 is rotatably mounted on the input member 9 through a ball bearing 47 the balls of which are in direct rolling engagement with ball tracks 47t shaped on the input member 9 and 47s shaped on the sun wheel stop member 41. The sun wheel stop member 41 is provided with a radially outwards extending flange 41a. This flange 41a carries through axially deflectable spring means 49 the clutch portion 87 provided with the armature and engageable with a friction face 89 of the clutch portion 83 comprising the electro-magnetic coil. The free wheel 13 is located radially between the output member 5 and the input member 9. The clutch portion 83 is fixed to an encapsulating sleeve 85 which is fastened to the stator housing 81 and axially adjustable with respect thereto for adjusting the gap between the clutch portions 87 and 83. Within the chamber housing 40 there is defined an annular lubricant chamber 42. This annular lubricant chamber is sealed by a sealing ring 29 between the housing portion 23 and the sun wheel stop member 41 and further by a rotatable sealing ring 31 provided between the sun wheel stop member 41 and the input member 9. Moreover, this chamber is sealed by a sealing ring 27 between the housing portions 21 and 23. Further, the lubricant chamber 42 is sealed by tight engagement of the housing portion 21 (ring wheel support member 21) with the output member 5 and by the cover 17 including a sealing ring 17a.

A volume of liquid lubricant 35 is contained within the lubricant chamber 42. The liquid lubricant forms a lubricant ring 35 in operation as a result of centrifugal forces. This lubricant ring rotates together with the chamber housing 40, i. e. with the output member 5. The sealing means 29 and 31 are radially inwards of the lubricant ring 35 so that they are not charged by the pressure of the lubricant resulting from centrifugal forces. A lubricant pick-up tube 19 is fixed to the sun wheel stop member 41 and has a radially outer end with an opening 18 directed in circumferential direction about the axis A. When the sun wheel stop member 41 is prevented from rotation by energization of the clutch 22, the lubricant ring 35 rotates with respect to the non-rotating pick-up tube 19 such that a pitot pressure is built up within the pick-up tube 19. The pressurized lubricant flows through the pick-up tube 19 in radially inwards direction and through a radial bore 44 of the sun wheel stop member 41 towards the ball bearing 47. Further, the pressurized lubricant impinges on the input member 9. The input member 9 is provided with radial bores 16. Accordingly, a beam of lubricant is periodically sent through the radial bore 16 into the radial gap between the input member 9 and the output member 5. The lubricant within this radial gap can flow towards the ball bearing 11, the needle bearing 15 and the free wheel 13. The lubricant collected in the area of the needle bearing 15 is prevented from back flow under centrifugal forces by a sill 37. The lubricant arriving at the free wheel 13 is prevented from the back flow under centrifugal forces by a disc 14 and a sill 39. Such, sufficient lubrication of all bearing means and of the free wheel is warranted. Moreover, the radially inner teeth of the ring wheel 25 are immerged into the lubricant ring 35 so that the engagement faces of the planet wheels 65 and the ring wheel 25 are also provided with lubricant.

The bores 16 have an elongated cross-sectional area in circumferential direction. By this configuration, the back flow of lubricant resulting from centrifugal forces through the bore 16 is reduced such that in balance a radially inward directed flow of lubricant occurs through in the bore 16.

If the clutch 22 is released, the output member 5 and the input member 9 rotate as a unit. In this situation, no relative movement occurs between the ring wheel 25 and the sun wheel 43, no relative movement takes place between sun wheel stop member 41 and the input member 9 and no relative movement takes place between the input member 9 and the output member 5. No pitot pressure is built up in the pick-up tube 19. This is, however, not necessary, because no lubrication is required.

Before combining the gear unit 4 with the generator 6 the preassembled gear unit 4 is maintained in the preassembled status as shown in Fig. 2 by a securing bolt entered into the output member 5 from the right side in Fig. 2 and threaded into the internal thread means 36 of the tension member 3. This securing bolt has a head portion engaging the ring wheel support member 21 and pressing it against the output member 5.

It is to be noted that the clutch 22 and the planetary gear are very near to each other in axial direction. It is further to be noted that the ball bearing 11 and the free wheel 13 are substantially in the same plane as the planetary gear. The direct engagement of the ball and needle bearings with the adjacent parts further reduces the axial and radial dimensions. The gear unit is combinable with a generator of classic design in which the input shaft 1 has been provided with a simple belt pulley. Thanks to the above discussed design, the axial length of the combined generator and gear unit is not substantially longer than a corresponding classic generator with the belt pulley directly mounted on the input shaft 1.

The sealing rings 31 and 29 may be shaped as so-called sealing lips.

In operation with a high r.p.m. at a 1:1 transmission ratio, the lubricant is substantially contained within the annular chamber 42 so that escape of liquid is prevented.

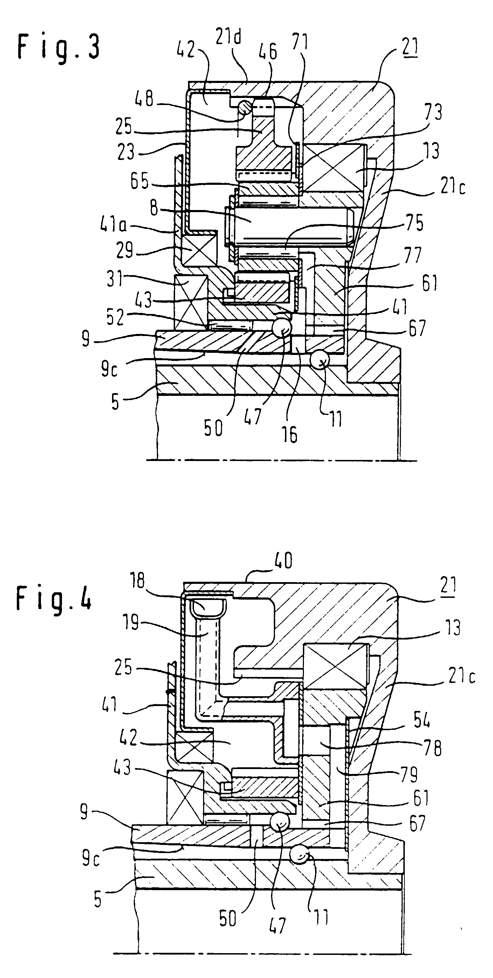

In the embodiment of Fig. 3, the ring wheel support member 21 is connected with the ring wheel 25 by teeth means 46 and axially secured by a securing ring 48. The free wheel 13 is located inside the lubricant chamber 42 such that the free wheel 13 at least partially immerges into the lubricant ring not shown. In this embodiment, the ring wheel support member 21 is shaped such as to follow the convex form of the end wall 30 of the generator as shown in Fig. 2. The free wheel 13 can, therefore, be located in a transition.zone between a flange portion 21c and a ring wheel carrier portion 21d of the ring wheel support member 21, and no valuable axial space is consumed for the location of the free wheel 13. The planet wheel 65 is combined with a conveyer disc 71. This conveyer disc 71 is rotating with the planet wheel 65 and is mounted by inner teeth on the outer teeth of the planet wheel 65. The radially outer circumferential portion of the conveyer disc 71 immerges into the lubricant ring (not shown), so that the conveyer disc 71 is wetted with lubricant. This lubricant is thrown away from the conveyer disc 71 by centrifugal forces. Droplets are thrown through the circumferentially elongated radial bore 16. These droplets are scattered at the external circumferential face of the output member 5 and are directed towards the ball bearing 11 and the needle bearing 15 (shown only in Fig. 2). The conical face 9c of the input member 9 takes care of building up lubricant volume in the region of the needle bearing 15. If a certain volume of lubricant is collected adjacent the conical face 9c, lubricant can flow through a substantially radial bore 50 radially outwards towards the ball bearing 47 and towards a needle bearing 52 additionally provided between the input member 9 and the sun wheel stop member 41. It is further to be noted that the sun wheel 43 is in this embodiment radially and circumferentially fastened to the sun wheel stop member 41.

Back flow of lubricant can occur through a radial groove 77 provided within the planet carrier 61 and covered by a cover plate 73 fixed to the planet carrier 61. This back flow of lubricant lubricates a needle bearing 75 by which needle bearing 75 the planet wheel 65 is mounted on the bolt 8. The high velocity of planet wheels 65 provides a reliable lubrication of all bearings. One can again see that the ball bearings 11 and 47 are axially close together such that minimum axial dimension is obtained. The immerging of the free wheel 13 into the lubricant ring is helpful for avoiding noises and provides an effective lubrication of the free wheel.

In the embodiment of Fig. 4, there is again used a pick-up tube 19 with a pick-up scoop 18 directed in substantially circumferential direction so as to pick-up lubricant by a pitot effect. The pick-up tube is in contradiction to the embodiment of Fig. 2 fixed to the planet carrier 61 between subsequent planet wheels. Such, at least a part of the pick-up tube 19 can be housed in the same plane as the planet wheels. The lubricant flows through the pick-up tube 19 radially inwards and through the bore 78 of the planet carrier 61 into a radial groove 79 which is covered by a disc 54 rotating with the planet carrier 61. The lubricant flowing radially inwards through the groove 79 arrives at the ball bearing 11 and flows also along the conical face 9c to the needle bearing (shown only in Fig. 2). If a predetermined amount of lubricant has been collected in the zone of the needle bearing, a back flow occurs through the radial bore 50. Thus the ball bearing 47 is also lubricated. The back-flowing lubricant further wets the sun wheel 43 and the radially inner portions of the planetary wheels. The roller bearings 47 and 52 are located substantially in the same plane as the planetary gear means 25,43,61,65. The gear change clutch 22 (not shown) is preferably also located in this common plane radially outwards of the ring wheel carrier portion 21d.

The clutch 22 is preferably annular about the axis A. This clutch can be replaced by mechanic, pneumatic or hydraulic clutches. The gear unit can be filled with oil before being combined with the generator. The encapsulating sleeve 85 and the clutch portion 83 are separate from the remaining part of the gear unit and can be supplied together with the remaining part.

The term gear unit output member 5 is to be understood in a broad sense of a member rotating with an output r.p.m. As the free wheel 13 may be according to Fig. 3 engaged with the ring wheel support member 21, the gear unit output member 5 is not necessarily directly included in the torque transmission between the ring wheel support member 21 and the input shaft 1.

The term sealing ring 31,29 is to be understood also in a broad sense and comprises all kinds of sealing means permitting relative rotation of the respective parts which are to be sealed with respect to each other.

The assembling of the gear unit and the power generator as illustrated in Fig. 2 can be performed as follows:

The power generator 6 with the input shaft 1 and the ball bearing 28,28a is completed with the bearing ring 28a being axially fixed on the shaft 1.

The unit consisting of the gear unit output member 5, the gear unit input member 9 and the sun wheel stop member 41 with the bearings 11, 15 and 47 can be manufactured in a bearing manufacturing plant. The free wheel 13 can be inserted either in the bearing manufacturing plant or in the assembling plant. In case of a clamping roller free wheel, the clamping roller engagement faces on the input member 9 and on the output member 5 may be shaped or machined in the bearing manufacturing plant.

The ring wheel support member 21 is combined with the ring wheel 25, the planet carrier 61,63 including the planet wheels 65 and with the sun wheel 43 engaged into the planet wheels 65.

The housing portion 23 including the sealing ring 29 is combined with the sun wheel stop member 41 of the preassembled unit 5,9,41.

The pick-up tube 19 is hereupon inserted into the sun wheel stop member 41.

Hereupon, the unit 21,25,61,63,65,13 is combined with the unit 5, 9,41,19,29 by axially approaching these units such that sun wheel stop member 41 engages the sun wheel 43 at 45.

Hereupon, the housing portion 23 is curled around the flange 21a, and the sealing ring 31 is inserted.

Such a complete gear unit has been obtained ready for combination with the power generator. For securing this gear unit against disassembly, the tensioning member 3 may be inserted into the output member 5. A bolt having an external thread corresponding to the external thread means 32 of the input shaft 1 may be inserted through the spacer ring 34 and the ring wheel support member 21 and screwed into the internal thread means of the tensioning member 3 with a bolt head (not shown) engaging the spacer ring 34. The lubricant chamber 42 may be filled before completion of the gear unit with the predetermined volume of liquid lubricant, e. g. through the gap between the input member 9 and the sun wheel stop member 41 before installing the sealing ring 31. The outflow of liquid lubricant may be prevented by inserting the cover member 17 and by tight engagement of the bolt member with the output member 5 and the ring wheel support member 21. The bolt member may sealingly engage with the head portion thereof the spacer ring 34.

In this preassembled status of the completed gear unit, this may be shipped to the manufacturer of the power generator or to a motor-vehicle manufacturer for being combined with the power generator 6. The power generator 6 is first of all combined with the clutch portion 83 through the casing 85. Hereupon, the preassembled gear unit as described above is combined with the power generator. For doing this, first of all the bolt member engaged into the tensioning member 3 is removed. Now, the preassembled gear unit is slided upon the input shaft 1, and the tensioning member 3 is screwed onto the external gear means 32 of the input shaft 1 by a spanner tool engaging into the spanner faces 3a of the tensioning member 3. Now, the cover member 17 may be engaged again into the input member 9.

The escape of lubricant oil may be avoided in metering the lubricant oil such that it remains below the level of the input member 9, when the gear unit is maintained in a position with horizontal axis without rotation.

In the preceding description, the unit 22 has been nominated "an electromagnetic clutch" and the portions thereof have been nominated clutch portions 83 and 87. These terms are basically correct, because the unit 22 has the function of preventing or releasing a relative rotation between the sun wheel 43 and the casing 85.

In technical practice, it is, however, more usual to designate the unit 22 as a brake unit with brake portions 83 and 87. Correspondingly, one can understand the sun wheel stop member 41 as a braking member.

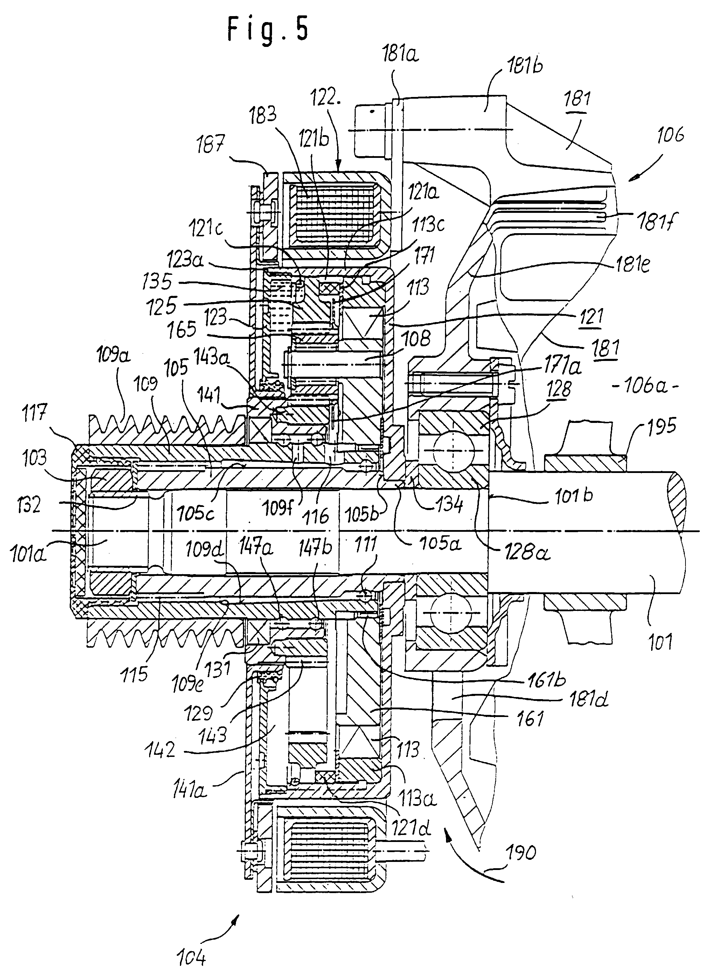

In Fig. 5, there is shown a further embodiment with analogous parts designated by the same reference numerals as in Figs. 2 and 3, said reference numerals being increased by 100.

The embodiment of Fig. 5 is very similar to the embodiments of Figs. 2 and 3. There exist, however, the following important differences:

The input shaft member 101 is prolongated beyond the ball bearing 128,128a, such as to extend beyond the left-hand end of the sleeve member 105, this sleeve member 105 being designated here as an input shaft sleeve member 105. The input shaft sleeve member 105 is provided at its right-hand end with a tail portion 105a of reduced diameter and with a shoulder face 105b. The ring wheel support member 121 mates on the tail portion 105a and engages the shoulder face 105b. The left-hand end portion 101a of the input shaft member 101 extending beyond the left-hand end of the input shaft sleeve member 105 is provided with external thread means 132. A nut 103 is threaded onto the external thread means 103 and engages the left-hand end of the input shaft sleeve member 105 such as to urge the shoulder face 105b against the ring wheel support member 121 and to urge the ring wheel support member 121 through the spacer ring 134 against the internal bearing ring 128a of the ball bearing 128,128a. It is to be noted that the internal bearing ring 128a is axially fixed by engagement with a shoulder face 101b of the input shaft member 101 and that the tail portion 105a has an axial length smaller than the axial width of the ring wheel support member 121 at the radially inner circumference thereof such that the ring wheel support member 121 is pressed against the internal bearing ring 128a, and the ring wheel support member 121 is fastened for common rotation with the input shaft member 101. The designation of the input shaft sleeve member 105 is due to the fact that it is fastened for common rotation with the input shaft member 101. Therefore, the combination of the input shaft member 101 and the input shaft sleeve member 105 may be understood as an input shaft unit 101,105.

An input torque transmission sleeve member 109 is rotatably mounted on the input shaft sleeve member 105 by a needle bearing 115 and a ball bearing 111. The balls of the ball bearing 111 engage respective concave tracks of both the input shaft sleeve member 105 and the input torque transmission sleeve member 109. A belt pulley 109a is shrunk or press fitted onto the input torque transmission sleeve member 109. A hub member 141 is rotatably mounted on the input torque transmission sleeve member 109 by ball bearings 147a and 147b. The ball bearings 147a,147b engage into concave tracks of both the input torque transmission sleeve member 109 and the hub member 141.

A subunit is established consisting of the components 105, 109,141 and the roller bearings 111,115,147a,147b. This subunit can be manufactured easily by a roller bearing manufacturer. It is to be noted that the roller bearings 115, 111,147a, 147b are made without the usual bearing rings, because the tracks for the roller members are directly shaped in the material of the components 105,109 and 141. This is of high advantage, because by avoiding usual roller bearings the radial dimension of the subunit 105,109,141 can be considerably reduced. Nevertheless, by concentrating the bearing means in locations between the input shaft sleeve member 105 and the hub member 141 with the input torque transmission sleeve member 109 therebetween it is possible to have this unit at a relatively low price from a special manufacturing plant.

It is further to be noted that the input shaft sleeve member 105 is radially supported on a large supporting length by the input shaft member 101 so that one can provide the belt pulley 109a on the side of the gear unit remote from the power generator 106, where it is easily accessible for the belt or other driving means.

The sun wheel 143 is made as a separate part separate from the hub member 141, which is again of high advantage in view of keeping the manufacturing expenses low. This is again true for the sun wheel braking member 141a, which is separate from the hub member 141. The braking member 141a can be made of a less expensive material than the hub member 141 and can be shaped according to'shaping methods which are not readily available for the material to be used for the hub member 141, because of the ball races to be shaped thereon.

The ring wheel support member 121 is shaped integrally with a radially outer circumferential wall 121a and the ring wheel 125 is rotatably fixed thereon by a spline means 121b and secured in axial direction by a spring clip 121c. The housing portion 123 is secured to the circumferential wall 121a by thread means or by press fit or the like with a sealing ring 123a. The braking member 141a is sealingly press-fitted on the hub member 141. The sun wheel 143 is fixed on the hub member 141 by mounting pins 143a.

The outer ring portion 113a of the free wheel 113 is fastened within the ring wheel support member 121 by a spacer member 121d interposed between the ring wheel 125 and the outer ring portion 113a. The clamping rollers of the free wheel 113 are axially secured by a securing disc 113c axially secured by the spacer ring 121d.

The stator housing 181 of the power generator 106 carries the second brake portion 183 by rigid, radial strap means 181a. These strap means 181a are distributed around the periphery of the stator housing 181 and are carried by integrally cast projections 181b of the stator housing 181, which are also distributed around the periphery of the stator housing. Such, air passages 190 are defined. These air passages 190 are in air flow communication with further air passages 181d of the stator housing 181 adjacent the ball bearing 128,128a. Such, a cooling air stream is possible towards or from the cavity 106a of the power generator 106 in spite of the close location of the gear unit 104 with respect to the front wall 181e of the stator housing 181. Further air passages 181f are provided in the stator housing for permitting an uninterrupted air flow from atmosphere to the cavity 106a and back to atmosphere. A fan may be mounted on the input shaft member 101 within the cavity 106a.

The assembling may be made as follows:

The power generator 106 is available with the input shaft member 101 rotatably mounted in the ball bearing 128,128a. The bearing assembly 109,105,141 is provided by a ball bearing manufacturer. The ring wheel support member 121 is combined with the planet wheel carrier 161 including the planet wheels 165 and with the free wheel 113 including the ring member 113a thereof and further with the ring wheel 125 with the spacer member 121d and the securing disc 113c. This subassembly is secured by the spring clip 121c and is closed by the housing portion 123.

The premounted bearing assembly 109,105,141 is combined with the sun wheel braking member 141a and the sun wheel 143 by inserting the mounting pins 143a into bores of the hub member 141. Further, the sealing ring 131 and the belt pulley 109a are mounted onto the sleeve member 109. Hereupon. the premounted unit 121,113,161,165,125,123 is combined with the premounted bearing assembly 109,105,141 by axially approaching these premounted units such that the sun wheel 143 engages the planet wheels 165, the sleeve member 109 engages the planet wheel carrier 161 for common rotation at 161b, and the ring wheel support member 121 is seated on the tail portion 105a of the sleeve member 105. Hereupon, the sleeve member 105 can be slided onto the input shaft member 101 and secured by the nut 103. Then, the cover member 117 may be fixed to the sleeve member 109.

Alternatively, the preassembled gear unit 104 mounted on the sleeve member 105 can be secured for shipping purposes by a bolt member having substantially the form of the input shaft member 101 and a bolt head acting onto the spacer ring 134. This bolt member is secured by the nut 103. The gear unit may then at a later date be mounted on the input shaft member 101 after removing the nut 103 and the bolt member. Finally, the nut 103 is screwed again onto the input shaft member 101, and the cover member 117 is attached. The lubricantmay be filled into the lubricant chamber 142 before or after assembling the gear unit 104 with the power generator 106.

The lubrication system corresponds to the lubrication system of Fig. 3. The oil droplets arriving from the throwing disc 171 through the hole 116 on the circumferential face 105c are scattered against a circumferential face 109d and collected thereon. The circumferential face 109d is divergent so that collected lubricant droplets flow to the left under centrifugal forces. A sill 109e provides a certain volume of lubricant for warranting continuous lubrication of the bearing needles 115. Further, a lubricant is scattered towards the bearing balls 111. Further, lubricant can flow from the divergent circumferential face 109d through a bore 109f radially outwards towards the bearing balls 147a,147b.

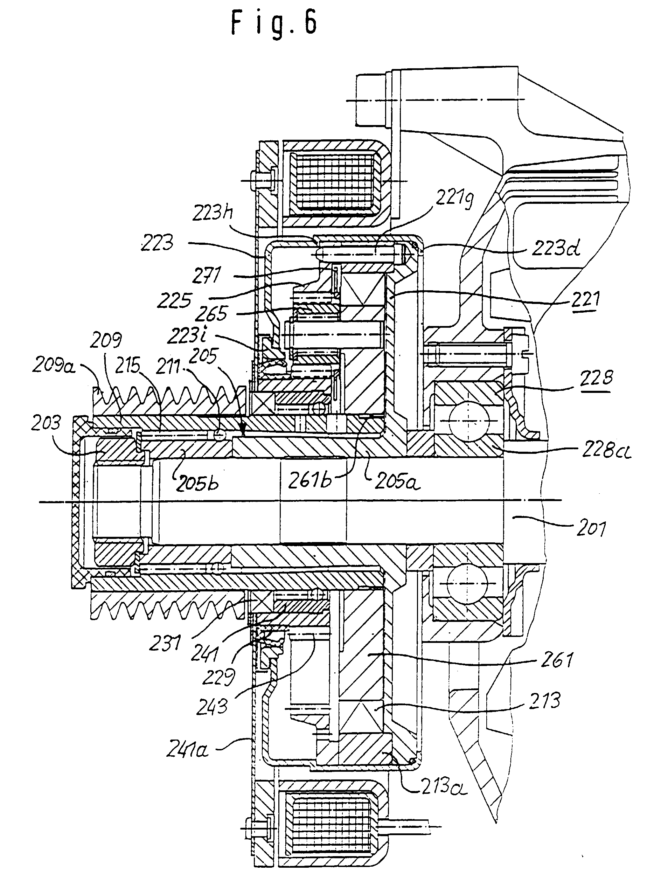

The embodiment of Fig. 6 is very similar to the embodiment of Fig. 5. In this embodiment, the input shaft sleeve unit 205 consists of two sections 205a and 205b. The roller bearings 215 and 211 are located on the sleeve section 205b. Such, the unit 209,205b, 241 to be manufactured from roller bearing steel is further reduced in volume and price. The second sleeve section 205a is integral with the ring wheel support member 221. The sun wheel 243 is fastened to the hub member 241, and the braking member 241a is fastened to the sun wheel 243. The ring wheel 225 is fastened to the ring wheel support member 221 by bolts 221g.

The planet wheel carrier 261, the planet wheels 265, the free wheel 213 with the outer ring member 213a thereof and the ring wheel 225 are inserted from the left-hand side into the ring wheel support member 221 with the outer ring member 213a of the free wheel 213 and the ring wheel 225 being secured therein by bolts 221g against rotation. Hereupon, the housing portion 223 is axially slided on the ring wheel support member 221 from the left-hand side, and sealingly curled at 223d with the ring wheel 225 being applied against a shoulder 223h of the housing portion 223. The housing portion 223 is provided with a sliding ring 223i.

The sun wheel 243 is slided from the right-hand side onto the hub member 241 of the bearing assembly 205b,209,241 and fastened thereon. The braking member 241a is fastend to the sun wheel 243.

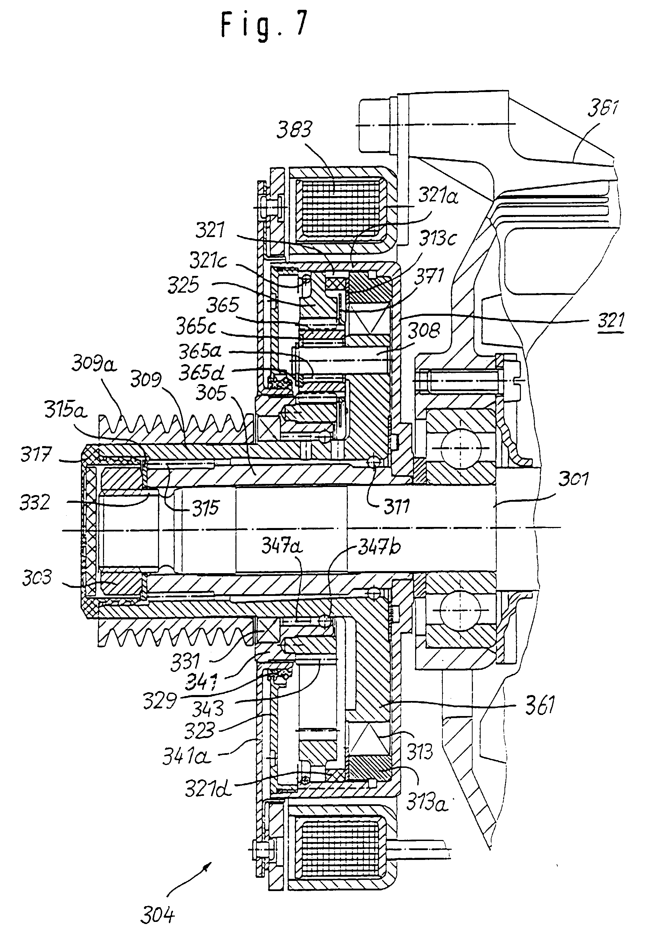

The subunit consisting of the ring wheel support member 221, the sleeve section 205a, the free wheel 213, the planet wheel carrier 261, the planet wheels 265, the ring wheel 225, the housing portion 223 and the sliding ring 223i is combined by axial approach with the unit consisting of the sleeve section 205b, the sleeve member 209, the hub member 241, the sun wheel 243, the braking member 241a, the sealing ring 229, the sealing ring 231 and the belt pulley 209a. Such, the sun wheel 243 enters into engagement with the planet wheels 265, the sealing ring 231 enters into engagement with the sun wheel. 243, the sealing ring 229 enters into engagement with the sliding ring 223i and the sleeve member 209 enters into engagement with the planet wheel carrier 261 at 261b for common rotation. The assembly such obtained can be slided now onto the input shaft member 201 and secured by the nut 203. Alternatively, a preliminary securing may be again made by inserting a bolt member and screwing the nut 203 onto the bolt member. For the rest, the embodiment of Fig. 6 corresponds to the embodiment of Fig. 5. Analogous parts are designated by the same reference numerals as in Fig. 5 increased by 100.
The embodiment of Fig. 7 is similar to the embodiment of Fig. 5. The most important difference is that the planet wheel carrier 361 is integral with the sleeve member 309. This embodiment requires, however, a different assembling method: One takes the ring wheel support member 321,321a with the integrally attached circumferential wall 321a. One inserts in this pot-shaped member 321,321a the outer ring 313a of the free wheel 313. One prepares the bearing unit consisting of the input shaft sleeve member 305 and the input torque transmission sleeve member 309 with the needle bearing 315 and the roller bearing 311 therebetween and with the planet wheel carrier portion 361 integrally cohering with the sleevemember 309 and with the planet wheel bolts 308 inserted into the planet wheel carrier 361. This unit 309,305,361,308 is inserted into the pot-shaped ring wheel support member 321,321a. Hereupon, the clamping rollers of the free wheel 313 are inserted between the planet wheel carrier 361 and the outer ring 313a of the free wheel 313,and the securing disc 313c is applied to the outer ring 313a.

Hereupon, the planet wheels 365 with the conveyor disc 371 are mounted on the bolts 308 without the bearing needles 365a therebetween.

Hereupon, the sun wheel 343 is inserted in the center of the planet wheels 365. Hereupon, the hub member 341 is inserted such as to accommodate the sun wheel 343. Hereupon, the balls 347b are inserted between the hub member 341 and the sleeve member 309 according to usual ball bearing techniques. Hereupon, the needles 347a are inserted between the hub member 341 and the sleeve member 309. Hereupon, the needles 365a can be inserted between the planet wheels 365 and the bolts 308. Hereupon, the planet wheels 365 and the needles 365a are secured by the securing disc 365d. Hereupon, the spacer member 321d is applied to the securing disc 313c, and the ring wheel 325 is inserted into the pot-shaped ring wheel support member 321,321a and is secured by the spring clip 321c. Hereupon, the housing portion 323 with the sealing ring 329 is screwed into the pot-shaped ring wheel support member 321,321a. Hereupon, the braking member 341a is secured on the hub member 341 in sealing engagement with the sealing ring 329. Hereupon, the sealing ring 331 is inserted between the hub member 341 and the sleeve member 309. Hereupon, the belt pulley 309a is shrunk or pressed onto the sleeve member 309. Now, the gear unit 304 is preassembled for being slided onto the input shaft member 301 with the sleeve member 305 being radially seated on the input shaft member 301. Hereupon, the securing disc 315a is applied aginst the left-hand ends of the needles 315, which may be entered between the sleeve members 309 and 305 also in this stage immediately before inserting the securing disc 315a. Hereupon, the nut 303 is screwed onto the external thread 332 of the input shaft member 301, and the cover member 317 is inserted into the sleeve member 309.

It is needless to say that the second brake portion 383 must be fixed to the stator housing 381 before the sleeve member 309 is slided onto the input shaft member 301. For the rest, the components and the operation of the device according to Fig. 7 correspond to the device of Figs. 2 and 3. Analogous parts are designated with the same reference numerals as in Fig. 1 increased by 300.

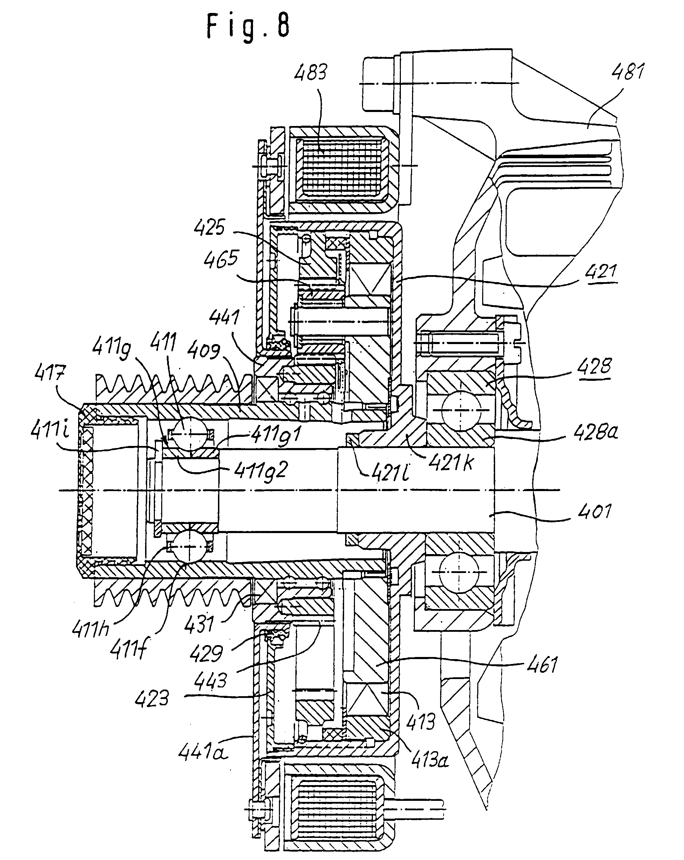

In the embodiment of Fig. 8, the input shaft unit 401 exclusively comprises an input shaft member 401 which is rotatably mounted by the ball bearing 428,428a.

The ring wheel support member 421 is shrunk or pressed on the input shaft member 401 by a hub portion 421k and additionally secured by a securing ring 4211. The input torque transmission sleeve member 409 is rotatably mounted on the input shaft member 401 by a ball bearing 411. The balls of the ball bearing 411 are in rolling engagement with a concave track 411f of the sleeve member 409. Further, the balls of the ball bearing 411 are in rolling engagement with an internal, axially divided bearing ring 411g. The bearing ring 411g consists of two axially adjacent bearing ring portions 411gl and 411g2. The balls of the ball bearing 411 are accommodated by a cage 411h. The internal bearing ring 411g is axially secured by a spring clip 411i on the input shaft member 401.

The gear unit 409,421,461,413,413a,465,425,441,443,423,441a, 431,429 is assembled as described with reference to Fig. 5 with the only difference that the input shaft sleeve member (see 105 in Fig. 5) is missing. This preassembled gear unit is now combined with the input shaft member 401 in pressing or shrinking the hub member 421k onto the input shaft member 401. Hereupon, the securing ring 4211 is also pressed or shrunk onto the input shaft member 401. Hereupon, the bearing ring portion 411gl is pressed onto the input shaft member 401, and the cage member 411h with the balls of the ball bearing 411 is inserted such that the balls of the ball bearing 411 come into rolling engagement with the internal track 411f of the sleeve member 409 and with the track portion of the bearing ring portion 411gl. Hereupon, the other bearing ring portion 411g2 is pressed onto the input shaft member 401 and secured by the spring clip 411i. Now, the cover member 417 can be inserted into the sleeve member 409. It is needless to say that the second brake portion 483 must be fastened to the stator housing 481 before the sleeve member 409 is pressed onto the input shaft member 401, if the braking member 441a has been installed on the hub member 441 before. It is possible also to fasten the braking member 441a in a last step on the hub member 441. In this case, the brake portion 483 can be fastened to the stator housing 481 immediately before this last step.

For the rest, the components and the operation of this device correspond to the device as shown in Figs. 2, 3 and 5. Analogous parts are designated by the same reference numerals as in Fig. 5 increased by 300.

Coming back now to Fig. 5, this Figure shows some further features which are applicable to all embodiments of the invention. These further features are not shown in the other embodiments.

In Fig. 5 the conveyer disc 171 is mounted on the planetary wheel 165. The conveyer disc may be fixed to the external teeth of the planetary wheel 165. For example, one can provide a teeth means along the radial inner circumference of the conveyer disc 171 which correspond to the teeth on the outer circumference of the planetary wheel 165. Such it is easy to center and to fasten the conveyer disc 171 on the planetary wheel 165.

One can further see from Fig. 5 that the conveyer disc 171 is provided with a slot 171a extending radially inwards from the outer circumference of the conveyer disc. A plurality of slots may be distributed along the periphery of the conveyer disc 171. These slots 171a are adapted to pick up lubricant from the lubricant ring 135 when the respective slot 171a immerges into the the lubricant ring.

The lubricant picked up by the slots 171a is to be thrown into the radial opening 116 for lubrication of the roller bearings 111 and 115. The lubricant thrown away by the slots 171a follows a definite trajectory which is dependent on the viscosity of the lubricant. One must take care that this trajectory hits into the opening 116. It is therefore necessary to maintain a definite phase relationship between the movement of the slots 171a and the opening 116. The opening 116 may again be elongate in circumferential direction.

One can further see from Fig. 5 that a fan 195 is non-rotatably mounted onto the input shaft member 101 on the side of the ball bearing means 128, 128a remote from the planetary gear means. With other terms, the fan 195 is located within the cavity 106a defined by the stator housing 106. This fan provides a cooling air flow through the passages 190, the passages 181d and the passages 181f.

## Claims

1. A planetary gear driven power consuming unit (6),
comprising stator means (81) and an input shaft unit (1,3,5) with an axis (A), for driving a driven unit within said stator means (81), said input shaft unit (1,3,5) being rotatably mounted with respect to said stator means (81) about said axis (A) through shaft bearing means (28,28a) and extending axially beyond said shaft bearing means (28,28a) towards a free end of said input shaft unit (1,3,5) and further comprising planetary gear means (25,43,61,63,65) including a sun wheel (43), a ring wheel (25), a planetary wheel carrier (61,63) and at least one planetary wheel (65) on said planetary wheel carrier (61,63), and further comprising free wheel means (13), a gear change brake unit (22) controllable by external control means (24) and a lubricant chamber (42) for receiving a liquid lubricant (35), an input torque transmission unit (9) of said planetary gear means (25,43,61,65) being in driving connection with said planetary wheel carrier (61,63), said ring wheel (25) being connected for common rotation with said input shaft unit (1,3,5), said gear change brake unit (22) being adapted for selectively either preventing a rotation of said sun wheel (43) with respect to said stator means (81) or releasing said sun wheel (43) for rotation about said axis (A) with respect to said stator means (81), said free wheel means (13) permitting rotation of said input shaft unit (1,3,5) with respect to said input torque transmission unit (9) in a predetermined sense of rotation in response to said gear change brake unit (22) preventing said sun wheel (43) from rotation with respect to said stator means (81), said free wheel means (13) transmitting an input torque from said input torque transmission unit (9) to said input shaft unit (1,3,5) in said predetermined sense of rotation in response to said gear change brake unit (22) releasing said sun wheel (43) for rotation about said axis (A) with respect to said stator means (81), said sun wheel (43) being hollow with a central passage therethrough, with a first axial end portion nearer to said shaft bearing means (28,28a) and with a second axial end portion nearer to said free end, said input torque transmission unit (9) extending through said hollow sun wheel (43) for transmitting an input torque from drive means engagement means (9a) located adjacent a second end portion side of said sun wheel (43) to a planetary wheel carrier portion (61) located adjacent a first end portion side of said sun wheel (43), said second axial end portion of said sun wheel (43) being connected for common rotation about said axis (A) with a sun wheel braking member (41a), said sun wheel braking member (41a) carrying a first brake portion (87) of said gear change brake unit (22), a second brake portion (83) of said gear change brake unit (22) being operationally fastened against rotation about said axis (A) with respect to said stator means (81), a ring wheel support member (21) connecting said ring wheel (25) with said input shaft unit (1,3,5) for common rotation being located on a side of said planetary wheel carrier portion (61) axially remote from said sun wheel (43),
characterized in that
said input torque transmission unit (9) surrounds said input shaft unit (1,3,5) along an axial overlapping path and that said input torque transmission unit (9) is rotatably mounted on and radially supported by said input shaft unit (1,3,5) within said axial overlapping path.

2. A power consuming unit as set forth in claim 1,
said input shaft unit (1,3,5) comprising an input shaft member (1) rotatably mounted by said shaft bearing means (28,28a) and a prolongation unit (5), said input shaft member (1) and said prolongation unit (5) being connected in axial alignment by connection means (3, 28a), said connection means (3,28a) being resistant to a bending torque exerted onto said prolongation unit (5) about a bending axis perpendicular to said axis (A).

3. A power consuming unit as set forth in claim 2,
said prolongation unit (5) comprising a prolongation sleeve (5), said connection means (3,28a) comprising a tensioning member (3) within said prolongation sleeve (5), said tensioning member (3) being in screw connection with said input shaft member (1) and axially pressing said prolongation sleeve (5) against abutment face means (28a) axially fixed with respect to said input shaft member (1).

4. A power consuming unit as set forth in claim 2 or 3,
said input torque transmission unit (9) being rotatably mounted on said prolongation unit (5).

5. A power consuming unit as set forth in claim 3,
said input torque transmission unit (9) being rotatably mounted on said prolongation sleeve (5).

6. A power consuming unit as set forth in one of claims 2 to 5, said ring wheel support member (21) being fastened for common rotation with said input shaft unit (1,3,5) by axially clamping said ring wheel support member (21) between said input shaft member (1) and said prolongation unit (5).

7. A power consuming unit as set forth in claim 1,
said input shaft unit (101,103,105) comprising an input shaft member (101) rotatably mounted by said shaft bearing means (128,128a) and input shaft sleeve means (105) surrounding said input shaft member (101), said input shaft sleeve means (105) being fastened on said input shaft member (101), said input torque transmission unit (109) being rotatably mounted on said input shaft sleeve means (105).

8. A power consuming unit as set forth in claim 7,
said input shaft member (101) being provided adjacent said free end of said input shaft unit (101,103,105) with a securing member (103), said securing member (103) acting onto an adjacent end of said input shaft sleeve means (105) and pressing said input shaft sleeve means (105) against abutment face means (128a) fixed with respect to said input shaft member (101).

9. A power consuming unit as set forth in claim 8,
said securing member (103) being a nut screwed onto external thread means (132) of said input shaft member (101), said external thread means (132) extending axially beyond said input shaft sleeve means (105).

10. A power consuming unit as set forth in one of claims 7 to 9, said input shaft sleeve means (105) comprising one single input shaft sleeve member (105) extending in axial direction substantially between said free end of said input shaft unit (101,103,105) and said ring wheel support member (121).

11. A power consuming unit as set forth in one of claims 7 to 9, said input shaft sleeve means (205) comprising a first input shaft sleeve section (205a) nearer to said shaft bearing means (228,228a) and a second input shaft sleeve section nearer to said free end of said input shaft unit (201,203,205), said input torque transmission unit (209) being rotatably mounted on said second input shaft sleeve section (205b).

12. A power consuming unit as set forth in one of claims 7 to 11, said ring wheel support member (121) being fastened to said input shaft unit (101) through or by said input shaft sleeve means (105).

13. A power consuming unit as set forth in claim 12,
said ring wheel support member (121) being axially clamped between said input shaft sleeve means (105) and abutment face means (128a) fixed with respect to said input shaft member (101).

14. A power consuming unit as set forth in claim 12,
said ring wheel support member (121) being centered on a tail section (105a) reduced in diameter of said input shaft sleeve means (105).

15. A power consuming unit as set forth in claim 14,
said ring wheel support member (121) being axially clamped between a shoulder face (105b) of said tail section (105a) of said input shaft sleeve means (105) and abutment face means (128a) fixed with respect to said input shaft member (101).

16. A power consuming unit as set forth in claim 12,
said ring wheel support member (221) being integral with at least an input shaft section (205a) of said input shaft sleeve means (205).

17. A power consuming unit as set forth in claim 1,
said input shaft unit (401) comprising an input shaft member (401) rotatably mounted by said shaft bearing means (428,428a) and extending up to said free end of said input shaft unit, said input torque transmission unit (409) being rotatably mounted on said input shaft member (401), said ring wheel support member (421) being axially and angularly fixed with respect to said input shaft member (401).

18. A power consuming unit as set forth in claim 17,
said ring wheel support member (421) being press-fitted on said input shaft member (401).

19. A power consuming unit as set forth in one of claims 1 to 18, said input torque transmission unit (9) comprising an input torque transmission sleeve (9) extending in axial direction between said planetary wheel carrier portion and said drive means engagement means (9a).

20. A power consuming unit as set forth in claim 19,
said drive means engagement means (109a) being provided by a drive means engagement member (109a) surrounding said input torque transmission sleeve (109) and being fastened thereon for common rotation therewith.

21. A power consuming unit as set forth in claim 20,
said drive means engagement means (9a) being integrally shaped on said input torque transmission sleeve (9).

22. A power consuming unit as set forth in one of claims 1 to 21, said drive means engagement means (9a) being shaped as a belt pulley.

23. A power consuming unit as set forth in one of claims 1 to 22, said input torque transmission unit (9) being rotatably mounted on said input shaft unit (1,3,5) in using roller bearing means (11,15) such as ball bearing means (11) and/or needle bearing means (15).

24. A power consuming unit as set forth in claim 23,
at least one of said roller bearing means (11,15) having roller members such as balls or needles in direct rolling contact with a circumferential rolling track (11s,11t,15s,15t) shaped on at least one of said input shaft unit (1,3,5) and said input torque transmission unit (9).

25. A power consuming unit as set forth in claim 24,
said roller members being in rolling contact with a track (11t,15t) shaped on input shaft sleeve means (5) of said input shaft unit (1,3,5).

26. A power consuming unit as set forth in claim 24 or 25,
said roller members being in rolling contact with a track (lls,15s) shaped on an input torque transmission sleeve (9) of said input torque transmission unit (9).

27. A power consuming unit as set forth in one of claims 1 to 26, said free wheel means (13) being located radially between an input torque transmission sleeve (9) of said input torque transmission unit (9) and said input shaft unit (1,3,5).

28. A power consuming unit as set forth in one of claims 1 to 26, said free wheel means (13) being provided operationally between said planetary wheel carrier portion (61) and said ring wheel support member (21).

29. A power consuming unit as set forth in claim 28,
said free wheel means (13) being located between a radially outwards directed circumferential face of said planetary wheel carrier portion (61) and a radially inwards directed circumferential face connected for common rotation with said ring wheel support member (21).

30. A power consuming unit as set forth in one of claims 1 to 29, at least one of said sun wheel (43) and said sun wheel braking member (41a) being rotatably mounted on said input torque transmission unit (9) by roller bearing means (47), such as ball bearing means or needle bearing means, at least part of the roller members of said roller bearing means (47) being in rolling engagement with a circumferential track (47t,47s) shaped on one of an input torque transmission sleeve (9) of said input torque transmission unit (9), said sun wheel (43) and said sun wheel braking member (41a).

31. A power consuming unit as set forth in one of claims 1 to 30, at least one of said sun wheel braking member (41a) and said sun wheel (43) comprising a hub member (41) rotatably mounted on said input torque transmission unit (9).

32. A power consuming unit as set forth in claim 31,
said hub member (41) being rotatably mounted on an input torque transmission sleeve (9) of said input torque transmission unit (9) by roller bearing means (47) such as ball bearing means or needle bearing means, said roller bearing means comprising roller members in rolling engagement with respective tracks (47t,47s) shaped on said input torque transmission sleeve (9) and said hub member (41).

33. A power consuming unit as set forth in one of claims 1 to 32, at least one of said sun wheel (143) and said sun wheel braking member (141a) being manufactured separately from and being fastened to a common hub member (141) in respective operational positions.

34. A power consuming unit as set forth in one of claims 1 to 33, said sun wheel braking member (141a) being shaped as a flange member (141a) following a plane substantially orthogonal to said axis (A).

35. A power consuming unit as set forth in one of claims 1 to 34, said first brake portion (187) being axially movable with respect to said sun wheel braking member (141a).

36. A power consuming unit as set forth in one of claims 1 to 35, said second brake portion (183) of said gear change brake unit (122) and said planetary gear means (143,161,108,165,125) having a common plane orthogonal to said axis (A).

37. A power consuming unit as set forth in one of claims 1 to 36, said second brake portion (183) of said gear change brake unit (122) being substantially within an axial extent of an assembly comprising said planetary gear means (143,161,108,165,125), said free wheel means (113), said ring wheel support member (121) and said lubricant chamber (142).

38. A power consuming unit as set forth in one of claims 1 to 37, said lubricant chamber (142) being confined by first side wall means (121) located on the first end portion side of said sun wheel (143) and second side wall means (123) located on the second end portion side of the sun wheel (143), said first and second side wall means (121,123) being axially connected by circumferential chamber wall means (121a), said second brake portion (183) surroundingly overlapping said circumferential chamber wall means (121a) in axial direction.

39. A power consuming unit as set forth in claim 38,
said first side wall means (121) comprising said ring wheel support member (121).

40. A power consuming unit as set forth in claim 38 or 39,
said circumferential chamber wall means (121a) being integral with at least one of said first side wall means (121) and said second side wall means (123).

41. A power consuming unit as set forth in one of claims 38 to 40, said second side wall means (123) being sealed with respect to a hub member (141) of at least one of said sun wheel (143) and said sun wheel braking member (141a) by first rotation permitting sealing means (129), said hub member (141) being sealed with respect to said input torque transmission unit (109) by second rotation permitting sealing means (131).

42. A power consuming unit as set forth in one of claims 38 to 41, said first side wall means (121) being sealed with respect to said input shaft unit (101,103,105).

43. A power consuming unit as set forth in one of claims 38 to 42, said first side wall means (121) being sealed with respect to input shaft sleeve means (105) of said input shaft unit (101,103,105), said input shaft sleeve means (105) being sealed with respect to an input shaft member of said input shaft unit (101,103,105).

44. A power consuming unit as set forth in one of claims 1 to 43, said input torque transmission unit (109) being sealingly closed adjacent an end thereof remote from said shaft bearing means (128,128a), said end of said input shaft unit (101,103,105) being located inside said sealingly closed end of said input torque transmission unit (109).

45. A power consuming unit as set forth in one of claims 1 to 44, said lubricant chamber (142) containing a volume of lubricant independent of external operational lubricant supply means.

46. A power consuming unit as set forth in one of claims 1 to 45, said lubricant chamber (42) being an annular chamber about said axis (A), at least one of said planetary gear means (43,61,63,8,65,25) and said free wheel means (13) being housed within said annular lubricant chamber (42), said annular lubricant chamber (42) being rotatable about said axis (A) in response to rotation of said input torque transmission unit (9), said liquid lubricant in said annular lubricant chamber (42) forming a lubricant ring (35) adjacent circumferential chamber wall means of said annular lubricant chamber (42) in response to centrifugal forces, lubricant conveying means (19,44,16) being located within said annular lubricant chamber (42) for conveying lubricant from said lubricant ring (35) towards locations (47,11,15) requiring lubrication.

47. A power consuming unit as set forth in claim 46,
said lubricant ring (35) being in operation radially outside of rotatable sealing means (29,31) of said lubricant chamber (42).

48. A power consuming unit as set forth in claim 46 or 47,
said lubricant conveying means being adapted to direct a lubricant beam or lubricant droplets towards at least one substantially radial opening (16) extending through an input torque transmission sleeve (9) of said input torque transmission unit (9) such that said lubricant beam or said lubricant droplets, respectively, can pass through said at least one opening (16) into an interspace between said input torque transmission sleeve (9) and said input shaft unit (1,3,5) for further distribution towards bearing means (15,11) provided within said interspace and used for rotatably mounting said input torque transmission sleeve (9) on said input shaft unit (1,3,5).

49. A power consuming unit as set forth in claim 48,
said at least one radially extending opening (16) being of elongate cross section in circumferential direction.

50. A power consuming unit as set forth in one of claims 46 to 49, said lubricant conveying means (171,116) directing a lubricant beam or lubricant droplets against scattering face means (105c).

51. A power consuming unit as set forth in one of claims 46 to 50, said lubricant conveying means (171,116) comprising an internal circumferential face (109d) of an input torque transmission sleeve (109) of said input torque transmission unit (109), said internal circumferential face (109d) being divergent in axial direction, lubricant allotting means (105c) being allocated to said divergent circumferential face (109d) such that lubricant received by said divergent circumferential face (109d) flows along said divergent circumferential face (109d) in axial direction under the influence of centrifugal forces.

52. A power consuming unit as set forth in claim 51,
said divergent circumferential face (109d) being axially confined by a radially inwards directed sill (109e).

53. A power consuming unit as set forth in claim 51 or 52,
said input torque transmission sleeve (109) being provided with at least one radially directed perforation (109f) permitting lubricant flow therethrough in radially outwards direction starting from said divergent circumferential face (109d).

54. A power consuming unit as set forth in one of claims 46 to 53, said lubricant conveying means (19,44,16) comprising a lubricant pick-up tube (19) having a radially outer end (18) entering into said lubricant ring (35) and having pick-up means (18) directed in substantially circumferential direction about said axis (A), said pick-up tube (19) being rotatable with respect to said lubricant chamber (42).

55. A power consuming unit as set forth in claim 54,
said lubricant chamber (42) being confined by a chamber housing (40) mounted for common rotation with said ring wheel (25), said pick-up tube (19) being connected for common rotation with said sun wheel (43).

56. A power consuming unit as set forth in claim 54,
said lubricant chamber (42) being confined by a chamber housing (40), said chamber housing (40) being mounted for common rotation with said ring wheel (25), said pick-up tube (19) being mounted for common rotation with said planetary wheel carrier (61), said pick-up tube (19) being at least partially located in a space layer orthogonal with respect to said axis (A) and containing said at least one planetary wheel (65).

57. A power consuming unit as set forth in one of claims 46 to 53,
said conveying means (171,116) comprising at least one conveyer disc (171) mounted for common rotation with said at least one planetary wheel (165), said conveyer disc (171) immerging with at least a respective radially outer circumferential portion thereof into said lubricant ring and being directed with a respective radially inner circumferential portion towards a lubricant droplet receiving location (116), said respective radially outer circumferential portion being wetted by said lubricant when immerging into said lubricant ring and throwing droplets towards said droplet receiving location (116) when arriving at a position adjacent said droplet receiving location (116) during movement of the planetary wheel (165).

58. A power consuming unit as set forth in claim 57,
said conveyer disc (171) cooperating with a radial opening (116) extending through an input torque transmission sleeve (109) of said input torque transmission unit (109).

59. A power consuming unit as set forth in one of claims 1 to 58, said free wheel means (113) being at least partially immerged into a lubricant ring (35) within said lubricant chamber (42).

60. A power consuming unit as set forth in one of claims 1 to 59, said ring wheel (25) having radially inner teeth means, said teeth means being at least partially immerged into a lubricant ring (35) within said lubricant chamber (42).

61. A power consuming unit as set forth in one of claims 1 to 60, said ring wheel (25) being fastened with respect to said lubricant chamber (42).

62. A power consuming unit as set forth in one of claims 1 to 61, said input torque transmission unit (9), said planetary gear means (43,61,63,65,25) and said free wheel means (13) being at rest with respect to said input shaft unit (1,3,5), when said input shaft unit (1,3,5) is directly driven from said input torque transmission unit (9) through said free wheel means (13).

63. A power consuming unit as set forth in one of claims 1 to 62, said second brake portion (83) being supported through brake portion support means (85) by said stator means (81).

64. A power consuming unit as set forth in claim 63,
said stator means (181) comprising an end wall (181e) ajacent said shaft bearing means (128,128a), said end wall (181e) being provided with cooling air openings (181d), said cooling air openings (181d) being open to the surrounding atmosphere through air passages (190) provided or left by said brake portion support means (181a).

65. A power consuming unit as set forth in one of claims 1 to 64, said power consuming unit (6) being an electric power generator.

66. A power consuming unit as set forth in one of claims 1 to 65, said power consuming unit (6) being an auxiliary power consuming unit of a motor vehicle such as a power generator, an oil pump, a compressor or the like.

67. A power consuming unit as set forth in one of claims 1 to 66, said gear change brake unit (22) being an electro-magnetically controlled brake unit (22).

68. A power consuming unit as set forth in one of claims 1 to 67, said gear change brake unit (22) being a frictional brake unit permitting a smooth reduction of the r.p.m. of said sun wheel (43), possibly down to standstill, with respect to said stator means (81).

69. A power consuming unit as set forth in claim 67 or 68,
said second brake portion (83) of said gear change brake unit (22) comprising an electro-magnetic coil unit (83) and said first portion of said gear change brake unit (22) comprising an axially movable armature (87).

70. A power consuming unit as set forth in claim 69,
said electro-magnetic coil unit (83) being of annular shape and arranged in substantially coaxial position around said planetary gear means (43,61,63,65,25) and having a common plane with said planetary gear means.

71. A power consuming unit as set forth in claim 70,
said planetary gear means (143,161,108,165,125), said lubricant chamber (142), said gear change brake unit (122) and said sun wheel braking member (141a) having a flat virtual enveloping disc, said driving means engagement means (109a) having a virtual enveloping cylinder projecting from a side wall of said flat virtual enveloping disc remote from said shaft bearing means (128,128a), said virtual enveloping cylinder having a diameter considerably smaller than the diameter of said flat virtual enveloping disc.

72. A power consuming unit as set forth in claim 71,
the axial width of said virtual flat enveloping disc substantially corresponding to the sum of individual axial dimensions of said sun wheel (143), said sun wheel braking member (141a), said planetary wheel carrier portion (161), said ring wheel support member (121) and a side wall (123) of said lubricant chamber (142) remote from said ring wheel support member (121).

73. A power consuming unit as set forth in claim 72,
the axial width of said virtual flat enveloping disc being less than 135 %, preferably less than 130 %, of said sum.

74. A power consuming unit as set forth in one of claims 71 to 73, the diameter of said virtual enveloping cylinder being less than 40 % of the diameter of said virtual flat enveloping disc.

75. A power consuming unit as set forth in claim 74,
the diameter of said virtual enveloping cylinder being less than 30 % of the diameter of said flat virtual enveloping disc.

76. A power consuming unit as set forth in one of claims 71 to 75, the diameter of said virtual flat enveloping disc being less than 9 times, preferably less than 8,5 times the diameter of said input shaft unit (1,3,5) as measured axially inside said shaft bearing means (128, 128a).

77. A power consuming unit as set forth in one of claims 71 to 76, the axial width of said virtual enveloping cylinder corresponding substantially to the width of a belt pulley.

78. A power consuming unit as set forth in one of claims 71 to 77, the diameter of said virtual enveloping cylinder being less than 3 times the diamter of said input shaft unit as measured inside said shaft bearing means (128,128a).

79. A power consuming unit as set forth in one of claims 1 to 78, said planetary gear means (43,61,63,65,25) providing a first transmission ratio of 1:1 and a second transmission ratio of less than 1,70:1 between said input shaft unit (1,3,5) and said input torque transmission unit (9) with the input shaft unit (1,3,5) having the higher r.p.m., respectively.

80. A power consuming unit as set forth in one of claims 1 to 79, said gear change braking unit (22) being controlled by a control unit (24) in response to the r.p.m. of the input torque transmission unit (9) such that the r.p.m. of said input shaft unit (1,3,5) is increased with respect to the r.p.m. of the input torque transmission unit (9) when the r.p.m. of the input torque transmission unit (9) is reduced below a predetermined r.p.m. value.

81. A power consuming unit as set forth in claim 80,
said increase of the r.p.m. of said input shaft unit (1,3,5) beyond said r.p.m. of said input torque transmission unit (9) in response to decrease of said input torque transmission unit (9) below said predetermined r.p.m. value being additionally responsive to a signal (24b) representing a need for r.p.m. increase of said power consuming unit (6).

82. A power consuming unit as set forth in one of claims 1 to 81, said input shaft unit (1,3,5) having a section extending beyond said shaft bearing means (28,28a) of said stator means (81) towards said free end, said section having no further radial support from said stator means.

83. A planetary gear driven power consuming unit as set forth in one of claims 1 to 82,
said gear change brake unit (22) being of annular shape and surrounding said ring wheel (25) with a common plane orthogonal to said axis (A) containing said ring wheel (25) and said gear change brake unit (22),
said gear change brake unit (22) comprising an annular coil (83) surrounding said ring wheel (25) and an armature (87) movable in axial direction with respect to said electro-magnetical coil (83).

84. A planetary gear driven power consuming unit (6) as set forth in one of claims 1 to 83,
said sun wheel (43), said planetary wheel carrier (61,63) with at least one planetary wheel (65), said ring wheel (25), said free wheel means (13), said lubricant chamber (42) and at least a part of said gear change brake unit (22), being mounted in coaxial arrangement about an axis (A) on a torque transmitting sleeve unit (9).

85. A planetary gear driven power consuming unit as set forth in one of claims 46 to 84,
said lubricant conveying means comprising a conveyer disc (171) mounted on said planetary wheel (165) for common rotation therewith, said conveyer disc (171) immerging with a respective radially outer portion thereof into said lubricant ring and throwing lubricant radially inwards from said lubricant ring (135).

86. A planetary gear driven power consuming unit as set forth in one of claims 46 to 85,
said input torque transmission unit (9) comprising a torque transmitting sleeve unit (9), said torque transmitting sleeve unit (9) being provided with bearing means (11,15) within a central passage thereof for rotatably mounting said torque transmitting sleeve unit (9) on said input shaft unit (1,3,5) surrounded by said sleeve unit (9),
said sleeve unit (9) comprising at least one radial opening therethrough for admitting lubricant from said lubricant ring (35) towards said bearing means (11,15).

87. A planetary gear driven power consuming unit as set forth in one of claims 46 to 86,
said lubricant conveying means comprising a conveyer disc (171) mounted on said planetary wheel (165) for common rotation therewith, said conveyer disc (171) immerging with a respective radially outer portion thereof into said lubricant ring and throwing lubricant radially inwards from said lubricant ring (135), said input torque transmission unit (9) comprising a torque transmitting sleeve unit (109), said torque transmitting sleeve unit (109) being provided with bearing means (111, 115) within a central passage thereof for rotatably mounting said torque transmitting sleeve unit (109) on said input shaft unit (101,103,105) surrounded by said sleeve unit (109), said sleeve unit (109) comprising at least one radial opening (116) therethrough for admitting lubricant from said lubricant ring towards said bearing means (111,115), said conveyer disc (171) being provided adjacent its periphery with at least one lubricant pick-up means (171a), for example a radial lubricant pick-up slot (171a), in a predetermined location along said periphery, said radial opening (116) being also located in a predetermined location along the circumference of said sleeve unit (109), said predetermined locations of said lubricant pick-up means (171a) and
said radial opening (116) being selected such in consideration of a planetary movement of said conveyer disc (171) with respect to said torque transmitting sleeve unit (109) that lubricant from said lubricant pick-up means (171a) being thrown in radial inwards direction by said lubricant pick-up means (171a) hits said opening (116), when said lubricant pick-up means (171a) is near to said torque transmitting sleeve unit (109).

88. A planetary gear driven power consuming unit as set forth in one of claims 1 to 87,
said input torque transmission unit (9) comprising a torque transmitting bearing sleeve (9) surrounding said input shaft unit (1,3,5) and rotatably mounted thereon by roller bearing means (11,15) and a torque transmitting hub member (41) surrounding said torque transmitting bearing sleeve (9) and rotatably mounted thereon by further roller bearing means (47), at least one of said roller bearing means (11,15) and said further roller bearing means (47) comprising roller track means (11s,11t,15s,15t,47s,47t) shaped on respective ones of said input shaft unit (1,3,5), said torque transmitting bearing sleeve (9) and said torque transmitting hub member (41).

89. A planetary gear driven power consuming unit as set forth in claim 88,
said input shaft unit (1,3,5) comprising a further bearing sleeve (5) adapted for being non-rotatably mounted on a shaft member (1) of said input shaft unit (1,3,5), said torque transmitting bearing sleeve (9) being rotatably mounted by said roller bearing means (11,15) on said further bearing sleeve (5).

90. A planetary gear driven power consuming unit as set forth in claim 88 or 89,
at least one of said bearing means (11) and said further bearing means (47) comprising ball-shaped roller members engaging concave bearing track means (lls,llt,47s,47t) in respective ones of said input shaft unit (1,3,5),
said torque transmitting bearing sleeve (9) and said torque transmitting hub member (41) such as to inseparably fix at least two of said input shaft unit (1,3,5),
said torque transmitting bearing sleeve (9) and said torque transmitting hub member (41) with respect to each other in axial direction.

91. A planetary gear driven power consuming unit (6) as set forth in one of claims 1 to 90,
characterized in that said power consuming unit (6) is an electric power generator (6).

92. A planetary gear driven power consuming unit as set forth in claim 91,
said input shaft unit (101,103,105) being provided with a cooling fan (195) mounted on said input shaft unit (101,103,105) for common rotation therewith, said cooling fan (195) being located on said input shaft unit (101, 103,105) on a side of said shaft bearing means (128,128a) remote from said free end (101a).

93. A planetary gear driven power consuming unit as set forth in claim 92,
said stator means (181) comprising a stator housing (181),
said stator housing (181) having an end wall (181e) axially adjacent said input shaft bearing means (128, 128a), said end wall (181e) being provided with cooling air passage means (181d) radially adjacent said shaft bearing means (128,128a), said second brake portion (183) being fastened to said stator housing (181) adjacent said end wall (181e) by second brake portion fastening means (181a,181b), said second brake portion fastening means (181a,181b) providing further cooling air passage means (190), said cooling fan (195) being provided within said stator housing (181) and being adapted to provide a cooling air stream through said cooling air passage means (181d) of said end wall (181e) and said further cooling air passage means (190).

94. A method of assembling a planetary gear driven power consuming unit, said power consuming unit (6),
comprising stator means (81) and an input shaft unit (1,3,5) with an axis (A), for driving a driven unit within said stator means (81), said input shaft unit (1,3,5) being rotatably mounted with respect to said stator means (81) about said axis (A) through shaft bearing means (28,28a) and extending axially beyond said shaft bearing means (28,28a) towards a free end of said input shaft unit (1,3,5) and further comprising planetary gear means (25,43,61,63,65) including a sun wheel (43), a ring wheel (25), a planetary wheel carrier (61,63) and at least one planetary wheel (65) on said planetary wheel carrier (61,63), and further comprising free wheel means (13), a gear change brake unit (22) controllable by external control means (24) and a lubricant chamber (42) for receiving a liquid lubricant (35), an input torque transmission unit (9) of said planetary gear means (25,43,61,65) being in driving connection with said planetary wheel carrier (61, 63), said ring wheel (25) being connected for common rotation with said input shaft unit (1,3,5), said gear change brake unit (22) being adapted for selectively either preventing a rotation of said sun wheel (43) with respect to said stator means (81) or releasing said sun wheel (43) for rotation about said axis (A) with respect to said stator means (81), said free wheel means (13) permitting rotation of said input shaft unit (1,3,5) with respect to said input torque transmission unit (9) in a predetermined sense of rotation in response to said gear change brake unit (22) preventing said sun wheel (43) from rotation with respect to said stator means (81), said free wheel means (13) transmitting an input torque from said input torque transmission unit (9) to said input shaft unit (1,3,5) in said predetermined sense of rotation in response to said gear change brake unit (22) releasing said sun wheel (43) for rotation about said axis (A) with respect to said stator means (81), said sun wheel (43) being hollow with a central passage therethrough, with a first axial end portion nearer to said shaft bearing means (28, 28a) and with a second axial end portion nearer to said free end, said input torque transmission unit (9) extending through said hollow sun wheel (43) for transmitting an input torque from drive means engagement means (9a)located adjacent a second end portion side of said sun wheel (43) to a planetary wheel carrier portion (61) located adjacent a first end portion side of said sun wheel (43), said second axial end portion of said sun wheel (43) being connected for common rotation about said axis (A) with a sun wheel braking member (41a), said sun wheel braking member (41a) carrying a first brake portion (87) of said gear change brake unit (22), a second brake portion (83) of said gear change brake unit (22) being operationally fastened against rotation about said axis (A) with respect to said stator means (81), a ring wheel support member (21) connecting said ring wheel (25) with said input shaft unit (1,3,5) for common rotation being located on a side of said planetary wheel carrier portion (61) axially remote from said sun wheel (43), said input torque transmission unit (9) surrounding said input shaft unit (1,3,5) along an axial overlapping path, said input torque transmission unit (9) being rotatably mounted on and radially supported by said input shaft unit (1,3,5) within said axial overlapping path,
said method being characterized by preassembling at least said sun wheel (43), said planetary wheel carrier (61,63),
said planetary wheel (65), said ring wheel (25), said free wheel means (13) and said lubricant chamber (42) on said input torque transmission unit (9) and hereupon rotatably mounting said input torque transmission unit (9) on an input shaft member (1) of said input shaft unit (1,3,5).

95. A method of assembling as set forth in claim 94,
said preassembling further comprising rotatably mounting said input torque transmission unit (9) on an input shaft sleeve unit (5) of said input shaft unit (1,3,5),
said input shaft sleeve unit (5) being subsequent to said preassembling non-rotatably mounted on said input shaft member (1).

96. A preassembled gear unit of a planetary gear driven power consuming unit as set forth in one of claims 1 to 93,
comprising as components thereof at least said input torque transmission unit (9), said planetary gear means (43,25,61,63,65), said free wheel means (13), said sun wheel braking member (41a), said ring wheel support member (21), said lubricant chamber (42) and said input torque transmission unit (9), in relative operational positions substantially corresponding to their relative operational positions within the completed planetary gear driven power consuming unit (6), said ring wheel support member (21) being adapted for being drivingly fastened to an input shaft member (1) rotatably mounted with respect to said stator means (81) by said shaft bearing means (28,28a).

97. The preassembled gear unit as set forth in claim 96,
further comprising a prolongation unit (5) adapted to be non-rotatably fastened to said input shaft member (1) in prolongation alignment thereto, said prolongation unit (5) being rotatably mounted with respect to said input torque transmission unit (9).

98. The preassembled gear unit as set forth in claim 96,
further comprising input shaft sleeve means (105) adapted to be non-rotatably fastened to said input shaft member (101) in surrounding relationship thereto,
said input shaft sleeve means (105) being rotatably mounted with respect to said input torque transmission unit (109).

99. The preassembled gear unit as set forth in one of claims 96 to 98,
said components being secured in preassembled condition by releasable securing means.

100. The preassembled gear unit as set forth in one of claims 96 to 99,
said lubricant chamber (42) being filled with a volume of liquid lubricant.

101. A group of preassembled components of a planetary gear driven power consuming unit in accordance with claim 1 and possibly comprising features of one of claims 2 to 93,
comprising stator means (81) and an input shaft unit with an axis (A) for driving a driven unit (2) within said stator means, said input shaft unit (1,3,5) being rotatably mounted with respect to said stator means (81) about said axis (A) through shaft bearing means (28,28a) and extending towards a free end of said input shaft unit (1,3,5), and further comprising planetary gear means (25,43,61,63,65) including a sun wheel (43), a ring wheel (25), a planetary wheel carrier (61,63) and at least one planetary wheel (65) on said planetary wheel carrier (61,63), and further comprising free wheel means (13), a gear change brake unit (22) controllable by external control means (24) and a lubricant chamber (42) for receiving a liquid lubricant (35), an input torque transmission unit (9) of said planetary gear means being in driving connection with said planetary wheel carrier (61,63), said ring wheel (25) being connected for common rotation with said input shaft unit (1,3,5), said gear change brake unit (22) being adapted for selectively either preventing a rotation of said sun wheel (43) with respect to said stator means (81) or releasing said sun wheel (43) for rotation about said axis (A) with respect to said stator means (81), said free wheel means (13) permitting rotation of said input shaft unit (1,3,5) with respect to said input torque transmission unit (9) in a predetermined sense of rotation in response to said gear change brake unit (22) preventing said sun wheel (43) from rotation with respect to said stator means (81),
said free wheel means (13) transmitting an input torque from said input torque transmission unit (9) to said input shaft unit (1,3,5) in said predetermined sense of rotation in response to said gear change brake unit (22) releasing said sun wheel (43) for rotation about said axis (A) with respect to said stator means (81), said sun wheel (43) being hollow with a central passage therethrough, with a first axial end portion nearer to said shaft bearing means (28,28a) and with a second axial end portion nearer to said free end,
said input torque transmission unit (9) extending through said hollow sun wheel (43) for transmitting an input torque from drive means engagement means (9a) located adjacent a second end portion side of said sun wheel (43) to a planetary wheel carrier portion (61) located adjacent a first end portion side of said sun wheel (43),
said second axial end portion of said sun wheel (43) being connected for common rotation about said axis (A) with a sun wheel braking member (41a), said sun wheel braking member (41a) carrying a first brake portion (87) of said gear change brake unit (22), a second brake portion (83) of said gear change brake unit (22) being operationally fastened against rotation about said axis (A) with respect to said stator means (81), a ring wheel support member (21) connecting said ring wheel (25) with said input shaft unit (1,3,5) for common rotation being located on a side of said planetary wheel carrier portion (61) axially remote from said sun wheel (43), said input torque transmission unit (9) surrounding said input shaft unit (1,3,5) along an axial overlapping section, said input torque transmission unit (9) being rotatably mounted on and radially supported by said input shaft unit (1,3,5) within said axial overlapping section, said group of components at least comprising said input torque transmission unit (9), said planetary gear means (43,25,61,63,65), said free wheel means (13), said sun wheel braking member (41a), said ring wheel support member (21), said lubricant chamber (42) and said input torque transmission unit (9).

102. A group of components as set forth in claim 101,
said components being preassembled such as to form a preassembled gear unit (4) with said preassembled components being in relative operational positions corresponding to their relative operational positions within the completed planetary gear driven power consuming unit (6), said ring wheel support member (21) being adapted for being drivingly fastened to an input shaft member (1) rotatably mounted with respect to said stator means (81) by said shaft bearing means (28,28a).

103. A group of components as set forth in claim 102,
further comprising a prolongation unit (5) adapted to be non-rotatably fastened to said input shaft member (1) in prolongation alignment thereto, said prolongation unit (5) being rotatably mounted with respect to said input torque transmission unit (9).

104. A group of components as set forth in claim 102,
further comprising input shaft sleeve means (105) adapted to be non-rotatably fastened to said input shaft member (101) in surrounding relationship thereto, said input shaft sleeve means (105) being rotatably mounted with respect to said input torque transmission unit (109).

105. A group of components as set forth in one of claims 102 to 104,
said group of components being secured in preassembled condition by releasable securing means.

106. A group of components as set forth in one of claims 102 to 105,
said lubricant chamber (42) being filled with a volume of liquid lubricant.

## Patentansprüche

1. Durch ein Planetengetriebe angetriebene energieverbrauchende Einheit (6), umfassend Statormittel (81) und eine Eingangswelleneinheit (1, 3, 5) mit einer Achse (A) zum Antrieb einer angetriebenen Einheit in den Statormitteln (81), wobei die Eingangswelleneinheit (1, 3, 5) relativ zu den Statormitteln (81) um die Achse (A) durch Wellenlagermittel (28, 28a) drehbar angebracht ist und axial über die Wellenlagermittel (28, 28a) hinaus zu einem freien Ende der Eingangswelleneinheit (1, 3, 5) verläuft, und ferner umfassend Planetengetriebemittel (25, 43, 61, 63, 65) mit einem Sonnenrad (43), einem Ringrad (25), einem Planetenradträger (61, 63) und zumindest einem Planetenrad (65) an dem Planetenradträger (61, 63), und ferner umfassend Freilaufmittel (13), eine durch externe Steuermittel (24) steuerbare Übersetzungsänderungsbremseinheit (22) sowie eine Schmiermittelkammer (42) zur Aufnahme von flüssigem Schmiermittel (35), wobei eine Eingangsdrehmomentübertragungseinheit (9) der Planetengetriebemittel (25, 43, 61, 65) mit dem Planetenradträger (61, 63) in Antriebsverbindung steht, wobei das Ringrad (25) zur gemeinsamen Drehung mit der Eingangswelleneinheit (1, 3, 5) verbunden ist, wobei die Übersetzungsänderungsbremseinheit (22) dazu ausgelegt ist, wahlweise entweder eine Drehung des Sonnenrads (43) relativ zu den Statormitteln (81) zu verhindern oder das Sonnenrad (43) zur Drehung um die Achse (A) relativ zu den Statormitteln (81) freizugeben, wobei die Freilaufmittel (13) in Antwort darauf, daß die Übersetzungsänderungsbremseinheit (22) eine Drehung des Sonnenrads (43) relativ zu den Statormitteln (81) verhindert, eine Drehung der Eingangswelleneinheit (1, 3, 5) relativ zu der Eingangsdrehmomentübertragungseinheit (9) in einem vorbestimmten Drehsinn gestatten, wobei die Freilaufmittel (13) in Antwort darauf, daß die Übersetzungsänderungsbremseinheit (22) das Sonnenrad (43) zur Drehung um die Achse (A) relativ zu den Statormitteln (81) freigibt, ein Eingangsdrehmoment von der Eingangsdrehmomentübertragungseinheit (9) zu der Eingangswelleneinheit (1, 3, 5) in dem vorbestimmten Drehsinn übertragen, wobei das Sonnenrad (43) hohl ist, durch dieses hindurch einen zentralen Durchgang, einen den Wellenlagermitteln (28, 28a) näheren ersten axialen Endabschnitt und einen dem freien Ende näheren zweiten axialen Endabschnitt aufweist, wobei die Eingangsdrehmomentübertragungseinheit (9) durch das hohle Sonnenrad (43) verläuft, um ein Eingangsdrehmoment von benachbart einer zweiten Endabschnittsseite des Sonnenrads (43) angeordneten Antriebsmittel-Eingriffsmitteln (9a) zu einem benachbart einer ersten Endabschnittsseite des Sonnenrads (43) angeordneten Planetenradträgerabschnitt (61) zu übertragen, wobei der zweite axiale Endabschnitt des Sonnenrads (43) zur gemeinsamen Drehung um die Achse (A) mit einem Sonnenradbremselement (41a) verbunden ist, wobei das Sonnenradbremselement (41a) einen ersten Bremsabschnitt (87) der Übersetzungsänderungsbremseinheit (22) trägt, wobei ein zweiter Bremsabschnitt (83) der Übersetzungsänderungsbremseinheit (22) gegen Drehung um die Achse (A) relativ zu den Statormitteln (81) betriebsmäßig fest ist, wobei ein Ringradtragelement (21), welches das Ringrad (25) mit der Eingangswelleneinheit (1, 3, 5) zur gemeinsamen Drehung verbindet, an einer von dem Sonnenrad (43) axial entfernten Seite des Planetenradträgerabschnitts (61) angeordnet ist,
dadurch gekennzeichnet,
daß die Eingangsdrehmomentübertragungseinheit (9) die Eingangswelleneinheit (1, 3, 5) entlang einem axial überlappenden Weg umgibt und daß die Eingangsdrehmomentübertragungseinheit (9) innerhalb des axial überlappenden Wegs drehbar an der Eingangswelleneinheit (1, 3, 5) angebracht ist und von dieser radial gestützt wird.

2. Energieverbrauchende Einheit nach Anspruch 1, wobei die Eingangswelleneinheit (1, 3, 5) ein an den Wellenlagermitteln (28, 28a) drehbar angebrachtes Eingangswellenelement (1) sowie eine Verlängerungseinheit (5) aufweist, wobei das Eingangswellenelement (1) und die Verlängerungseinheit (5) durch Verbindungsmittel (3, 28a) axial fluchtend verbunden sind, wobei die Verbindungsmittel (3, 28a) gegen ein auf die Verlängerungseinheit (5) um eine zu der Achse (A) orthogonale Biegeachse wirkendes Biegedrehmoment beständig sind.

3. Energieverbrauchende Einheit nach Anspruch 2, wobei die Verlängerungseinheit (5) eine Verlängerungsbuchse (5) aufweist, wobei die Verbindungsmittel (3, 28a) in der Verlängerungsbuchse (5) ein Spannelement (3) aufweisen, wobei das Spannelement (3) mit dem Eingangswellenelement (1) in Schraubverbindung steht und die Verlängerungsbuchse (5) axial gegen Stützflächenmittel (28a) drückt, die relativ zu dem Eingangswellenelement (1) axial fest sind.

4. Energieverbrauchende Einheit nach Anspruch 2 oder 3, wobei die Eingangsdrehmomentübertragungseinheit (9) an der Verlängerungseinheit (5) drehbar angebracht ist.

5. Energieverbrauchende Einheit nach Anspruch 3, wobei die Eingangsdrehmomentübertragungseinheit (9) an der Verlängerungsbuchse (5) drehbar angebracht ist.

6. Energieverbrauchende Einheit nach einem der Ansprüche 2 bis 5, wobei das Ringradtragelement (21) zur gemeinsamen Drehung mit der Eingangswelleneinheit (1, 3, 5) durch axiales Einklemmen des Ringradtragelements (21) zwischen dem Eingangswellenelement (1) und der Verlängerungseinheit (5) befestigt ist.

7. Energieverbrauchende Einheit nach Anspruch 1, wobei die Eingangswelleneinheit (101, 103, 105) ein an den Wellenlagermitteln (128, 128a) drehbar angebrachtes Eingangswellenelement (101) sowie das Eingangswellenelement (101) umgebende Eingangswellenbuchsenmittel (105) aufweist, wobei die Eingangswellenbuchsenmittel (105) an dem Eingangswellenelement (101) befestigt sind, wobei die Eingangsdrehmomentübertragungseinheit (9) an den Eingangswellenbuchsenmitteln (105) drehbar angebracht ist.

8. Energieverbrauchende Einheit nach Anspruch 7, wobei das Eingangswellenelement (101) benachbart dem freien Ende der Eingangswelleneinheit (101, 103, 105) mit einem Sicherungselement (103) versehen ist, wobei das Sicherungselement (103) auf ein benachbartes Ende der Eingangswellenbuchsenmittel (105) wirkt und die Eingangswellenbuchsenmittel (105) gegen relativ zu dem Eingangswellenelement (101) feste Stützflächenmittel (128a) drückt.

9. Energieverbrauchende Einheit nach Anspruch 8, wobei das Sicherungselement (103) eine auf Außengewindemittel (132) des Eingangswellenelements (101) geschraubte Mutter ist, wobei die Außengewindemittel (132) axial über die Eingangswellenbuchsenmittel (105) hinaus verlaufen.

10. Energieverbrauchende Einheit nach einem der Ansprüche 7 bis 9, wobei die Eingangswellenbuchsenmittel (105) ein einzelnes Eingangswellenbuchsenelement (105) aufweisen, das in Axialrichtung im wesentlichen zwischen dem freien Ende der Eingangswelleneinheit (101, 103, 105) und dem Ringradtragelement (121) verläuft.

11. Energieverbrauchende Einheit nach einem der Ansprüche 7 bis 9, wobei die Eingangswellenbuchsenmittel (205) einen den Wellenlagermitteln (228, 228a) näheren ersten Eingangswellenbuchsenabschnitt (205a) und einen dem freien Ende der Eingangswelleneinheit (201, 203, 205) näheren zweiten Eingangswellenbuchsenabschnitt aufweisen, wobei die Eingangsdrehmomentübertragungseinheit (209) an dem zweiten Eingangswellenbuchsenabschnitt (205b) drehbar angebracht ist.

12. Energieverbrauchende Einheit nach einem der Ansprüche 7 bis 11, wobei das Ringradtragelement (121) an der Eingangswelleneinheit (101) durch die oder mittels der Eingangswellenbuchsenmittel (105) befestigt ist.

13. Energieverbrauchende Einheit nach Anspruch 12, wobei das Ringradtragelement (121) axial zwischen den Eingangswellenbuchsenmitteln (105) und den relativ zu dem Eingangswellenelement (101) festen Stützflächenmitteln (128a) eingeklemmt ist.

14. Energieverbrauchende Einheit nach Anspruch 12, wobei das Ringradtragelement (121) auf einem im Durchmesser reduzierten Endabschnitt (105a) der Eingangswellenbuchsenmittel (105) zentriert ist.

15. Energieverbrauchende Einheit nach Anspruch 14, wobei das Ringradtragelement (121) axial zwischen einer Schulterfläche (105b) des Endabschnitts (105a) der Eingangswellenbuchsenmittel (105) und relativ zu dem Eingangswellenelement (101) festen Stützflächenmitteln (128a) eingeklemmt ist.

16. Energieverbrauchende Einheit nach Anspruch 12, wobei das Ringradtragelement (221) mit zumindest einem Eingangswellenabschnitt (205a) der Eingangswellenbuchsenmittel (205) einstückig ist.

17. Energieverbrauchende Einheit nach Anspruch 1, wobei die Eingangswelleneinheit (401) ein Eingangswellenelement (401) aufweist, das an den Wellenlagermitteln (428, 428a) drehbar angebracht ist und bis zu dem freien Ende der Eingangswelleneinheit verläuft, wobei die Eingangsdrehmomentübertragungseinheit (409) an dem Eingangswellenelement (401) drehbar angebracht ist, wobei das Ringradtragelement (421) relativ zu dem Eingangswellenelement (401) axial und im Winkel fest ist.

18. Energieverbrauchende Einheit nach Anspruch 17, wobei das Ringradtragelement (421) unter Preßpassung auf dem Eingangswellenelement (401) sitzt.

19. Energieverbrauchende Einheit nach einem der Ansprüche 1 bis 18, wobei die Eingangsdrehmomentübertragungseinheit (9) eine Eingangsdrehmomentübertragungsbuchse (9) aufweist, die in Axialrichtung zwischen dem Planetenradträgerabschnitt und den Antriebsmittel-Eingriffsmitteln (9a) verläuft.

20. Energieverbrauchende Einheit nach Anspruch 19, wobei die Antriebsmittel-Eingriffsmittel (109a) durch ein Antriebsmittel-Eingriffselement (109a) vorgesehen sind, das die Eingangsdrehmomentübertragungsbuchse (109) umgibt und daran zur gemeinsamen Drehung mit dieser befestigt ist.

21. Energieverbrauchende Einheit nach Anspruch 20, wobei die Antriebsmittel-Eingriffsmittel (9a) einstückig an der Eingangsdrehmomentübertragungsbuchse (9) ausgebildet sind.

22. Energieverbrauchende Einheit nach einem der Ansprüche 1 bis 21, wobei die Antriebsmittel-Eingriffsmittel (9a) als Riemenscheibe ausgebildet sind.

23. Energieverbrauchende Einheit nach einem der Ansprüche 1 bis 22, wobei die Eingangsdrehmomentübertragungseinheit (9) an der Eingangswelleneinheit (1, 3, 5) unter Verwendung von Rollenlagermitteln (11, 15), wie etwa Kugellagermitteln (11) und/oder Nadellagermitteln (15), drehbar angebracht ist.

24. Energieverbrauchende Einheit nach Anspruch 23, wobei zumindest eines der Rollenlagermittel (11, 15) Rollenelemente wie etwa Kugeln oder Nadeln in direktem Rollkontakt mit einer Umfangslaufbahn (11s, 11t, 15s, 15t) aufweist, die an der Eingangswelleneinheit (1, 3, 5) oder/und der Eingangsdrehmomentübertragungseinheit (9) ausgebildet ist.

25. Energieverbrauchende Einheit nach Anspruch 24, wobei die Rollenelemente mit einer Laufbahn (11t, 15t) in Rollkontakt stehen, die an Eingangswellenbuchsenmitteln (5) der Eingangswelleneinheit (1, 3, 5) ausgebildet ist.

26. Energieverbrauchende Einheit nach Anspruch 24 oder 25, wobei die Rollenelemente mit einer Laufbahn (11s, 15s) in Rollkontakt stehen, die an einer Eingangsdrehmomentübertragungsbuchse (9) der Eingangsdrehmomentübertragungseinheit (9) ausgebildet ist.

27. Energieverbrauchende Einheit nach einem der Ansprüche 1 bis 26, wobei die Freilaufmittel (13) radial zwischen einer Eingangsdrehmomentübertragungsbuchse (9) der Eingangsdrehmomentübertragungseinheit (9) und der Eingangswelleneinheit (1, 3, 5) angeordnet sind.

28. Energieverbrauchende Einheit nach einem der Ansprüche 1 bis 26, wobei die Freilaufmittel (13) betriebsmäßig zwischen dem Planetenradträgerabschnitt (61) und dem Ringradtragelement (21) vorgesehen sind.

29. Energieverbrauchende Einheit nach Anspruch 28, wobei die Freilaufmittel (13) zwischen einer radial auswärts gerichteten Umfangsfläche des Planetenradträgerabschnitts (61) und einer radial einwärts gerichteten Umfangsfläche, die zur gemeinsamen Drehung mit dem Ringradtragelement (21) verbunden ist, angeordnet ist.

30. Energieverbrauchende Einheit nach einem der Ansprüche 1 bis 29, wobei das Sonnenrad (43) oder/und das Sonnenradbremselement (41a) durch Rollenlagermittel (47), wie etwa Kugellagermittel oder Nadellagermittel, an der Eingangsdrehmomentübertragungseinheit (9) drehbar angebracht ist bzw. sind, wobei zumindest ein Teil der Rollenelemente der Rollenlagermittel (47) mit einer Umfangslaufbahn (47t, 47s) in Rolleingriff steht, die an der Eingangsdrehmomentübertragungsbuchse (9) der Eingangsdrehmomentübertragungseinheit (9) oder/und dem Sonnenrad (43) oder/und dem Sonnenradbremselement (41a) ausgebildet ist.

31. Energieverbrauchende Einheit nach einem der Ansprüche 1 bis 30, wobei das Sonnenradbremselement (41a) oder/und das Sonnenrad (43) ein Nabenelement (41) aufweist, das an der Eingangsdrehmomentübertragungseinheit (9) drehbar angebracht ist.

32. Energieverbrauchende Einheit nach Anspruch 31, wobei das Nabenelement (41) an einer Eingangsdrehmomentübertragungsbuchse (9) der Eingangsdrehmomentübertragungseinheit (9) durch Rollenlagermittel (47), wie etwa Kugellagermittel oder Nadellagermittel, drehbar angebracht ist, wobei die Rollenlagermittel Rollenelemente in Rolleingriff mit entsprechenden Laufbahnen (47t, 47s) aufweisen, die an der Eingangsdrehmomentübertragungsbuchse (9) und dem Nabenelement (41) ausgebildet sind.

33. Energieverbrauchende Einheit nach einem der Ansprüche 1 bis 32, wobei das Sonnenrad (143) oder/und das Sonnenradbremselement (141a) von einem gemeinsamen Nabenelement (141) getrennt hergestellt und an diesem in jeweiligen Betriebsstellungen befestigt ist bzw. sind.

34. Energieverbrauchende Einheit nach einem der Ansprüche 1 bis 33, wobei das Sonnenradbremselement (141a) als Flanschelement (141a) ausgebildet ist, das einer zu der Achse (A) im wesentlichen orthogonalen Ebene folgt.

35. Energieverbrauchende Einheit nach einem der Ansprüche 1 bis 34, wobei der erste Bremsabschnitt (187) relativ zu dem Sonnenradbremselement (141a) axial beweglich ist.

36. Energieverbrauchende Einheit nach einem der Ansprüche 1 bis 35, wobei der zweite Bremsabschnitt (183) der Übersetzungsänderungsbremseinheit (122) und die Planetengetriebemittel (143, 161, 108, 165, 125) eine zu der Achse (A) orthogonale gemeinsame Ebene aufweisen.

37. Energieverbrauchende Einheit nach einem der Ansprüche 1 bis 36, wobei der zweite Bremsabschnitt (183) der Übersetzungsänderungsbremseinheit (122) sich im wesentlichen innerhalb einer Axialabmessung einer Anordnung befindet, die die Planetengetriebemittel (143, 161, 108, 165, 125), die Freilaufmittel (113), das Ringradtragelement (121) und die Schmiermittelkammer (142) umfaßt.

38. Energieverbrauchende Einheit nach einem der Ansprüche 1 bis 37, wobei die Schmiermittelkammer (142) durch erste Seitenwandmittel (121), die an der ersten Endabschnittsseite des Sonnenrads (143) angeordnet sind, und zweite Seitenwandmittel (123), die an der zweiten Endabschnittsseite des Sonnenrads (143) angeordnet sind, begrenzt ist, wobei die ersten und zweiten Seitenwandmittel (121, 123) durch Umfangskammerwandmittel (121a) axial verbunden sind, wobei der zweite Bremsabschnitt (183) die Umfangskammerwandmittel (121a) umgebend in Axialrichtung überlappt.

39. Energieverbrauchende Einheit nach Anspruch 38, wobei die ersten Seitenwandmittel (121) das Ringradtragelement (121) umfassen.

40. Energieverbrauchende Einheit nach Anspruch 38 oder 39, wobei die Umfangskammerwandmittel (121a) mit den ersten Seitenwandmitteln (121) oder/und den zweiten Seitenwandmitteln (123) einstückig sind.

41. Energieverbrauchende Einheit nach einem der Ansprüche 38 bis 40, wobei die zweiten Seitenwandmittel (123) relativ zu einem Nabenelement (141) des Sonnenrads (143) oder/und des Sonnenradbremselements (141a) durch erste Drehung erlaubende Dichtmittel (129) abgedichtet sind, wobei das Nabenelement (141) relativ zu der Eingangsdrehmomentübertragungseinheit (109) durch zweite Drehung erlaubende Dichtmittel (131) abgedichtet ist.

42. Energieverbrauchende Einheit nach einem der Ansprüche 38 bis 41, wobei die ersten Seitenwandmittel (121) relativ zu der Eingangswelleneinheit (101, 103, 105) abgedichtet sind.

43. Energieverbrauchende Einheit nach einem der Ansprüche 38 bis 42, wobei die ersten Seitenwandmittel (121) relativ zu den Eingangswellenbuchsenmitteln (105) der Eingangswelleneinheit (101, 103, 105) abgedichtet sind, wobei die Eingangswellenbuchsenmittel (105) relativ zu einem Eingangswellenelement der Eingangswelleneinheit (101, 103, 105) abgedichtet sind.

44. Energieverbrauchende Einheit nach einem der Ansprüche 1 bis 43, wobei die Eingangsdrehmomentübertragungseinheit (109) benachbart ihrem von den Wellenlagermitteln (128, 128a) entfernten Ende dicht verschlossen ist, wobei das Ende der Eingangswelleneinheit (101, 103, 105) innerhalb des dicht verschlossenen Endes der Eingangsdrehmomentübertragungseinheit (109) angeordnet ist.

45. Energieverbrauchende Einheit nach einem der Ansprüche 1 bis 44, wobei die Schmiermittelkammer (142) ein von externen Betriebsschmiermitteln-Zufuhrmitteln unabhängiges Schmiermittelvolumen enthält.

46. Energieverbrauchende Einheit nach einem der Ansprüche 1 bis 45, wobei die Schmiermittelkammer (42) eine um die Achse (A) ringförmige Kammer ist, wobei die Planetengetriebemittel (43, 61, 63, 8, 65, 25) oder/und die Freilaufmittel (13) innerhalb der ringförmigen Schmiermittelkammer (42) aufgenommen sind, wobei die ringförmige Schmiermittelkammer (42) in Antwort auf Drehung der Eingangsdrehmomentübertragungseinheit (9) um die Achse (A) drehbar ist, wobei das flüssige Schmiermittel in der ringförmigen Schmiermittelkammer (42) in Antwort auf Zentrifugalkräfte benachbart Umfangskammerwandmitteln der ringförmigen Schmiermittelkammer (42) einen Schmiermittelring (35) bildet, wobei Schmiermittelfördermittel (19, 44, 16) innerhalb der ringförmigen Schmiermittelkammer (42) angeordnet sind, um Schmiermittel von dem Schmiermittelring (35) zu Schmierung erfordernden Stellen (47, 11, 15) zu fördern.

47. Energieverbrauchende Einheit nach Anspruch 46, wobei sich der Schmiermittelring (35) bei Betrieb radial außerhalb der drehbaren Dichtmittel (29, 31) der Schmiermittelkammer (42) befindet.

48. Energieverbrauchende Einheit nach Anspruch 46 oder 47, wobei die Schmiermittelfördermittel dazu ausgelegt sind, einen Schmiermittelstrahl oder Schmiermitteltröpfchen zu zumindest einer im wesentlichen radialen Öffnung (16) zu richten, die durch eine Eingangsdrehmomentübertragungsbuchse (9) der Eingangsdrehmomentübertragungseinheit (9) verläuft, so daß der Schmiermittelstrahl bzw. die Schmiermitteltröpfchen durch die zumindest eine Öffnung (16) in einen Zwischenraum zwischen der Eingangsdrehmomentübertragungsbuchse (9) und der Eingangswelleneinheit (1, 3, 5) zur weiteren Verteilung zu den Lagermitteln (15, 11) treten kann bzw. können, die in dem Zwischenraum vorgesehen sind und zum drehbaren Anbringen der Eingangsdrehmomentübertragungsbuchse (9) an der Eingangswelleneinheit (1, 3, 5) dienen.

49. Energieverbrauchende Einheit nach Anspruch 48, wobei die zumindest eine radial erstreckende Öffnung (16) einen in Umfangsrichtung langgestreckten Querschnitt aufweist.

50. Energieverbrauchende Einheit nach einem der Ansprüche 46 bis 49, wobei die Schmiermittelfördermittel (171, 116) einen Schmiermittelstrahl oder Schmiermitteltröpfchen gegen Verteilungsflächenmittel (105c) richten.

51. Energieverbrauchende Einheit nach einem der Ansprüche 46 bis 50, wobei die Schmiermittelfördermittel (171, 116) eine Innenumfangsfläche (109d) einer Eingangsdrehmomentübertragungsbuchse (109) der Eingangsdrehmomentübertragungseinheit (109) umfassen, wobei die Innenumfangsfläche (109d) in Axialrichtung divergiert, wobei Schmiermittelverteilungsmittel (105c) an der divergierenden Umfangsfläche (109d) derart angeordnet sind, daß von der divergierenden Umfangsfläche (109d) aufgenommenes Schmiermittel unter dem Einfluß von Zentrifugalkräften entlang der divergierenden Umfangsfläche (109d) in Axialrichtung fließt.

52. Energieverbrauchende Einheit nach Anspruch 51, wobei die divergierende Umfangsfläche (109d) durch eine radial einwärts gerichtete Schwelle (109e) axial begrenzt ist.

53. Energieverbrauchende Einheit nach Anspruch 51 oder 52, wobei die Eingangsdrehmomentübertragungsbuchse (109) mit zumindest einem radial gerichteten Durchtritt (109f) versehen ist, durch den von der divergierenden Umfangsfläche (109d) kommendes Schmiermittel in Richtung radial auswärts fließen kann.

54. Energieverbrauchende Einheit nach einem der Ansprüche 46 bis 53, wobei die Schmiermittelfördermittel (19, 44, 16) ein Schmiermittelaufnahmerohr (19) aufweisen, dessen radial äußeres Ende (18) in den Schmiermittelring (35) eintritt und dessen Aufnahmemittel (18) in angenäherter Umfangsrichtung um die Achse (A) gerichtet sind, wobei das Aufnahmerohr (19) relativ zu der Schmiermittelkammer (42) drehbar ist.

55. Energieverbrauchende Einheit nach Anspruch 54, wobei die Schmiermittelkammer (42) durch ein Kammergehäuse (40) begrenzt ist, das zur gemeinsamen Drehung mit dem Ringrad (25) angebracht ist, wobei das Aufnahmerohr (19) zur gemeinsamen Drehung mit dem Sonnenrad (43) verbunden ist.

56. Energieverbrauchende Einheit nach Anspruch 54, wobei die Schmiermittelkammer (42) durch ein Kammergehäuse (40) begrenzt ist, wobei das Kammergehäuse (40) zur gemeinsamen Drehung mit dem Ringrad (25) angebracht ist, wobei das Aufnahmerohr (19) zur gemeinsamen Drehung mit dem Planetenradträger (61) angebracht, wobei das Aufnahmerohr (19) zumindest teilweise in einer Raumschicht angeordnet ist, die relativ zu der Achse (A) orthogonal ist und das zumindest eine Planetenrad (65) enthält.

57. Energieverbrauchende Einheit nach einem der Ansprüche 46 bis 53, wobei die Fördermittel (171, 116) zumindest eine Förderscheibe (171) umfassen, die zur gemeinsamen Drehung mit dem zumindest einen Planetenrad (165) angebracht ist, wobei die Förderscheibe (171) zumindest mit ihrem jeweiligen radial äußeren Umfangsabschnitt in den Schmiermittelring eintaucht und mit einem jeweiligen radial inneren Umfangsabschnitt zu einer Schmiermitteltröpfchen-Aufnahmestelle (116) gerichtet ist, wobei der jeweilige radial äußere Umfangsabschnitt mit Schmiermittel benetzt wird, wenn er in den Schmiermittelring eintaucht, und Tröpfchen zu der Tröpfchenaufnahmestelle (116) wirft, wenn er während Bewegung des Planetenrads (165) an einer der Tröpfchenaufnahmestelle (116) benachbarten Stelle ankommt.

58. Energieverbrauchende Einheit nach Anspruch 57, wobei die Förderscheibe (171) mit einer Radialöffnung (116) zusammenwirkt, die durch eine Eingangsdrehmomentübertragungsbuchse (109) der Eingangsdrehmomentübertragungseinheit (109) verläuft.

59. Energieverbrauchende Einheit nach einem der Ansprüche 1 bis 58, wobei die Freilaufmittel (113) zumindest teilweise in einen Schmiermittelring (35) in der Schmiermittelkammer (42) eingetaucht sind.

60. Energieverbrauchende Einheit nach einem der Ansprüche 1 bis 59, wobei das Ringrad (25) radial innere Zahnmittel aufweist, wobei die Zahnmittel zumindest teilweise in einen Schmiermittelring (35) in der Schmiermittelkammer (42) eingetaucht sind.

61. Energieverbrauchende Einheit nach einem der Ansprüche 1 bis 60, wobei das Ringrad (25) relativ zu der Schmiermittelkammer (42) fest ist.

62. Energieverbrauchende Einheit nach einem der Ansprüche 1 bis 61, wobei sich die Eingangsdrehmomentübertragungseinheit (9), die Planetengetriebemittel (43, 61, 63, 65, 25) und die Freilaufmittel (13) relativ zu der Eingangswelleneinheit (1, 3, 5) nicht bewegen, wenn die Eingangswelleneinheit (1, 3, 5) durch die Freilaufmittel (13) direkt von der Eingangsdrehmomentübertragungseinheit (9) angetrieben wird.

63. Energieverbrauchende Einheit nach einem der Ansprüche 1 bis 62, wobei der zweite Bremsabschnitt (83) durch Bremsabschnittträgermittel (85) von den Statormitteln (81) gehalten ist.

64. Energieverbrauchende Einheit nach Anspruch 63, wobei die Statormittel (181) benachbart den Wellenlagermitteln (128, 128a) eine Endwand (181e) aufweisen, wobei die Endwand (181e) mit Kühlluftöffnungen (181d) versehen ist, wobei sich die Kühlluftöffnungen (181d) zur umgebenden Atmosphäre durch Luftdurchgänge (190) öffnen, die von den Bremsabschnittträgermittel (181a) vorgesehen oder dort freigelassen sind.

65. Energieverbrauchende Einheit nach einem der Ansprüche 1 bis 64, wobei die energieverbrauchende Einheit (6) ein Stromenergiegenerator ist.

66. Energieverbrauchende Einheit nach einem der Ansprüche 1 bis 65, wobei die energieverbrauchende Einheit (6) eine hilfsenergieverbrauchende Einheit eines Kraftfahrzeugs, wie etwa ein Energiegenerator, eine Ölpumpe, ein Kompressor o.dgl. ist.

67. Energieverbrauchende Einheit nach einem der Ansprüche 1 bis 66, wobei die Übersetzungsänderungsbremseinheit (22) eine elektromagnetisch gesteuerte Bremseinheit (22) ist.

68. Energieverbrauchende Einheit nach einem der Ansprüche 1 bis 67, wobei die Übersetzungsänderungsbremseinheit (22) eine Reibbremseinheit ist, welche eine ruckfreie Minderung der Drehzahl des Sonnenrads (43), gegebenenfalls bis zum Stillstand, relativ zu den Statormitteln (81) gestattet.

69. Energieverbrauchende Einheit nach Anspruch 67 oder 68, wobei der zweite Bremsabschnitt (83) der Übersetzungsänderungsbremseinheit (22) eine elektromagnetische Spuleneinheit (83) aufweist und der erste Abschnitt der Übersetzungsänderungsbremseinheit (22) einen axial beweglichen Anker (87) aufweist.

70. Energieverbrauchende Einheit nach Anspruch 69, wobei die elektromagnetische Spuleneinheit (83) ringförmig ist und in im wesentlicher koaxialer Position um die Planetengetriebemittel (43, 61, 63, 65, 25) herum angeordnet ist und mit den Planetengetriebemitteln eine gemeinsame Ebene aufweist.

71. Energieverbrauchende Einheit nach Anspruch 70, wobei die Planetengetriebemittel (143, 161, 108, 165, 125), die Schmiermittelkammer (142), die Übersetzungsänderungsbremseinheit (122) und das Sonnenradbremselement (141a) eine flache gedachte Hüllscheibe aufweisen, wobei die Antriebsmittel-Eingriffsmittel (109a) einen gedachten Hüllzylinder aufweisen, der von einer von den Wellenlagermitteln (128, 128a) fernen Seitenwand der flachen gedachten Hüllscheibe vorsteht, wobei ein Durchmesser des gedachten Hüllzylinders wesentlich kleiner als der Durchmesser der flachen gedachten Hüllscheibe ist.

72. Energieverbrauchende Einheit nach Anspruch 71, wobei die axiale Breite der gedachten flachen Hüllscheibe im wesentlichen der Summe von einzelnen Axialabmessungen des Sonnenrads (143) des Sonnenradbremselements (141a), des Planetenradträgers (161), des Ringradtragelements (121) und einer von dem Ringradtragelement (121) fernen Seitenwand (123) der Schmiermittelkammer (142) entspricht.

73. Energieverbrauchende Einheit nach Anspruch 72, wobei die axiale Breite der gedachten flachen Hüllscheibe weniger als 135 %, bevorzugt weniger als 130 % dieser Summe beträgt.

74. Energieverbrauchende Einheit nach einem der Ansprüche 71 bis 73, wobei der Durchmesser des gedachten Hüllzylinders weniger als 40 % des Durchmessers der gedachten flachen Hüllscheibe beträgt.

75. Energieverbrauchende Einheit nach Anspruch 74, wobei der Durchmesser des gedachten Hüllzylinders weniger als 30 % des Durchmessers der flachen gedachten Hüllscheibe beträgt.

76. Energieverbrauchende Einheit nach einem der Ansprüche 71 bis 75, wobei der Durchmesser der gedachten flachen Hüllscheibe weniger als das 9-fache, bevorzugt weniger als das 8,5-fache des Durchmessers der Eingangswelleneinheit (1, 3, 5), gemessen axial innerhalb der Wellenlagermittel (128, 128a), beträgt.

77. Energieverbrauchende Einheit nach einem der Ansprüche 71 bis 76, wobei die axiale Breite des gedachten Hüllzylinders im wesentlichen der Breite einer Riemenscheibe entspricht.

78. Energieverbrauchende Einheit nach einem der Ansprüche 71 bis 77, wobei der Durchmesser des gedachten Hüllzylinders weniger als das 3-fache des Durchmessers der Eingangswelleneinheit, gemessen innerhalb der Wellenlagermittel (128, 128a), beträgt.

79. Energieverbrauchende Einheit nach einem der Ansprüche 1 bis 78, wobei die Planetengetriebemittel (43, 61, 63, 65, 25) ein erstes Übersetzungsverhältnis von 1:1 sowie ein zweites Übersetzungsverhältnis von weniger als 1,70:1 zwischen der Eingangswelleneinheit (1, 3, 5) und der Eingangsdrehmomentübertragungseinheit (9), bei dem die Eingangswelleneinheit (1, 3, 5) entsprechend die höhere Drehzahl hat, aufweisen.

80. Energieverbrauchende Einheit nach nach einem der Ansprüche 1 bis 79, wobei die Übersetzungsänderungsbremseinheit (22) durch eine Steuereinheit (24) in Antwort auf die Drehzahl der Eingangsdrehmomentübertragungseinheit (9) derart gesteuert wird, daß die Drehzahl der Eingangswelleneinheit (1, 3, 5) relativ zu der Drehzahl der Eingangsdrehmomentübertragungseinheit (9) zunimmt, wenn die Drehzahl der Eingangsdrehmomentübertragungseinheit (9) unter einen vorbestimmten Drehzahlwert reduziert ist.

81. Energieverbrauchende Einheit nach Anspruch 80, wobei die Zunahme der Drehzahl der Eingangswelleneinheit (1, 3, 5) über die Drehzahl der Eingangsdrehmomentübertragungseinheit (9) hinaus in Antwort auf ein Sinken der Eingangsdrehmomentübertragungseinheit (9) unter den vorbestimmten Drehzahlwert zusätzlich auf ein Signal (24b) anspricht, das einen Bedarf nach Drehzahlzunahme der energieverbrauchenden Einheit (6) darstellt.

82. Energieverbrauchende Einheit nach einem der Ansprüche 1 bis 81, wobei die Eingangswelleneinheit (1, 3, 5) einen Abschnitt aufweist, der über die Wellenlagermittel (28, 28a) der Statormittel (81) hinaus zu dem freien Ende verläuft, wobei der Abschnitt von den Statormitteln radial nicht weiter gestützt ist.

83. Durch ein Planetengetriebe angetriebene energieverbrauchende Einheit nach einem der Ansprüche 1 bis 82,
wobei die Übersetzungsänderungsbremseinheit (22) ringförmig ist und das Ringrad (25) mit einer zu der Achse (A) orthogonalen, das Ringrad (25) und die Übersetzungsänderungsbremseinheit (22) enthaltenden gemeinsamen Ebene umgibt,
wobei die Übersetzungsänderungsbremseinheit (22) eine das Ringrad (25) umgebende ringförmige Spule (83) und einen relativ zu der elektromagnetischen Spule (83) in Axialrichtung beweglichen Anker (87) aufweist.

84. Durch ein Planetengetriebe angetriebene energieverbrauchende Einheit (6) nach einem der Ansprüche 1 bis 83, wobei das Sonnenrad (43), der Planetenradträger (61, 63) mit zumindest einem Planetenrad (65), das Ringrad (25), die Freilaufmittel (13), die Schmiermittelkammer (42) und zumindest ein Teil der Übersetzungsänderungsbremseinheit (22) in koaxialer Anordnung um eine Achse (A) an einer Drehmomentübertragungsbuchseneinheit (9) angebracht sind.

85. Durch ein Planetengetriebe angetriebene energieverbrauchende Einheit nach einem der Ansprüche 46 bis 84, wobei die Schmiermittelfördermittel eine Förderscheibe (171) aufweisen, die an dem Planetenrad (165) zur gemeinsamen Drehung mit diesem angebracht ist, wobei die Förderscheibe (171) mit ihrem jeweiligen radialen Außenabschnitt in den Schmiermittelring eintaucht und Schmiermittel von dem Schmiermittelring (135) radial einwärts wirft.

86. Durch ein Planetengetriebe angetriebene energieverbrauchende Einheit nach einem der Ansprüche 46 bis 85, wobei die Eingangsdrehmomentübertragungseinheit (9) eine Drehmomentübertragungsbuchseneinheit (9) aufweist, wobei die Drehmomentübertragungsbuchseneinheit (9) ihrem Mitteldurchgang mit Lagermitteln (11, 15) versehen ist, um die Drehmomentübertragungsbuchseneinheit (9) an der von der Buchseneinheit (9) umgebenen Eingangswelleneinheit (1, 3, 5) drehbar zu halten, wobei durch die Buchseneinheit (9) zumindest eine radiale Öffnung verläuft, damit Schmiermittel von dem Schmiermittelring (35) zu den Lagermitteln (11, 15) gelangen kann.

87. Durch ein Planetengetriebe angetriebene energieverbrauchende Einheit nach einem der Ansprüche 46 bis 86, wobei die Schmiermittelfördermittel eine Förderscheibe (171) aufweisen, die an dem Planetenrad (165) zur gemeinsamen Drehung mit diesem angebracht ist, wobei die Förderscheibe (171) mit ihrem jeweiligen radialen Außenabschnitt in den Schmiermittelring eintaucht und Schmiermittel von dem Schmiermittelring (135) radial einwärts wirft, wobei die Eingangsdrehmomentübertragungseinheit (9) eine Drehmomentübertragungsbuchseneinheit (109) aufweist, wobei die Drehmomentübertragungsbuchseneinheit (109) in ihrem Mitteldurchgang mit Lagermitteln (111, 115) versehen ist, um die Drehmomentübertragungsbuchseneinheit (109) an der von der Buchseneinheit (109) umgebenen Eingangswelleneinheit (101, 103, 105) drehbar zu halten, wobei durch die Buchseneinheit (109) zumindest eine radiale Öffnung (116) verläuft, damit Schmiermittel von dem Schmiermittelring zu den Lagermitteln (111, 115) gelangen kann, wobei die Förderscheibe (171) benachbart ihrem Umfang an einer vorbestimmten Stelle entlang dem Umfang mit zumindest einem Schmiermittelaufnahmemittel (171a), beispielsweise einem radialen Schmiermittelaufnahmeschlitz (171a), versehen ist, wobei die Radialöffnung (116) ferner an einer vorbestimmten Stelle entlang dem Umfang der Buchseneinheit (109) angeordnet ist, wobei die vorbestimmten Stellen der Schmiermittelaufnahmemittel (171a) und der radialen Öffnung (116) im Hinblick auf eine Planetenbewegung der Förderscheibe (171) relativ zu der Drehmomentübertragungsbuchseneinheit (109) derart gewählt sind, daß Schmiermittel von den Schmiermittelaufnahmemitteln (171a), das durch die Schmiermittelaufnahmemittel (171a) in Richtung radial einwärts geworfen wird, auf die Öffnung (116) trifft, wenn sich die Schmiermittelaufnahmemittel (171a) nahe der Drehmomentübertragungsbuchseneinheit (109) befinden.

88. Durch ein Planetengetriebe angetriebene energieverbrauchende Einheit nach einem der Ansprüche 1 bis 87, wobei die Eingangsdrehmomentübertragungseinheit (9) eine Drehmomentübertragungslagerbuchse (9), die die Eingangswelleneinheit (1, 3, 5) umgibt und an dieser durch Rollenlagermittel (11, 15) drehbar angebracht ist, und ein Drehmomentübertragungsnabenelement (41), das die Drehmomentübertragungslagerungsbuchse (9) umgibt und an dieser durch weitere Rollenlagermittel (47) drehbar angebracht ist, aufweist, wobei zumindest eine der Rollenlagermittel (11, 15) und der weiteren Rollenlagermittel (47) Rollenlaufbahnmittel (11s, 11t, 15s, 15t, 47s, 47t) aufweisen, die an der Eingangswelleneinheit (1, 3, 5), der Drehmomentübertragungslagerbuchse (9) bzw. dem Drehmomentübertragungsnabenelement (41) gebildet sind.

89. Durch ein Planetengetriebe angetriebene energieverbrauchende Einheit nach Anspruch 88,
wobei die Eingangswelleneinheit (1, 3, 5) eine weitere Lagerbuchse (5) aufweist, die zur nicht drehbaren Anbringung an einem Wellenelement (1) der Eingangswelleneinheit (1, 3, 5) ausgelegt ist, wobei die Drehmomentübertragungslagerbuchse (9) durch die Rollenlagermittel (11, 15) an der weiteren Lagerbuchse (5) drehbar angebracht ist.

90. Durch ein Planetengetriebe angetriebene energieverbrauchende Einheit nach Anspruch 88 oder 89,
wobei zumindest eine der Lagermittel (11) und der weiteren Lagermittel (47) kugelförmige Rollenelemente aufweisen, die in konkave Lagerlaufbahnmittel (11s, 11t, 47s, 47t) in der Eingangswelleneinheit (1, 3, 5), der Drehmomentübertragungslagerbuchse (9) bzw. dem Drehmomentübertragungsnabenelement (41) eingreifen, um zumindest zwei Elemente der Eingangswelleneinheit (1, 3, 5), der Drehmomentübertragungslagerbuchse (9) und des Drehmomentübertragungsnabenelements (41) relativ zueinander in Axialrichtung untrennbar festzuhalten.

91. Durch ein Planetengetriebe angetriebene energieverbrauchende Einheit (6) nach einem der Ansprüche 1 bis 90,
dadurch gekennzeichnet,
daß die energieverbrauchende Einheit (6) ein Stromenergiegenerator (6) ist.

92. Durch ein Planetengetriebe angetriebene energieverbrauchende Einheit nach Anspruch 91, wobei die Eingangswelleneinheit (101, 103, 105) mit einem Kühlgebläse (195) versehen ist, das an der Eingangswelleneinheit (101, 103, 105) zur gemeinsamen Drehung mit dieser angebracht ist, wobei das Kühlgebläse (195) an der Eingangswelleneinheit (101, 103, 105) an einer von dem freien Ende (101a) fernen Seite der Wellenlagermittel (128, 128a) angeordnet ist.

93. Durch ein Planetengetriebe angetriebene energieverbrauchende Einheit nach Anspruch 92,
wobei die Statormittel (181) ein Statorgehäuse (181) umfassen, wobei das Statorgehäuse (181) axial benachbart den Eingangswellenlagermitteln (128, 128a) eine Endwand (181e) aufweist, wobei die Endwand (181e) radial benachbart den Wellenlagermitteln (128, 128a) mit Kühlluftdurchgangsmitteln (181d) versehen ist, wobei der zweite Bremsabschnitt (183) benachbart der Endwand (181e) durch zweite Bremsabschnittbefestigungsmittel (181a, 181b) an dem Statorgehäuse (181) befestigt ist, wobei die zweiten Bremsabschnittbefestigungsmittel (181a, 181b) weitere Kühlluftdurchgangsmittel (190) aufweisen, wobei das Kühlgebläse (195) in dem Statorgehäuse (181) vorgesehen ist und dazu ausgelegt ist, eine Kühlluftströmung durch die Kühlluftdurchgangsmittel (181d) der Endwand (181e) und die weiteren Kühlluftdurchgangsmittel (190) zu erzeugen.

94. Verfahren zur Montage einer durch ein Planetengetriebe angetriebenen energieverbrauchenden Einheit, die energieverbrauchende Einheit (6) umfassend Statormittel (81) und eine Eingangswelleneinheit (1, 3, 5) mit einer Achse (A) zum Antrieb einer angetriebenen Einheit in den Statormitteln (81), wobei die Eingangswelleneinheit (1, 3, 5) relativ zu den Statormitteln (81) um die Achse (A) durch Wellenlagermittel (28, 28a) drehbar angebracht ist und axial über die Wellenlagermittel (28, 28a) hinaus zu einem freien Ende der Eingangswelleneinheit (1, 3, 5) verläuft, und ferner umfassend Planetengetriebemittel (25, 43, 61, 63, 65) mit einem Sonnenrad (43), einem Ringrad (25), einem Planetenradträger (61, 63) und zumindest einem Planetenrad (65) an dem Planetenradträger (61, 63), und ferner umfassend Freilaufmittel (13), eine durch externe Steuermittel (24) steuerbare Übersetzungsänderungsbremseinheit (22) sowie eine Schmiermittelkammer (42) zur Aufnahme von flüssigem Schmiermittel (35), wobei eine Eingangsdrehmomentübertragungseinheit (9) der Planetengetriebemittel (25, 43, 61, 65) mit dem Planetenradträger (61, 63) in Antriebsverbindung steht, wobei das Ringrad (25) zur gemeinsamen Drehung mit der Eingangswelleneinheit (1, 3, 5) verbunden ist, wobei die Übersetzungsänderungsbremseinheit (22) dazu ausgelegt ist, wahlweise entweder eine Drehung des Sonnenrads (43) relativ zu den Statormitteln (81) zu verhindern oder das Sonnenrad (43) zur Drehung um die Achse (A) relativ zu den Statormitteln (81) freizugeben, wobei die Freilaufmittel (13) in Antwort darauf, daß die Übersetzungsänderungsbremseinheit (22) eine Drehung des Sonnenrads (43) relativ zu den Statormitteln (81) verhindert, eine Drehung der Eingangswelleneinheit (1, 3, 5) relativ zu der Eingangsdrehmomentübertragungseinheit (9) in einem vorbestimmten Drehsinn gestatten, wobei die Freilaufmittel (13) in Antwort darauf, daß die Übersetzungsänderungsbremseinheit (22) das Sonnenrad (43) zur Drehung um die Achse (A) relativ zu den Statormitteln (81) freigibt, ein Eingangsdrehmoment von der Eingangsdrehmomentübertragungseinheit (9) zu der Eingangswelleneinheit (1, 3, 5) in dem vorbestimmten Drehsinn übertragen, wobei das Sonnenrad (43) hohl ist, durch dieses hindurch einen zentralen Durchgang, einen den Wellenlagermitteln (28, 28a) näheren ersten axialen Endabschnitt und einen dem freien Ende näheren zweiten axialen Endabschnitt aufweist, wobei die Eingangsdrehmomentübertragungseinheit (9) durch das hohle Sonnenrad (43) verläuft, um ein Eingangsdrehmoment von den benachbart einer zweiten Endabschnittsseite des Sonnenrads (43) angeordneten Antriebsmittel-Eingriffsmitteln (9a) zu einem benachbart einer ersten Endabschnittsseite des Sonnenrads (43) angeordneten Planetenradträgerabschnitt (61) zu übertragen, wobei der zweite axiale Endabschnitt des Sonnenrads (43) zur gemeinsamen Drehung um die Achse (A) mit einem Sonnenradbremselement (41a) verbunden ist, wobei das Sonnenradbremselement (41a) einen ersten Bremsabschnitt (87) der Übersetzungsänderungsbremseinheit (22) trägt, wobei ein zweiter Bremsabschnitt (83) der Übersetzungsänderungsbremseinheit (22) gegen Drehung um die Achse (A) relativ zu den Statormitteln (81) betriebsmäßig fest ist, wobei ein Ringradtragelement (21), welches das Ringrad (25) mit der Eingangswelleneinheit (1, 3, 5) zur gemeinsamen Drehung verbindet, an einer von dem Sonnenrad (43) axial entfernten Seite des Planetenradträgerabschnitts (61) angeordnet ist, wobei die Eingangsdrehmomentübertragungseinheit (9) die Eingangswelleneinheit (1, 3, 5) entlang einem axial überlappenden Weg umgibt, wobei die Eingangsdrehmomentübertragungseinheit (9) innerhalb des axial überlappenden Wegs drehbar an der Eingangswelleneinheit (1, 3, 5) angebracht ist und von dieser radial gestützt wird,
wobei das Verfahren gekennzeichnet ist durch Vormontage zumindest des Sonnenrads (43), des Planetenradträgers (61, 63), des Planetenrads (65), des Ringrads (25), der Freilaufmittel (13) und der Schmiermittelkammer (42) an der Eingangsdrehmomentübertragungseinheit (9) und dann drehbares Anbringen der Eingangsdrehmomentübertragungseinheit (9) an einem Eingangswellenelement (1) der Eingangswelleneinheit (1, 3, 5).

95. Verfahren zur Montage nach Anspruch 94, wobei die Vormontage ferner das drehbare Anbringen der Eingangsdrehmomentübertragungseinheit (9) an einer Eingangswellenbuchseneinheit (5) der Eingangswelleneinheit (1, 3, 5) umfaßt, wobei die Eingangswellenbuchseneinheit (5) im Anschluß an die Vormontage nicht drehbar an dem Eingangswellenelement (1) angebracht wird.

96. Vormontierte Getriebeeinheit einer durch ein Planetengetriebe angetriebenen energieverbrauchenden Einheit nach einem der Ansprüche 1 bis 93, welche als ihre Komponenten umfaßt: zumindest die Eingangsdrehmomentübertragungseinheit (9), die Planetengetriebemittel (43, 25, 61, 63, 65), die Freilaufmittel (13), das Sonnenradbremselement (41a), das Ringradtragelement (21), die Schmiermittelkammer (42) und die Eingangsdrehmomentübertragungseinheit (9) in relativen Betriebspositionen, die im wesentlichen ihren relativen Betriebspositionen in der fertigen durch ein Planetengetriebe angetriebenen energieverbrauchenden Einheit (6) entsprechen, wobei das Ringradtragelement (21) zur antriebsmäßigen Befestigung an einem Eingangswellenelement (1) ausgelegt ist, das durch die Wellenlagermittel (28, 28a) relativ zu den Statormitteln (81) drehbar angebracht ist.

97. Vormontierte Getriebeeinheit nach Anspruch 96, ferner umfassend eine Verlängerungseinheit (5), die zur nicht drehbaren Befestigung an dem Eingangswellenelement (1) in Verlängerungsausrichtung zu diesem ausgelegt ist, wobei die Verlängerungseinheit (5) relativ zu der Eingangsdrehmomentübertragungseinheit (9) drehbar angebracht ist.

98. Vormontierte Getriebeeinheit nach Anspruch 96, ferner umfassend Eingangswellenbuchsenmittel (105), die an dem Eingangswellenelement (101) nicht drehbar und um dieses herum befestigbar sind, wobei die Eingangswellenbuchsenmittel (105) relativ zu der Eingangsdrehmomentübertragungseinheit (109) drehbar angebracht sind.

99. Vormontierte Getriebeeinheit nach einem der Ansprüche 96 bis 98, wobei die Komponenten durch lösbare Sicherungsmittel im vormontierten Zustand gesichert sind.

100. Vormontierte Getriebeeinheit nach einem der Ansprüche 96 bis 99, wobei die Schmiermittelkammer (42) mit einem Volumen von flüssigem Schmiermittel gefüllt ist.

101. Gruppe vormontierter Komponenten einer durch ein Planetengetriebe angetriebenen energieverbrauchenden Einheit nach Anspruch 1, gegebenenfalls mit Merkmalen eines der Ansprüche 2 bis 93, umfassend Statormittel (81) und eine Eingangswelleneinheit (1, 3, 5) mit einer Achse (A) zum Antrieb einer angetriebenen Einheit (2) in den Statormitteln, wobei die Eingangswelleneinheit (1, 3, 5) relativ zu den Statormitteln (81) um die Achse (A) durch Wellenlagermittel (28, 28a) drehbar angebracht ist und zu einem freien Ende der Eingangswelleneinheit (1, 3, 5) verläuft, und ferner umfassend Planetengetriebemittel (25, 43, 61, 63, 65) mit einem Sonnenrad (43), einem Ringrad (25), einem Planetenradträger (61, 63) und zumindest einem Planetenrad (65) an dem Planetenradträger (61, 63), und ferner umfassend Freilaufmittel (13), eine durch externe Steuermittel (24) steuerbare Übersetzungsänderungsbremseinheit (22) sowie eine Schmiermittelkammer (42) zur Aufnahme von flüssigem Schmiermittel (35), wobei eine Eingangsdrehmomentübertragungseinheit (9) der Planetengetriebemittel mit dem Planetenradträger (61, 63) in Antriebsverbindung steht, wobei das Ringrad (25) zur gemeinsamen Drehung mit der Eingangswelleneinheit (1, 3, 5) verbunden ist, wobei die Übersetzungsänderungsbremseinheit (22) dazu ausgelegt ist, wahlweise entweder eine Drehung des Sonnenrads (43) relativ zu den Statormitteln (81) zu verhindern oder das Sonnenrad (43) zur Drehung um die Achse (A) relativ zu den Statormitteln (81) freizugeben, wobei die Freilaufmittel (13) in Antwort darauf, daß die Übersetzungsänderungsbremseinheit (22) eine Drehung des Sonnenrads (43) relativ zu den Statormitteln (81) verhindert, eine Drehung der Eingangswelleneinheit (1, 3, 5) relativ zu der Eingangsdrehmomentübertragungseinheit (9) in einem vorbestimmten Drehsinn gestatten, wobei die Freilaufmittel (13) in Antwort darauf, daß die Übersetzungsänderungsbremseinheit (22) das Sonnenrad (43) zur Drehung um die Achse (A) relativ zu den Statormitteln (81) freigibt, ein Eingangsdrehmoment von der Eingangsdrehmomentübertragungseinheit (9) zu der Eingangswelleneinheit (1, 3, 5) in dem vorbestimmten Drehsinn übertragen, wobei das Sonnenrad (43) hohl ist, durch dieses hindurch einen zentralen Durchgang, einen den Wellenlagermitteln (28, 28a) näheren ersten axialen Endabschnitt und einen dem freien Ende näheren zweiten axialen Endabschnitt aufweist, wobei die Eingangsdrehmomentübertragungseinheit (9) durch das hohle Sonnenrad (43) verläuft, um ein Eingangsdrehmoment von benachbart einer zweiten Endabschnittsseite des Sonnenrads (43) angeordneten Antriebsmittel-Eingriffsmitteln (9a) zu einem benachbart einer ersten Endabschnittsseite des Sonnenrads (43) angeordneten Planetenradträgerabschnitt (61) zu übertragen, wobei der zweite axiale Endabschnitt des Sonnenrads (43) zur gemeinsamen Drehung um die Achse (A) mit einem Sonnenradbremselement (41a) verbunden ist, wobei das Sonnenradbremselement (41a) einen ersten Bremsabschnitt (87) der Übersetzungsänderungsbremseinheit (22) trägt, wobei ein zweiter Bremsabschnitt (83) der Übersetzungsänderungsbremseinheit (22) gegen Drehung um die Achse (A) relativ zu den Statormitteln (81) betriebsmäßig fest ist, wobei ein Ringradtragelement (21), welches das Ringrad (25) mit der Eingangswelleneinheit (1, 3, 5) zur gemeinsamen Drehung verbindet, an einer von dem Sonnenrad (43) axial entfernten Seite des Planetenradträgerabschnitts (61) angeordnet ist, wobei die Eingangsdrehmomentübertragungseinheit (9) die Eingangswelleneinheit (1, 3, 5) entlang einem axial überlappenden Abschnitt umgibt, wobei die Eingangsdrehmomentübertragungseinheit (9) innerhalb des axial überlappenden Abschnitts drehbar an der Eingangswelleneinheit (1, 3, 5) angebracht ist und von dieser radial gestützt wird, wobei die Gruppe von Komponenten zumindest die Eingangsdrehmomentübertragungseinheit (9), die Planetengetriebemittel (43, 25, 61, 63, 65), die Freilaufmittel (13), das Sonnenradbremselement (41a), das Ringradtragelement (21), die Schmiermittelkammer (42) und die Eingangsdrehmomentübertragungseinheit (9) umfaßt.

102. Gruppe von Komponenten nach Anspruch 101, wobei die Komponenten derart vormontiert sind, daß sie eine vormontierte Getriebeeinheit (4) bilden, wobei sich die vormontierten Komponenten in ihren relativen Betriebspositionen befinden, die ihren relativen Betriebspositionen in der fertigen durch ein Planetenradgetriebe angetriebenen energieverbrauchenden Einheit (6) entsprechen, wobei das Ringradtragelement (21) zur antriebsmäßigen Befestigung an einem Eingangswellenelement (1) ausgelegt ist, das durch die Wellenlagermittel (28, 28a) relativ zu den Statormitteln (81) drehbar angebracht ist.

103. Gruppe von Komponenten nach Anspruch 102, ferner umfassend eine Verlängerungseinheit (5), die zur nicht drehbaren Befestigung an dem Eingangswellenelement (1) in Verlängerungsausrichtung zu diesem ausgelegt ist, wobei die Verlängerungseinheit (5) relativ zu der Eingangsdrehmomentübertragungseinheit (9) drehbar angebracht ist.

104. Gruppe von Komponenten nach Anspruch 102, ferner umfassend Eingangswellenbuchsenmittel (105), die an dem Eingangswellenelement (101) nicht drehbar und um dieses herum befestigbar sind, wobei die Eingangswellenbuchsenmittel (105) relativ zu der Eingangsdrehmomentübertragungseinheit (109) drehbar angebracht sind.

105. Gruppe von Komponenten nach einem der Ansprüche 102 bis 104, wobei die Gruppe von Komponenten durch lösbare Sicherungsmittel im vormontierten Zustand gesichert ist.

106. Gruppe von Komponenten nach einem der Ansprüche 102 bis 105, wobei die Schmiermittelkammer (42) mit einem Volumen von flüssigem Schmiermittel gefüllt ist.

## Revendications

1. Dispositif consommateur d'énergie (6) entraîné par engrenage planétaire, comprenant un moyen formant stator (81) et une unité formant arbre d'entrée (1, 3, 5) avec un axe (A), pour entraîner une unité menée dans ledit moyen formant stator (81), ladite unité formant arbre d'entrée (1, 3, 5) étant montée de façon rotative, par rapport audit moyen formant stator (81), autour dudit axe (1) dans des moyens formant palier d'arbre (28, 28a) et s'étendant, dans le sens axial, au-delà desdits moyens formant palier d'arbre (28, 28a) en direction d'une extrémité libre de ladite unité formant arbre d'entrée (1, 3, 5) et comprenant, en outre, des moyens formant engrenage planétaire (25, 43, 61, 63, 65) comprenant une roue planétaire (43), une couronne dentée (25), un support d'engrenages satellites (61, 63) et au moins un engrenage satellite (65) sur ledit support d'engrenages satellites (61, 63) et comprenant, en outre, des moyens formant roue libre (13), une unité de frein de changement de vitesses (22) pouvant être commandée par des moyens de commande externes (24) et une chambre de lubrifiant (42) prévue pour recevoir un lubrifiant liquide (35), une unité de transmission de couple d'entrée (9) dudit moyen formant engrenage planétaire (25, 43, 61, 65) étant reliée, en vue d'assurer un entraînement, audit support d'engrenages satellites (61, 63), ladite couronne dentée (25) étant reliée, en vue d'assurer une rotation commune, à ladite unité formant arbre d'entrée (1, 3, 5), ladite unité formant frein de changement de vitesses (22) étant adaptée pour, de manière sélective, empêcher la rotation de ladite roue planétaire (43) par rapport audit moyen formant stator (81) ou pour libérer ladite roue planétaire (43) en vue de sa rotation autour dudit axe (A) par rapport audit moyen formant stator (81), ledit moyen formant roue libre (13) permettant la rotation de ladite unité formant arbre d'entrée (1,3,5) par rapport à ladite unité de transmission de couple d'entrée (9) dans un sens de rotation prédéterminé en réponse à ladite unité de frein de changement de vitesses (22), empêchant ladite roue planétaire (43) de tourner par rapport audit moyen formant stator (81), ledit moyen formant roue libre (13) transmettant un couple d'entrée à partir de ladite unité de transmission de couple d'entrée (9) à ladite unité formant arbre d'entrée (1, 3, 5) dans ledit sens de rotation prédéterminé, en réponse à ladite unité de frein de changement de vitesses (22) libérant ladite roue planétaire (43) en vue de sa rotation autour dudit axe (A) par rapport audit moyen formant stator (81), ladite roue planétaire (43) étant creuse avec un passage central ménagé dans cette dernière, avec une première partie d'extrémité axiale plus proche desdits moyens formant palier d'arbre (28, 28a) et avec une deuxième partie d'extrémité axiale plus proche de ladite extrémité libre, ladite unité de transmission de couple d'entrée (9) s'étendant à travers ladite roue planétaire creuse (43) pour transmettre un couple d'entrée à partir de moyens de mise en prise (9a) des moyens d'entraînement, placés de manière adjacente à un côté de la deuxième partie de ladite roue planétaire (43) vers une partie de support d'engrenages satellites (61) placée de manière adjacente à un côté de la première partie d'extrémité de ladite roue planétaire (43), ladite deuxième partie d'extrémité axiale de ladite roue planétaire (43) étant reliée en vue d'une rotation commune, autour dudit axe (A), à un élément de freinage de la roue planétaire (41a), ledit élément de freinage de la roue planétaire (41a) supportant une première partie de frein (87) de ladite unité de frein de changement de vitesses (22), une deuxième partie de frein (83) de ladite unité de frein de changement de vitesses (22) étant bloquée, de manière fonctionnelle, contre toute rotation autour dudit axe (A) par rapport audit moyen formant stator (81), un élément de support de roue planétaire (21) reliant ladite couronne dentée (25) à ladite unité d'arbre d'entrée (1 , 3, 5) en vue d'une rotation commune, étant placé sur un côté de ladite partie du support d'engrenages satellites (61), dans le sens axial à distance de ladite roue planétaire (43),
caractérisé en ce que
ladite unité de transmission de couple d'entrée (9) entoure ladite unité formant arbre d'entrée (1, 3, 5) le long d'une étendue de chevauchement axiale et en ce que ladite unité de transmission de couple d'entrée (9) est montée de façon rotative sur, et supportée dans le sens radial, par ladite unité formant arbre d'entrée (1, 3, 5) dans ladite étendue de chevauchement axiale.

2. Dispositif consommateur d'énergie selon la revendication 1, ladite unité formant arbre d'entrée (1, 3, 5) comprenant un élément d'arbre d'entrée (1) monté de façon rotative par lesdits moyens formant palier d'arbre (28, 28a) et une unité de prolongement (5), ledit élément formant arbre d'entrée (1) et ladite unité de prolongement (5) étant reliés dans un alignement axial par des moyens de raccordement (3, 28a), lesdits moyens de raccordement (3, 28a) étant résistants à un couple de flexion exercé sur ladite unité de prolongement (5) autour d'un axe de flexion perpendiculaire audit axe (A).

3. Dispositif consommateur d'énergie selon la revendication 2, ladite unité de prolongement (5) comprenant un manchon de prolongement (5), lesdits moyens de raccordement (3, 28a) comprenant un élément tendeur (3) à l'intérieur dudit manchon de prolongement (5), ledit élément tendeur (3) étant relié par vissage audit élément d'arbre d'entrée (1) et comprimant, dans le sens axial, ledit manchon de prolongement (5) contre des moyens formant face de mise en butée (28a) fixés, dans le sens axial, par rapport audit élément d'arbre d'entrée (1).

4. Dispositif consommateur d'énergie selon la revendication 2 ou 3, ladite unité de transmission de couple d'entrée (9) montée de façon rotative sur ladite unité de prolongement (5).

5. Dispositif consommateur d'énergie selon la revendication 3, ladite unité de transmission de couple d'entrée (9) étant montée de façon rotative sur ledit manchon de prolongement (5).

6. Dispositif consommateur d'énergie selon l'une des revendications 2 à 5, ledit élément de support de couronne dentée (21) étant fixé en vue de sa rotation commune à ladite unité d'arbre d'entrée (1, 3 , 5) par serrage, dans le sens axial, dudit élément de support de la couronne dentée (21) entre ledit élément d'arbre d'entrée (1) et ladite unité de prolongement (5).

7. Dispositif consommateur d'énergie selon la revendication 1, ladite unité formant arbre d'entrée (101, 103, 105) comprenant un élément d'arbre d'entrée (101) monté de façon rotative, sur lesdits moyens formant palier d'arbre (128, 128a) et ledit moyen formant manchon d'arbre d'entrée (105) entourant ledit élément formant arbre d'entrée (101), ledit moyen formant manchon d'arbre d'entrée (105) étant fixé sur ledit élément d'arbre d'entrée (101), ladite unité de transmission de couple d'entrée (109) étant montée de façon rotative, sur ledit moyen formant manchon d'arbre d'entrée (105).

8. Dispositif consommateur d'énergie selon la revendication 7, ledit élément d'arbre d'entrée (101) étant pourvu, de manière adjacente à ladite extrémité libre de ladite unité d'arbre d'entrée (101, 103, 105), d'un élément de fixation (103), ledit élément de fixation (103) agissant sur une extrémité adjacente dudit moyen formant manchon d'arbre d'entrée (105) et comprimant ledit moyen formant manchon d'arbre d'entrée (105) contre le moyen formant face de mise en butée (128a) fixe par rapport audit élément d'arbre d'entrée (101).

9. Dispositif consommateur d'énergie selon la revendication 8, ledit élément de fixation (103) étant un écrou vissé sur des moyens filetés externes (132) dudit élément d'arbre d'entrée (101), ledit moyen fileté externe (132) s'étendant dans le sens axial au-delà dudit moyen formant manchon d'arbre d'entrée (105).

10. Dispositif consommateur d'énergie selon l'une des revendications 7 à 9, ledit moyen formant manchon d'arbre d'entrée (105) comprenant un seul élément de manchon d'arbre d'entrée (105) s'étendant dans le sens axial sensiblement entre ladite extrémité libre de ladite unité d'arbre d'entrée (101, 103, 105) et ledit élément de support de couronne dentée (121).

11. Dispositif consommateur d'énergie selon l'une des revendications 7 à 9, ledit moyen formant manchon d'arbre d'entrée (205) comprenant une première section (205a) de manchon d'arbre d'entrée plus proche desdits moyens formant palier d'arbre (228, 228a) et une deuxième section de manchon d'arbre d'entrée plus proche de ladite extrémité libre de ladite unité d'arbre d'entrée (201, 203, 205), ladite unité de transmission de couple d'entrée (209) étant montée de façon rotative, sur ladite deuxième section (205b) du manchon d'arbre d'entrée.

12. Dispositif consommateur d'énergie selon l'une des revendications 7 à 11, ledit élément de support de couronne dentée (121) étant fixé à ladite unité d'arbre d'entrée (101) dans ou par ledit moyen formant manchon d'arbre d'entrée (105).

13. Dispositif consommateur d'énergie selon la revendication 12, ledit élément de support de couronne dentée (121) étant serré, dans le sens axial, entre ledit moyen formant manchon d'arbre d'entrée (105) et le moyen formant face de mise en butée (128a) fixe par rapport audit élément d'arbre d'entrée (101).

14. Dispositif consommateur d'énergie selon la revendication 12, ledit élément de support de couronne dentée (121) étant centré sur une section arrière (105a) de diamètre réduit dudit moyen formant manchon d'arbre d'entrée (105).

15. Dispositif consommateur d'énergie selon la revendication 14, ledit élément de support de couronne dentée (121) étant serré, dans le sens axial, entre une face d'épaulement (105b) de ladite section arrière (105a) dudit moyen formant manchon d'arbre d'entrée (105) et le moyen formant face de mise en butée (128a) étant fixe par rapport audit élément d'arbre d'entrée (101).

16. Dispositif consommateur d'énergie selon la revendication 12, ledit élément de support de couronne dentée (221) étant solidaire d'au moins une section d'arbre d'entrée (205a) dudit moyen formant manchon d'arbre d'entrée (205).

17. Dispositif consommateur d'énergie selon la revendication 1, ladite unité d'arbre d'entrée (401) comprenant un élément d'arbre d'entrée (401) monté de façon rotative sur lesdits moyens formant palier d'arbre (428, 428a) et s'étendant jusqu'à ladite extrémité libre de ladite unité d'arbre d'entrée, ladite unité de transmission de couple d'entrée (409) étant montée de façon rotative sur ledit élément d'arbre d'entrée (401), ledit élément de support de couronne dentée (421) étant fixe dans le sens axial et de manière angulaire par rapport audit élément d'arbre d'entrée (401).

18. Dispositif consommateur d'énergie selon la revendication 17, ledit élément de support de couronne dentée (421) étant fixé par ajustage serré sur ledit élément d'arbre d'entrée (401).

19. Dispositif consommateur d'énergie selon l'une des revendications 1 à 18, ladite unité de transmission de couple d'entrée (9) comprenant un manchon de transmission de couple d'entrée (9) s'étendant, dans le sens axial, entre ladite partie de support d'engrenages satellites et ledit moyen de mise en prise des moyens d'entraînement (9a).

20. Dispositif consommateur d'énergie selon la revendication 19, ledit moyen de mise en prise des moyens d'entraînement (9a) étant constitué par un élément de mise en prise des moyens d'entraînement (109a) entourant ledit manchon de transmission de couple d'entrée (109) et étant fixé sur ce dernier en vue d'une rotation commune avec celui-ci.

21. Dispositif consommateur d'énergie selon la revendication 20, ledit moyen de mise en prise des moyens d'entraînement (9a) étant formé d'une seule pièce avec ledit manchon de transmission du couple d'entrée (9).

22. Dispositif consommateur d'énergie selon l'une des revendications 1 à 21, ledit moyen de mise en prise des moyens d'entraînement (9a) ayant la forme d'une poulie à courroie.

23. Dispositif consommateur d'énergie selon l'une des revendications 1 à 22, ladite unité de transmission du couple d'entrée (9) étant montée de façon rotative sur ladite unité d'arbre d'entrée (1, 3, 5) à l'aide de moyens formant paliers à roulement (11, 15) tels que des moyens formant roulement à billes (11) et/ou des moyens formant roulement à aiguilles (15).

24. Dispositif consommateur d'énergie selon la revendication 23, au moins un desdits moyens formant paliers à roulement (11, 15) comportant des éléments de roulement tels que des billes ou des aiguilles en contact de roulement direct avec une piste de roulement circonférentielle (11s, 11t, 15s, 15t) formée sur au moins une unité parmi ladite unité d'arbre d'entrée (1, 3, 5) et ladite unité de transmission de couple d'entrée (9).

25. Dispositif consommateur d'énergie selon la revendication 24, lesdits éléments de roulement étant en contact de roulement direct avec une piste (11t, 15t) formée sur le moyen formant manchon d'arbre d'entrée (5) de ladite unité d'arbre d'entrée (1, 3, 5).

26. Dispositif consommateur d'énergie selon l'une des revendications 24 ou 25, lesdits éléments de roulement étant en contact de roulement avec une piste (11s, 15s) formée sur un manchon de transmission de couple d'entrée (9) de ladite unité de transmission de couple d'entrée (9).

27. Dispositif consommateur d'énergie selon l'une des revendications 1 à 26, ledit moyen formant roue libre (13) étant placé dans le sens radial entre un manchon de transmission de couple d'entrée (9) de ladite unité de transmission de couple d'entrée (9) et ladite unité d'arbre d'entrée (1, 3, 5).

28. Dispositif consommateur d'énergie selon l'une des revendications 1 à 26, ledit moyen formant roue libre (13) étant prévu, de manière fonctionnelle, entre ladite partie de support d'engrenages satellites (61) et ledit élément de support de couronne dentée (21).

29. Dispositif consommateur d'énergie selon la revendication 28, ledit moyen formant roue libre (13) étant placé entre une face circonférentielle dirigée vers l'extérieur, dans le sens radial, de ladite partie de support d'engrenages satellites (61) et une face circonférentielle dirigée vers l'intérieur dans le sens radial reliée, en vue d'une rotation commune, avec ledit élément de support de couronne dentée (21).

30. Dispositif consommateur d'énergie selon l'une quelconque des revendications 1 à 29, au moins un élément parmi ladite roue planétaire (43) et ledit élément de freinage de la roue planétaire (41a) étant monté de façon rotative sur ladite unité de transmission du couple d'entrée (9) par des moyens formant paliers à roulement (47), tels que des moyens formant roulements à aiguilles ou roulements à billes, au moins une partie des éléments de roulement desdits moyens formant paliers à roulement (47) étant en contact de roulement avec une piste circonférentielle (47t, 47s) formée sur un élément parmi le manchon de transmission du couple d'entrée (9) de ladite unité de transmission de couple d'entrée (9), ladite roue planétaire (43) et ledit élément de freinage de la roue planétaire (41a).

31. Dispositif consommateur d'énergie selon l'une des revendications 1 à 30, au moins un élément parmi ledit élément de freinage de la roue planétaire (41a) et ladite roue planétaire (43) comprenant un élément de moyeu (41) monté de façon rotative sur ladite unité de transmission de couple d'entrée (9).

32. Dispositif consommateur d'énergie selon la revendication 31, ledit élément de moyeu (41) étant montée de façon rotative, sur un manchon de transmission de couple d'entrée (9) de ladite unité de transmission de couple d'entrée (9) par des moyens formant paliers de roulement (47) tels que des moyens formant roulement à billes ou des moyens formant roulement à aiguilles en contact de roulement avec des pistes correspondantes (47t, 47s) formées sur ledit manchon de transmission du couple d'entrée (9) et ledit élément de moyeu (41).

33. Dispositif consommateur d'énergie selon l'une des revendications 1 à 32, au moins un élément parmi ladite roue planétaire (143) et ledit élément de freinage de la roue planétaire (141a) étant fabriqué séparément et étant fixé à un élément de moyeu commun (141) dans des positions fonctionnelles appropriées.

34. Dispositif consommateur d'énergie selon l'une des revendications 1 à 33, ledit élément de freinage de la roue planétaire (141a) ayant la forme d'un élément de bride (141a) suivant un plan sensiblement orthogonal par rapport audit axe (A).

35. Dispositif consommateur d'énergie selon l'une des revendications 1 à 34, ladite première partie de frein (187) étant mobile dans le sens axial par rapport audit élément de freinage de la roue planétaire (141a).

36. Dispositif consommateur d'énergie selon l'une des revendications 1 à 35, ladite deuxième partie de frein (183) de ladite unité de frein de changement de vitesses (122) et lesdits moyens formant engrenage planétaire (143, 161, 108, 165, 125) présentant un plan commun orthogonal par rapport audit axe (A).

37. Dispositif consommateur d'énergie selon l'une des revendications 1 à 36, ladite deuxième partie de frein (183) de ladite unité de frein de changement de vitesses (122) étant sensiblement dans un prolongement axial d'un ensemble comprenant lesdits moyens formant engrenage planétaire (143, 161, 108, 165, 125), ledit moyen formant roue libre (113), ledit élément de support de la couronne dentée (121) et ladite chambre de lubrifiant (142).

38. Dispositif consommateur d'énergie selon l'une des revendications 1 à 37, ladite chambre de lubrifiant (142) étant délimitée par un premier moyen formant paroi latérale (121) placé sur le premier côté de la partie d'extrémité de ladite roue planétaire (143) et un deuxième moyen formant paroi latérale (123) placé sur le deuxième côté de la partie d'extrémité de la roue planétaire (143), lesdits premier et deuxième moyens formant parois latérales (121, 123) étant reliés dans le sens axial par des moyens formant parois de chambre circonférentielle (121a), ladite deuxième partie de frein (183) chevauchant, en l'enveloppant, ledit moyen formant paroi de chambre circonférentielle (121a) dans le sens axial.

39. Dispositif consommateur d'énergie selon la revendication 38, ledit premier moyen formant paroi latérale (121) comprenant ledit élément de support de roue dentée (121).

40. Dispositif consommateur d'énergie selon la revendication 38 ou 39, ledit moyen formant paroi de chambre circonférentielle (121a) étant solidaire d'au moins un élément parmi ledit premier moyen formant paroi latérale (121) et ledit deuxième moyen formant paroi latérale (123).

41. Dispositif consommateur d'énergie selon l'une des revendications 38 à 40, ledit deuxième moyen formant paroi latérale (123) étant monté avec étanchéité, par rapport à un élément de moyeu (141) d'au moins un élément parmi ladite roue planétaire (143) et ledit élément de freinage de la roue planétaire (141a) par un premier moyen d'étanchéité permettant une rotation (129), ledit élément de moyeu (141) étant monté avec étanchéité par rapport à ladite unité de transmission de couple d'entrée (109) par un deuxième moyen d'étanchéité (131) permettant une rotation.

42. Dispositif consommateur d'énergie selon l'une des revendications 38 à 41, ledit premier moyen formant paroi latérale (121) étant monté avec étanchéité par rapport à ladite unité d'arbre d'entrée (101, 103, 105).

43. Dispositif consommateur d'énergie selon l'une des revendications 38 à 42, ledit premier moyen formant paroi latérale (121) étant monté avec étanchéité par rapport au moyen formant manchon d'arbre d'entrée (105) de ladite unité d'arbre d'entrée (101, 103, 105), ledit moyen formant manchon d'arbre d'entrée (105) étant monté avec étanchéité par rapport à l'élément d'arbre d'entrée de ladite unité d'arbre d'entrée (101, 103, 105).

44. Dispositif consommateur d'énergie selon l'une quelconque des revendications 1 à 43, ladite unité de transmission de couple d'entrée (109) étant montée avec étanchéité de manière adjacente à une extrémité de cette dernière, à distance desdits moyens formant palier d'arbre (128, 128a), ladite extrémité de ladite unité d'arbre d'entrée (101, 103, 105) étant placée à l'intérieur de ladite extrémité montée avec étanchéité de ladite unité de transmission de couple d'entrée (109).

45. Dispositif consommateur d'énergie selon l'une des revendications 1 à 44, ladite chambre de lubrifiant (142) contenant un volume de lubrifiant indépendant du moyen d'alimentation en lubrifiant fonctionnel externe.

46. Dispositif consommateur d'énergie selon l'une des revendications 1 à 45, ladite chambre de lubrifiant (42) étant une chambre annulaire autour dudit axe (A), au moins un desdits moyens formant engrenage planétaire (43, 61, 63, 8, 65, 25) et ledit moyen formant roue libre (13) étant logés dans ladite chambre de lubrifiant annulaire (42), ladite chambre de lubrifiant annulaire (42) pouvant tourner autour dudit axe (A) en réponse à la rotation de ladite unité de transmission de couple d'entrée (9), ledit lubrifiant liquide dans ladite chambre de lubrifiant annulaire (42) formant un anneau de lubrifiant (35) adjacent au moyen formant paroi de la chambre circonférentielle de ladite chambre de lubrifiant annulaire (42) en réponse aux forces centrifuges, des moyens de transport de lubrifiant (19, 44, 16) étant placés à l'intérieur de ladite chambre de lubrifiant annulaire (42) pour transporter du lubrifiant à partir dudit anneau de lubrifiant (35) en direction d'emplacements (47, 11, 15) nécessitant une lubrification.

47. Dispositif consommateur d'énergie selon la revendication 46, ledit anneau de lubrifiant (35) agissant dans le sens radial à l'extérieur du moyen de fermeture étanche rotatif (29, 31) de ladite chambre de lubrifiant (42).

48. Dispositif consommateur d'énergie selon la revendication 46 ou 47, ledit moyen de transport du lubrifiant étant adapté pour diriger un faisceau de lubrifiant ou des gouttelettes de lubrifiant en direction d'au moins une ouverture sensiblement radiale (16) s'étendant à travers un manchon de transmission de couple d'entrée (9) de ladite unité de transmission de couple d'entrée (9) de telle sorte que ledit faisceau de lubrifiant ou lesdites gouttelettes de lubrifiant, selon le cas, peuvent passer à travers au moins une ouverture (16) dans un interstice entre ledit manchon de transmission de couple d'entrée (9) et ladite unité d'arbre d'entrée (1, 3, 5) en vue d'une distribution complémentaire sur des moyens formant paliers prévus dans ledit interstice, et utilisés pour le montage rotatif dudit manchon de transmission du couple d'entrée (9) sur ladite unité d'arbre d'entrée (1, 3, 5).

49. Dispositif consommateur d'énergie selon la revendication 48, au moins ladite ouverture s'étendant dans le sens radial présentant une section transversale allongée dans le sens circonférentiel.

50. Dispositif consommateur d'énergie selon l'une des revendications 46 à 49, lesdits moyens de transport du lubrifiant (171, 116) dirigeant un faisceau de lubrifiant ou des gouttelettes de lubrifiant contre des moyens formant faces de diffusion (105c).

51. Dispositif consommateur d'énergie selon l'une des revendications 46 à 50, lesdits moyens de transport du lubrifiant (171, 116) comprenant une face circonférentielle interne (109d) d'un manchon de transmission de couple d'entrée (109) de ladite unité de transmission de couple d'entrée (109), ladite face circonférentielle interne (109d) étant divergente dans le sens axial, des moyens d'affectation du lubrifiant (105c) étant attribués à ladite face circonférentielle divergente (109d) de telle sorte que le lubrifiant reçu par ladite face circonférentielle divergente (109d) s'écoule le long de ladite face circonférentielle divergente (109d) dans le sens axial, sous l'influence des forces centrifuges.

52. Dispositif consommateur d'énergie selon la revendication 51, ladite face circonférentielle divergente (109d) étant délimitée dans le sens axial par un rebord dirigé vers l'intérieur dans le sens radial (109e).

53. Dispositif consommateur d'énergie selon la revendication 51 ou 52, ledit manchon de transmission de couple d'entrée (109) étant pourvu d'au moins une perforation orientée dans le sens radial (109f) permettant l'écoulement du lubrifiant par cette dernière, dans un sens radial vers l'extérieur, en partant de ladite face circonférentielle divergente (109d).

54. Dispositif consommateur d'énergie selon l'une des revendications 46 à 53, lesdits moyens de transport du lubrifiant (19, 44, 16) comprenant un tube collecteur de lubrifiant (19) présentant une extrémité extérieure dans le sens radial (18) pénétrant dans ledit anneau de lubrifiant (35) et comportant des moyens collecteurs (18) dirigés dans un sens sensiblement circonférentiel autour dudit axe (A), ledit tube collecteur (19) pouvant tourner par rapport à ladite chambre de lubrifiant (42).

55. Dispositif consommateur d'énergie selon la revendication 54, ladite chambre de lubrifiant (42) étant délimitée par un carter de chambre (40) fixé en vue de sa rotation commune à ladite couronne dentée (25), ledit tube collecteur (19) étant relié à ladite roue planétaire (43) en vue de sa rotation commune avec cette dernière.

56. Dispositif consommateur d'énergie selon la revendication 54, ladite chambre de lubrifiant (42) étant délimitée par un carter de chambre (40), ledit carter de chambre (40) étant fixé sur ladite couronne dentée (25) en vue de sa rotation commune avec cette dernière, ledit tube collecteur (19) étant fixé en vue de sa rotation commune sur ledit support d'engrenages planétaires (61), ledit tube collecteur (19) étant au moins partiellement placé dans une tranche d'espace orthogonale par rapport audit axe (A) et contenant au moins un desdits engrenages satellites (65).

57. Dispositif consommateur d'énergie selon l'une des revendications 46 à 53,
ledit moyen de transport (171, 116) comprenant au moins un disque de transport (171) fixé en vue de sa rotation commune sur au moins un engrenage satellite (165), ledit disque de transport (171) présentant au moins une partie circonférentielle extérieure, dans le sens radial, immergée dans ledit anneau de lubrifiant et étant dirigé avec une partie circonférentielle intérieure correspondante dans le sens radial, en direction d'un emplacement de réception des gouttelettes de lubrifiant (116), ladite partie circonférentielle extérieure dans le sens radial respective étant mouillée par ledit lubrifiant lors de son immersion dans ledit anneau de lubrifiant et projetant des gouttelettes en direction dudit emplacement de réception des gouttelettes (116) lorsqu'elle parvient à une position adjacente audit emplacement de réception des gouttelettes (116) pendant le déplacement de l'engrenage satellite (165).

58. Dispositif consommateur d'énergie selon la revendication 57, ledit disque de transport (171) coopérant avec une ouverture radiale (116) s'étendant dans un manchon de transmission de couple d'entrée (109) de ladite unité de transmission de couple d'entrée (109).

59. Dispositif consommateur d'énergie selon l'une des revendications 1 à 58, ledit moyen formant roue libre (113) étant au moins partiellement immergé dans un anneau de lubrifiant (35) à l'intérieur de ladite chambre de lubrifiant (42).

60. Dispositif consommateur d'énergie selon l'une des revendications 1 à 59, ladite couronne dentée (25) présentant des moyens formant dents intérieures, dans le sens radial, lesdits moyens formant dents étant au moins partiellement immergés dans un anneau lubrifiant (35) à l'intérieur de ladite chambre de lubrifiant (42).

61. Dispositif consommateur d'énergie selon l'une des revendications 1 à 60, ladite couronne dentée (25) étant fixée par rapport à ladite chambre de lubrifiant (42).

62. Dispositif consommateur d'énergie selon l'une des revendications 1 à 61, ladite unité de transmission de couple d'entrée (9), lesdits moyens formant engrenage planétaire (43, 61, 63, 65, 25) et ledit moyen formant roue libre (13) étant au repos par rapport à ladite unité formant arbre d'entrée (1, 3, 5) lorsque ladite unité formant arbre d'entrée (1, 3, 5) est directement menée à partir de ladite unité de transmission de couple d'entrée (9) par ledit moyen formant roue libre (13).

63. Dispositif consommateur d'énergie selon l'une des revendications 1 à 62, ladite deuxième partie de frein (83) étant supportée, par l'intermédiaire de moyens de support de partie de frein (85), par ledit moyen formant stator (81).

64. Dispositif consommateur d'énergie selon la revendication 63, ledit moyen formant stator (181) comprenant une paroi d'extrémité (181e) adjacente auxdits moyens formant palier d'arbre (128, 128a), ladite paroi d'extrémité (181e) étant pourvue d'ouvertures pour air de refroidissement (181d), lesdites ouvertures pour air de refroidissement (181d) étant ouvertes vers l'atmosphère environnante par des passages d'air (190) prévus ou laissés par lesdits moyens de support de partie de frein (181a).

65. Dispositif consommateur d'énergie selon l'une des revendications 1 à 64, ledit dispositif consommateur d'énergie (6) étant un générateur de courant électrique.

66. Dispositif consommateur d'énergie selon l'une des revendications 1 à 65, ledit dispositif consommateur d'énergie (6) étant un dispositif consommateur d'énergie auxiliaire d'un véhicule à moteur tel qu'un générateur de courant, une pompe à huile, un compresseur ou similaire.

67. Dispositif consommateur d'énergie selon l'une des revendications 1 à 66, ladite unité de frein de changement de vitesses (22) étant une unité de frein à commande électro-magnétique (22).

68. Dispositif consommateur d'énergie selon l'une des revendications 1 à 67, ladite unité de frein de changement de vitesses (22) étant une unité de frein à friction permettant de réduire sans à-coups le nombre de tours par minute de ladite roue planétaire (43), éventuellement jusqu'à l'arrêt, par rapport audit moyen formant stator (81).

69. Dispositif consommateur d'énergie selon la revendication 67 ou 68, ladite deuxième partie de frein (83) de ladite unité de frein de changement de vitesses (22) comprenant une unité formant bobine électro-magnétique (83), et ladite première partie de ladite unité de frein de changement de vitesses (22) comprenant une armature mobile dans le sens axial (87).

70. Dispositif consommateur d'énergie selon la revendication 69, ladite unité formant bobine électro-magnétique (83) présentant une forme annulaire et étant disposée dans une position sensiblement coaxiale autour desdits moyens formant engrenage planétaire (43, 61, 63, 65, 25) et présentant un plan commun avec lesdits moyens formant engrenage planétaire.

71. Dispositif consommateur d'énergie selon la revendication 70, lesdits moyens formant engrenage planétaire (143, 161, 108, 165, 125), ladite chambre de lubrifiant (142), ladite unité de frein de changement de vitesses (122) et ledit élément de freinage de la roue planétaire (141a) présentant un disque enveloppant virtuel plat, ledit moyen de mise en prise avec le moyen d'entraînement (109a) présentant un cylindre enveloppant virtuel se projetant à partir d'une paroi latérale dudit disque enveloppant virtuel plat en s'éloignant desdits moyens formant palier d'arbre (128, 128a), ledit cylindre enveloppant virtuel présentant un diamètre considérablement inférieur à celui du diamètre dudit disque enveloppant virtuel plat.

72. Dispositif consommateur d'énergie selon la revendication 71, la largeur axiale dudit disque enveloppant plat virtuel correspondant sensiblement à la somme des dimensions axiales individuelles de ladite roue planétaire (143), ledit élément de freinage de la roue planétaire (141a), ladite partie du support d'engrenages satellites (161), ledit élément de support de la couronne dentée (121) et une paroi latérale (123) de ladite chambre de lubrifiant (142) éloignée dudit élément de support de la couronne dentée (121).

73. Dispositif consommateur d'énergie selon la revendication 72, la largeur axiale dudit disque enveloppant plat virtuel étant inférieure à 135%, de préférence, inférieure à 130%, de ladite somme.

74. Dispositif consommateur d'énergie selon l'une quelconque des revendications 71 à 73, le diamètre dudit cylindre enveloppant virtuel étant inférieur à 40% du diamètre dudit disque enveloppant plat virtuel.

75. Dispositif consommateur d'énergie selon la revendication 74, le diamètre dudit cylindre enveloppant virtuel étant inférieur à 30% du diamètre dudit disque enveloppant plat virtuel.

76. Dispositif consommateur d'énergie selon l'une des revendications 71 à 75, le diamètre dudit cylindre enveloppant virtuel étant inférieur à 9 fois, de préférence inférieur à 8,5 fois le diamètre de ladite unité formant arbre d'entrée (1, 3, 5) mesuré axialement à l'intérieur desdits moyens formant palier d'arbre (128, 128a).

77. Dispositif consommateur d'énergie selon l'une des revendications 71 à 76, la largeur axiale dudit cylindre enveloppant virtuel correspondant sensiblement à la largeur d'une poulie à courroie.

78. Dispositif consommateur d'énergie selon l'une des revendications 71 à 77, le diamètre dudit cylindre enveloppant virtuel étant inférieur à trois fois le diamètre de ladite unité formant arbre d'entrée, mesuré à l'intérieur desdits moyens formant palier d'arbre (128, 128a).

79. Dispositif consommateur d'énergie selon l'une des revendications 1 à 78, lesdits moyens formant engrenages satellites (43, 61, 63, 65, 25) fournissant un premier rapport de transmission de 1/1 et un deuxième rapport de transmission de 1,70/1 entre ladite unité formant arbre d'entrée (1, 3, 5) et ladite unité de transmission de couple d'entrée (9), l'unité formant arbre d'entrée (1, 3, 5) présentant le nombre de tours par minute le plus élevé, respectivement.

80. Dispositif consommateur d'énergie selon l'une des revendications 1 à 79, ladite unité de freinage de changement de vitesses (22) étant commandée par une unité de commande (24) en réponse au nombre de tours par minute de l'unité de transmission de couple d'entrée (9), de telle sorte que le nombre de tours par minute de ladite unité formant arbre d'entrée (1, 3, 5) augmente par rapport au nombre de tours par minute de l'unité de transmission du couple d'entrée (9) lorsque le nombre de tours par minute de l'unité de transmission du couple d'entrée (9) est réduit à une valeur inférieure à un nombre de tours par minute prédéterminé.

81. Dispositif consommateur d'énergie selon la revendication 80, ladite augmentation du nombre de tours par minute de ladite unité formant arbre d'entrée (1, 3, 5) au-delà dudit nombre de tours par minute de ladite unité de transmission du couple d'entrée (9) en réponse à l'abaissement de ladite unité de transmission de couple d'entrée (9) en-dessous de ladite valeur du nombre de tours par minute prédéterminée agissant, en outre, en réponse à un signal (24b) représentant un besoin d'augmenter le nombre de tours par minute dudit dispositif consommateur d'énergie (6).

82. Dispositif consommateur d'énergie selon l'une des revendications 1 à 81, ladite unité formant arbre d'entrée (1, 3, 5) présentant une section s'étendant au-delà desdits moyens formant palier d'arbre (28, 28a) dudit moyen formant stator (81) en direction de ladite extrémité libre, ladite section n'ayant pas d'autre support radial à partir dudit moyen formant stator.

83. Dispositif consommateur d'énergie entraîné par engrenage planétaire selon l'une des revendications 1 à 82,
ladite unité de frein de changement de vitesses (22) ayant une forme annulaire et entourant ladite couronne dentée (25) avec un plan commun orthogonal par rapport audit axe (A) contenant ladite couronne dentée (25) et ladite unité de frein de changement de vitesses (22),
ladite unité de frein de changement de vitesses (22) comprenant une bobine annulaire (83) entourant ladite couronne dentée (25) et une armature (87) mobile dans le sens axial, par rapport à ladite bobine électro-magnétique (83).

84. Dispositif consommateur d'énergie entraîné par engrenage planétaire selon l'une des revendications 1 à 83,
ladite roue planétaire (43), ledit support d'engrenages satellites (61, 63) avec au moins un engrenage satellite (65), ladite couronne dentée (25), ledit moyen formant roue libre (13), ladite chambre de lubrifiant (42) et au moins une partie de ladite unité de frein de changement de vitesses (22) étant disposés de manière coaxiale autour d'un axe (A) sur une unité formant manchon de transmission de couple (9).

85. Dispositif consommateur d'énergie entraîné par engrenage planétaire selon l'une des revendications 46 à 84,
ledit moyen de transport du lubrifiant comprenant un disque de transport (171) fixé sur ledit engrenage satellite (165) en vue d'une rotation commune avec ce dernier, ledit disque de transport (171) présentant une partie extérieure correspondante, dans le sens radial, immergée dans ledit anneau de lubrifiant et projetant du lubrifiant vers l'intérieur, dans le sens radial, à partir dudit anneau de lubrifiant (135).

86. Dispositif consommateur d'énergie entraîné par engrenage planétaire selon l'une des revendications 46 à 85,
ladite unité de transmission de couple d'entrée (9) comprenant une unité formant manchon de transmission de couple (9), ladite unité formant manchon de transmission de couple (9) étant pourvue de moyens formant paliers (11, 15) dans un passage central de celle-ci, pour monter de façon rotative, ladite unité formant manchon de transmission de couple (9) sur ladite unité formant arbre d'entrée (1, 3, 5) entourée par ladite unité formant manchon (9), ladite unité formant manchon (9) comprenant au moins une ouverture radiale ménagée dans celle-ci, pour admettre le lubrifiant provenant dudit anneau de lubrifiant (35) en direction desdits moyens formant paliers (11, 15).

87. Dispositif consommateur d'énergie entraîné par engrenage planétaire selon l'une des revendications 46 à 86,
ledit moyen de transport de lubrifiant comprenant un disque de transport (171) fixé sur ledit engrenage satellite (165) en vue de sa rotation commune avec ce dernier, ledit disque de transport (171) présentant une partie extérieure dans le sens radial immergée dans ledit anneau de lubrifiant et projetant du lubrifiant vers l'intérieur, dans le sens radial, à partir dudit anneau de lubrifiant (135), ladite unité de transmission de couple d'entrée (9) comprenant une unité formant manchon de transmission de couple (109), ladite unité formant manchon de transmission de couple (109) étant pourvue de moyens formant paliers (111, 115) dans un passage central de cette dernière pour monter de façon rotative, ladite unité formant manchon de transmission de couple (109) sur ladite unité formant arbre d'entrée (101 ,103, 105) entourée par ladite unité formant manchon (109), ladite unité formant manchon (109) comprenant au moins une ouverture radiale (116) ménagée dans cette dernière pour admettre le lubrifiant provenant dudit anneau de lubrifiant en direction dudit moyen formant palier (111, 115), ledit disque de transport (171) étant pourvu, de manière adjacente à sa périphérie, d'au moins un moyen collecteur de lubrifiant (171a), par exemple une fente collectrice de lubrifiant radiale (171a), dans un emplacement prédéterminé le long de ladite périphérie, ladite ouverture radiale (116) étant également située dans un emplacement prédéterminé le long de la circonférence de ladite unité formant manchon (109), lesdits emplacements prédéterminés dudit moyen collecteur de lubrifiant (171a) et de ladite ouverture radiale (116) étant sélectionnés en tenant compte d'un mouvement planétaire dudit disque de transport (171) par rapport à ladite unité formant manchon de transmission de couple (109) de telle sorte que le lubrifiant provenant dudit moyen collecteur du lubrifiant (171a) et projeté dans un sens radial vers l'intérieur par ledit moyen collecteur de lubrifiant (171a) vient frapper ladite ouverture (116), lorsque ledit moyen collecteur de lubrifiant (171a) est proche de ladite unité formant manchon de transmission du couple (109).

88. Dispositif consommateur d'énergie entraîné par engrenage planétaire selon l'une des revendications 1 à 87,
ladite unité de transmission de couple d'entrée (9) comprenant un manchon de palier de transmission de couple (9) entourant ladite unité formant arbre d'entrée (1, 3, 5) et monté de façon rotative sur ce dernier par des moyens formant paliers de roulement (11, 15) et un élément formant moyeu de transmission de couple (41) entourant ledit manchon de palier de transmission de couple (9) et monté de façon rotative sur ce dernier par d'autres moyens formant paliers de roulement (47), au moins un desdits moyens formant paliers de roulement (11, 15) et ledit autre moyen formant palier de roulement (47) comprenant des moyens formant piste de roulement (11s, 11t, 15s, 15t, 47s, 47t) formés sur l'élément correspondant parmi ladite unité formant arbre d'entrée (1, 3, 5), ledit manchon de palier de transmission de couple (9) et ledit élément formant manchon de transmission de couple (41).

89. Dispositif consommateur d'énergie entraîné par engrenage planétaire selon la revendication 88,
ladite unité formant arbre d'entrée (1, 3, 5) comprenant un autre manchon de palier (5) adapté pour être fixé de manière non rotative sur un élément d'arbre (1) de ladite unité formant arbre d'entrée (1, 3, 5), ledit manchon de palier de transmission de couple (9) étant monté de façon rotative par lesdits moyens formant paliers à roulement (11, 15) sur ledit manchon de palier (5).

90. Dispositif consommateur d'énergie entraîné par engrenage planétaire selon la revendication 88 ou 89,
au moins un desdits moyens formant paliers (11) et desdits autres moyens formant paliers (47) comprenant des éléments de roulement en forme de billes coopérant avec les moyens formant pistes de paliers concaves (11s, 11t, 47s, 47t) dans un élément correspondant parmi ladite unité formant arbre d'entrée (1, 3, 5), ledit manchon de palier de transmission de couple (9) et ledit élément de moyeu de transmission de couple (41) de manière à fixer en les rendant inséparables au moins deux éléments parmi ladite unité formant arbre d'entrée (1, 3, 5), ledit manchon de palier de transmission de couple (9) et ledit élément de moyeu de transmission de couple (41) l'un par rapport à l'autre, dans le sens axial.

91. Dispositif consommateur d'énergie entraîné par engrenage planétaire selon l'une des revendications 1 à 90,
caractérisé en ce que ledit dispositif consommateur d'énergie (6) est un générateur de courant électrique (6).

92. Dispositif consommateur d'énergie entraîné par engrenage planétaire selon la revendication 91,
ladite unité formant arbre d'entrée (101, 103, 105) étant pourvue d'un ventilateur de refroidissement (195) fixé sur ladite unité formant arbre d'entrée (101, 103, 105) en vue d'une rotation commune avec ce dernier, ledit ventilateur de refroidissement (195) étant placé sur ladite unité formant arbre d'entrée (101, 103, 105) sur un côté desdits moyens formant palier d'arbre (128, 128a) éloigné de ladite extrémité libre (101a).

93. Dispositif consommateur d'énergie entraîné par engrenage planétaire selon la revendication 92,
ledit moyen formant stator (181) comprenant un carter de stator (181), ledit carter de stator (181) présentant une paroi d'extrémité (181e) adjacente, dans le sens axial, auxdits moyens formant palier d'arbre d'entrée (128, 128a), ladite paroi d'extrémité (181e) étant pourvue d'un moyen formant passage d'air de refroidissement (181d) adjacent, dans le sens radial, auxdits moyens formant palier d'arbre (128, 128a), ladite deuxième partie de frein (183) étant fixée audit carter de stator (181), de manière adjacente à ladite paroi d'extrémité (181e), par des deuxièmes moyens de fixation de partie de frein (181a, 181b), lesdits deuxièmes moyens de fixation de partie de frein (181a, 181b) constituant un autre moyen de passage d'air de refroidissement (190), ledit ventilateur de refroidissement (195) étant prévu à l'intérieur dudit carter de stator (181) et étant adapté pour fournir un courant d'air de refroidissement à travers ledit moyen formant passage d'air de refroidissement (181d) de ladite paroi d'extrémité (181e) et dudit autre moyen formant passage d'air de refroidissement (190).

94. Procédé d'assemblage d'un dispositif consommateur d'énergie entraîné par engrenage planétaire, ledit dispositif consommateur d'énergie (6) comprenant un moyen formant stator (81) et une unité formant arbre d'entrée (1, 3, 5) avec un axe (A) pour entraîner une unité menée à l'intérieur dudit moyen formant stator (81), ladite unité formant arbre d'entrée (1, 3, 5) étant montée de façon rotative par rapport audit moyen formant stator (81) autour dudit axe (A) dans des moyens formant palier d'arbre (28, 28a) et s'étendant, dans le sens axial, au-delà desdits moyens formant palier d'arbre (28, 28a) en direction d'une extrémité libre de ladite unité formant arbre d'entrée (1, 3, 5) et comprenant, en outre, des moyens formant engrenage planétaire (25, 43, 61, 63, 65) comprenant une roue planétaire (43), une couronne dentée (25), un support d'engrenages satellites (61, 63) et au moins un engrenage satellite (65) sur ledit support d'engrenages satellites (61, 63) et comprenant, en outre, un moyen formant roue libre (13), une unité de frein de changement de vitesses (22) pouvant être commandée par des moyens de commande externes (24) et une chambre de lubrifiant (42) prévue pour recevoir un lubrifiant liquide (35), une unité de transmission de couple d'entrée (9) dudit moyen formant engrenage planétaire (25, 43, 61, 65) étant reliée, de manière à assurer un entraînement, audit support d'engrenages satellites (61, 63), ladite couronne dentée (25) étant reliée en vue d'assurer une rotation commune avec ladite unité formant arbre d'entrée (1, 3, 5), ladite unité de frein de changement de vitesses (22) étant adaptée pour empêcher, de manière sélective, une rotation de ladite roue planétaire (43) par rapport audit moyen formant stator (81) ou libérer ladite roue planétaire (43) en vue de sa rotation autour dudit axe (A) par rapport audit moyen formant stator (81), ledit moyen formant roue libre (13) permettant la rotation de ladite unité formant arbre d'entrée (1, 3, 5) par rapport à ladite unité de transmission du couple d'entrée (9) dans un sens de rotation prédéterminé en réponse à ladite unité de frein de changement de vitesses (22) empêchant ladite roue planétaire (43) de tourner par rapport audit moyen formant stator (81), ledit moyen formant roue libre (13) transmettant un couple d'entrée à partir de ladite unité de transmission de couple d'entrée (9) à ladite unité formant arbre d'entrée (1, 3, 5) dans un sens de rotation prédéterminé, en réponse à ladite unité de frein de changement de vitesses (22) libérant ladite roue planétaire (43) en vue de sa rotation autour dudit axe (A) par rapport audit moyen formant stator (81), ladite roue planétaire (43) étant creuse avec un passage central ménagé dans cette dernière, avec une première partie d'extrémité axiale plus proche desdits moyens formant palier d'arbre (28, 28a) et avec une deuxième partie d'extrémité axiale plus proche de ladite extrémité libre, ladite unité de transmission de couple d'entrée (9) s'étendant dans ladite roue planétaire creuse (43) pour transmettre un couple d'entrée à partir des moyens de mise en prise avec les moyens d'entraînement (9a) placés de manière adjacente à un deuxième côté de partie d'extrémité de ladite roue planétaire (43) vers une partie de support d'engrenages satellites (61) placée de manière adjacente à un premier côté de partie d'extrémité de ladite roue planétaire (43), ladite deuxième partie d'extrémité axiale de ladite roue planétaire (43) étant reliée en vue d'une rotation commune autour dudit axe (A) avec un élément de freinage de la roue planétaire (41a), ledit élément de freinage de la roue planétaire (41a) supportant une première partie de frein (87) de ladite unité de frein de changement de vitesses (22), une deuxième partie de frein (83) de ladite unité de frein de changement de vitesses (22) étant bloquée, de manière fonctionnelle, contre toute rotation autour dudit axe (A) par rapport audit moyen formant stator (81), un élément de support de couronne dentée (21) reliant ladite couronne dentée (25) à ladite unité formant arbre d'entrée (1, 3, 5) en vue d'une rotation commune, étant placé d'un côté de ladite partie de support d'engrenages satellites (61), dans le sens axial à distance de ladite roue planétaire (43), ladite unité de transmission de couple d'entrée (9) entourant ladite unité formant arbre d'entrée (1, 3, 5) le long d'une étendue de chevauchement axiale, ladite unité de transmission de couple d'entrée (9) étant montée de façon rotative sur, et radialement supportée par, ladite unité formant arbre d'entrée (1, 3, 5) à l'intérieur de ladite étendue de chevauchement axiale,
ledit procédé étant caractérisé par le préassemblage d'au moins ladite roue planétaire (43), ledit support d'engrenages satellites (61, 63), ledit engrenage satellite (65), ladite couronne dentée (25), ledit moyen formant roue libre (13) et ladite chambre de lubrifiant (42) sur ladite unité de transmission de couple d'entrée (9) puis en montant de façon rotative, ladite unité de transmission du couple d'entrée (9) sur un élément d'arbre d'entrée (1) de ladite unité formant arbre d'entrée (1, 3, 5).

95. Procédé d'assemblage selon la revendication 94, ledit pré-assemblage consistant, en outre, à monter de façon rotative, ladite unité de transmission de couple d'entrée (9) sur une unité formant manchon d'arbre d'entrée (5) de ladite unité formant arbre d'entrée (1, 3, 5), ladite unité formant manchon d'arbre d'entrée (5) étant, après ledit pré-assemblage, fixée de manière non rotative sur ledit élément formant arbre d'entrée (1).

96. Ensemble d'engrenages préassemblé d'un dispositif consommateur d'énergie entraîné par engrenage planétaire selon l'une quelconque des revendications 1 à 93,
comprenant comme composants de ce dernier, au moins ladite unité de transmission de couple d'entrée (9), lesdits moyens formant engrenage planétaire (43, 25, 61, 63, 65), ledit moyen formant roue libre (13), ledit élément de freinage de roue planétaire (41a), ledit élément de support de couronne dentée (21), ladite chambre de lubrifiant (42) et ladite unité de transmission de couple d'entrée (9) dans des positions fonctionnelles relatives à l'intérieur du dispositif auxiliaire consommateur d'énergie entraîné par engrenage planétaire (6), ledit élément de support de couronne dentée (21) étant adapté pour être fixé, en vue d'assurer un entraînement, à un élément d'arbre d'entrée (1) monté de façon rotative par rapport audit moyen formant stator (81) par l'intermédiaire desdits moyens formant palier d'arbre (28, 28a).

97. Ensemble d'engrenages préassemblé d'un dispositif consommateur d'énergie entraîné par engrenage planétaire selon la revendication 96, comprenant, en outre, une unité de prolongement (5) adaptée pour être fixée, de manière non rotative, audit élément d'arbre d'entrée (1) dans un alignement de prolongement par rapport à ce dernier, ladite unité de prolongement (5) étant montée de façon rotative par rapport à ladite unité de transmission de couple d'entrée (9).

98. Ensemble d'engrenages préassemblé d'un dispositif consommateur d'énergie entraîné par engrenage planétaire selon la revendication 96, comprenant, en outre, un moyen formant -manchon d'arbre d'entrée (105) adapté pour être fixé, de manière non rotative, audit élément formant arbre d'entrée (101) de manière à l'entourer, ledit moyen formant manchon d'arbre d'entrée (105) étant monté de façon rotative, par rapport à ladite unité de transmission du couple d'entrée (109).

99. Ensemble d'engrenages préassemblé d'un dispositif consommateur d'énergie entraîné par engrenage planétaire selon l'une des revendications 96 à 98,
lesdits composants étant fixés dans un état préassemblé par des moyens de fixation libérables.

100. Ensemble d'engrenage préassemblé selon l'une des revendications 96 à 99,
ladite chambre de lubrifiant (42) étant remplie d'un volume de lubrifiant liquide.

101. Groupe de composants préassemblés d'un dispositif consommateur d'énergie entraîné par engrenage planétaire, selon la revendication 1, et comprenant éventuellement les caractéristiques de l'une des revendications 2 à 93,comprenant un moyen formant stator (81) et une unité formant arbre d'entrée avec un axe (A) pour entraîner une unité menée (2) à l'intérieur dudit moyen formant stator, ladite unité formant arbre d'entrée (1, 3, 5) étant montée de façon rotative, par rapport audit moyen formant stator (81), autour dudit axe (A) dans les moyens formant palier d'arbre (28, 28a) et s'étendant en direction d'une extrémité libre de ladite unité formant arbre d'entrée (1, 3, 5) et comprenant, en outre, des moyens formant engrenage planétaire (25, 43, 61, 63, 65) comprenant une roue planétaire (43), une couronne dentée (25), un support d'engrenages satellites (61, 63) et au moins un engrenage satellite (65) sur ledit support d'engrenages satellites (61, 63) et comprenant, en outre, un moyen formant roue libre (13), une unité de frein de changement de vitesses (22) pouvant être commandée par des moyens de commande externes (24) et une chambre de lubrifiant (42) prévue pour recevoir un lubrifiant liquide (35), une unité de transmission de couple d'entrée (9) desdits moyens formant engrenage planétaire étant reliée, en vue d'assurer un entraînement, audit support d'engrenages satellites (61, 63), ladite couronne dentée (25) étant reliée, en vue d'une rotation commune, à ladite unité formant arbre d'entrée (1, 3, 5), ladite unité de frein de changement de vitesses (22) étant adaptée pour empêcher, de manière sélective, la rotation de ladite roue planétaire (43) par rapport audit moyen formant stator (81) ou libérer ladite roue planétaire (43) en vue de sa rotation autour dudit axe (A) par rapport audit moyen formant stator (81), ledit moyen formant roue libre (13) permettant la rotation de ladite unité formant arbre d'entrée (1, 3, 5) par rapport à ladite unité de transmission de couple d'entrée (9) dans un sens de rotation prédéterminé en réponse à ladite unité de frein de changement de vitesses (22) empêchant ladite roue planétaire (43) de tourner par rapport audit moyen formant stator (81), ledit moyen formant roue libre (13) transmettant un couple d'entrée à partir de ladite unité de transmission de couple d'entrée (9) à ladite unité formant arbre d'entrée (1, 3, 5) dans ledit sens de rotation prédéterminé en réponse à ladite unité de frein de changement de vitesses (22) libérant ladite roue solaire (43) en vue de sa rotation autour dudit axe (A) par rapport audit moyen formant stator (81), ladite roue planétaire (43) étant creuse avec un passage central ménagé dans cette dernière, avec une première partie d'extrémité axiale plus proche desdits moyens formant palier d'arbre (28, 28a) et avec une deuxième partie d'extrémité axiale plus proche de ladite extrémité libre, ladite unité de transmission de couple d'entrée (9) s'étendant dans ladite roue planétaire creuse (43) pour transmettre un couple d'entrée à partir d'un moyen de mise en prise des moyens d'entraînement (9a) placés de manière adjacente à un deuxième côté de la partie d'extrémité de ladite roue planétaire (43), à ladite partie de support d'engrenages satellites (61) placée de manière adjacente à un premier côté de la partie d'extrémité de ladite roue planétaire (43), ladite deuxième partie d'extrémité axiale de ladite roue planétaire (43) étant reliée en vue d'une rotation commune autour dudit axe (A) avec un élément de freinage de la roue planétaire (41a), ledit élément de freinage de la roue planétaire (41a) supportant une première partie de frein (87) de ladite unité de frein de changement de vitesses (22), une deuxième partie de frein (83) de ladite unité de frein de changement de vitesses (22) étant bloquée, de manière fonctionnelle, contre toute rotation autour dudit axe (A) par rapport audit moyen formant stator (81), un élément de support de couronne dentée (21) reliant ladite couronne dentée (25) à ladite unité formant arbre d'entrée (1, 3, 5) en vue de sa rotation commune, étant placé sur un côté de ladite partie de support d'engrenages satellites (61) dans le sens axial, à distance de ladite roue planétaire (43), ladite unité de transmission de couple d'entrée (9) entourant ladite unité formant arbre d'entrée (1, 3, 5) le long d'une section de chevauchement axiale, ladite unité de transmission de couple d'entrée (9) étant montée de façon rotative sur, et supportée dans le sens radial par ladite unité formant arbre d'entrée (1, 3, 5) à l'intérieur de ladite section de chevauchement axiale, ledit groupe de composants comprenant au moins ladite unité de transmission de couple d'entrée (9), lesdits moyens formant engrenage planétaire (43, 25, 61, 63, 65), ledit moyen formant roue libre (13), ledit élément de freinage de la roue planétaire (41a), ledit élément de support de la couronne dentée (21), ladite chambre de lubrifiant (42) et ladite unité de transmission de couple d'entrée (9).

102. Groupe de composants selon la revendication 101, lesdits composants étant préassemblés de manière à former une unité d'engrenage préassemblée (4), lesdits composants préassemblés étant dans des positions fonctionnelles relatives correspondant à leurs positions fonctionnelles relatives à l'intérieur du dispositif consommateur d'énergie entraîné par engrenage planétaire (6) assemblé, ledit élément de support de couronne dentée (21) étant adapté pour être fixé, en vue d'assurer un entraînement, à un élément formant arbre d'entrée (1) monté de façon rotative par rapport audit moyen formant stator (81) par l'intermédiaire dudit moyen formant palier d'arbre (28, 28a).

103. Groupe de composants selon la revendication 102, comprenant, en outre, une unité de prolongement (5) adaptée pour être fixée, de manière non rotative, audit élément formant arbre d'entrée (1) dans un alignement de prolongement avec ce dernier, ladite unité de prolongement (5) étant montée de façon rotative, par rapport à ladite unité de transmission de couple d'entrée (9).

104. Groupe de composants selon la revendication 102, comprenant, en outre, des moyens formant manchon d'arbre d'entrée (105) adaptés pour être fixés, de manière non rotative, audit élément formant arbre d'entrée (101) de manière à entourer celui-ci, ledit moyen formant manchon d'arbre d'entrée (105) étant fixé de manière non rotative par rapport à ladite unité de transmission de couple d'entrée (109).

105. Groupe de composants selon l'une des revendications 102 à 104,
ledit groupe de composants étant fixé dans un état préassemblé par des moyens de fixation libérables.

106. Groupe de composants selon l'une des revendications 102 à 105,
ladite chambre de lubrifiant (42) étant remplie d'un volume de lubrifiant liquide.
